# EUROPEAN PATENT APPLICATION

(11) **EP 4 723 709 A1**
(43) Date of publication of application: **08.04.2026**
(21) Application number: 23937954.8
(22) Date of filing: 24.05.2023
(51) Int. Cl.: H04W 12/069, H04W 12/08

(54) **COMMUNICATION METHODS AND DEVICES**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); GAN, Lu, Dongguan, Guangdong 523860 (CN)
(74) Representative: Penza, Giancarlo
(86) International application number: PCT/CN2023/096065
(87) International publication number: WO 2024/239280

(57) **Abstract**

The present application relates to communication methods, devices, a computer-readable storage medium, a computer program product and a computer program. A method comprises: a first device sends to a second device first information from a core network side device, the first information comprising a first message authentication code, the first message authentication code being related to a first shared key, the first shared key being shared between the second device and the core network side device and/or a target service device, and the first message authentication code being used for the second device to authenticate the core network side device; and the first device receives a first key from the core network side device, the first key being used for communication between the first device and the second device, and the first device being used for transmitting data between the second device and the target service device.

## Description

### TECHNICAL FIELD

The disclosure relate to the field of communications, and more particularly to a communication method and device, a computer-readable storage medium, a computer program product, and a computer program.

### BACKGROUND

In the related arts, an authentication process and a key agreement process between User Equipment (UE) and a core network employ computational functions with high complexity and relatively complex key architectures. However, a zero-power device such as an Ambient power-enabled Internet of Things (A-IoT) device also has a requirement of accessing to a network such as the core network. Thus, how to enable the A-IoT device to achieve authentication with the network side and reduce the computational complexity of the A-IoT device during communication between the A-IoT device and its corresponding service device has become a problem that needs to be solved.

### SUMMARY

Embodiments of the disclosure provide a communication method and device, a computer-readable storage medium, a computer program product, and a computer program.

An embodiment of the disclosure provides a communication method, which includes the following operations.

A first device sends first information from a core network side device to a second device, here, the first information includes a first message authentication code, the first message authentication code is related to a first shared key, the first shared key is shared between the second device and the core network side device and/or a target service device, and the first message authentication code is used by the second device to authenticate the core network side device.

The first device receives a first key from the core network side device, here, the first key is used for communication between the first device and the second device, and the first device is configured to transmit data between the second device and the target service device.

An embodiment of the disclosure provides a communication method, which includes the following operations.

A second device receives first information from a core network side device, here, the first information includes a first message authentication code, the first message authentication code is related to a first shared key, the first shared key is shared between the second device and the core network side device and/or a target service device.

The second device calculates a second message authentication code based on the first shared key.

In case that the second message authentication code is the same as the first message authentication code, the second device calculates a first key based on the first shared key and an identifier (ID) of the target service device, here, the first key is used for communication between the second device and the target service device and/or a first device.

An embodiment of the disclosure provides a communication method, which includes the following operations.

A core network side device sends first information to a second device, here, the first information includes a first message authentication code, the first message authentication code is related to a first shared key, the first shared key is shared between the second device and the core network side device and/or a target service device, and the first message authentication code is used by the second device to authenticate the core network device.

The core network side device sends a first key to the target service device and/or a first device, here, the first key is used for communication between the second device and the target service device or the first device, and the first device is configured to transmit data between the second device and the target service device.

An embodiment of the disclosure provides a communication method, which includes the following operation.

A target service device receives a first key sent by a core network side device, here, the first key is used for communication between the target service device and a second device.

An embodiment of the disclosure provides a first device, which includes a first communication unit.

The first communication unit is configured to: send first information from a core network side device to a second device, here, the first information includes a first message authentication code, the first message authentication code is related to a first shared key, the first shared key is shared between the second device and the core network side device and/or a target service device, and the first message authentication code is used by the second device to authenticate the core network side device; and receive a first key from the core network side device, here, the first key is used for communication between the first device and the second device, and the first device is configured to transmit data between the second device and the target service device.

An embodiment of the disclosure provides a second device, which includes a second communication unit and a second processing unit.

The second communication unit is configured to receive first information from a core network side device, here, the first information includes a first message authentication code, the first message authentication code is related to a first shared key, and the first shared key is shared between the second device and the core network side device and/or a target service device.

The second processing unit is configured to: calculate a second message authentication code based on the first shared key; and in case that the second message authentication code is the same as the first message authentication code, calculate a first key based on the first shared key and an ID of the target service device, here, the first key is used for communication between the second device and the target service device and/or a first device.

An embodiment of the disclosure provides a core network side device, which includes a third communication unit.

The third communication unit is configured to: send first information to a second device, here, the first information includes a first message authentication code, the first message authentication code is related to a first shared key, the first shared key is shared between the second device and the core network side device and/or a target service device, and the first message authentication code is used by the second device to authenticate the core network device; and send a first key to the target service device and/or a first device, here, the first key is used for communication between the second device and the target service device or the first device, and the first device is configured to transmit data between the second device and the target service device.

An embodiment of the disclosure provides a target service device, which includes a fourth communication unit.

The fourth communication unit is configured to receive a first key sent by a core network side device, here, the first key is used for communication between the target service device and a second device.

An embodiment of the disclosure provides a first device, which includes a processor and a memory that communicates with the processor. Here, the memory is configured to store instructions that, when executed by the processor, cause the first device to perform: sending first information from a core network side device to a second device, here, the first information includes a first message authentication code, the first message authentication code is related to a first shared key, the first shared key is shared between the second device and the core network side device and/or a target service device, and the first message authentication code is used by the second device to authenticate the core network side device; and receiving a first key from the core network side device, here, the first key is used for communication between the first device and the second device, and the first device is configured to transmit data between the second device and the target service device.

An embodiment of the disclosure provides a second device, which includes a processor and a memory that communicates with the processor. Here, the memory is configured to store instructions that, when executed by the processor, cause the second device to perform: receiving first information from a core network side device, here, the first information includes a first message authentication code, the first message authentication code is related to a first shared key, the first shared key is shared between the second device and the core network side device and/or a target service device; calculating a second message authentication code based on the first shared key; and in case that the second message authentication code is the same as the first message authentication code, calculating a first key based on the first shared key and an ID of the target service device, here, the first key is used for communication between the second device and the target service device and/or a first device.

An embodiment of the disclosure provides a core network side device, which includes a processor and a memory that communicates with the processor. Here, the memory is configured to store instructions that, when executed by the processor, cause the core network side device to perform: sending first information to a second device, here, the first information includes a first message authentication code, the first message authentication code is related to a first shared key, the first shared key is shared between the second device and the core network side device and/or a target service device, and the first message authentication code is used by the second device to authenticate the core network device; and sending a first key to the target service device and/or a first device, here, the first key is used for communication between the second device and the target service device or the first device, and the first device is configured to transmit data between the second device and the target service device.

An embodiment of the disclosure provides a target service device, which includes a processor and a memory that communicates with the processor. Here, the memory is configured to store instructions that, when executed by the processor, cause the target service device to perform: receiving a first key sent by a core network side device, here, the first key is used for communication between the target service device and a second device.

An embodiment of the disclosure provides a chip, configured to implement the above methods.

Specifically, the chip includes a processor, configured to call and run a computer program from a memory, to enable a device mounted with the chip to perform the above methods.

An embodiment of the disclosure provides a computer-readable storage medium, configured to store a computer program that, when executed by a device, causes the device to perform the above methods.

An embodiment of the disclosure provides a computer program product, including computer program instructions for causing a computer to perform the above methods.

An embodiment of the disclosure provides a computer program that, when run on a computer, causes the computer to perform the above methods.

According to solutions provided in the embodiments, a message authentication code from the core network side may be sent to the second device through the first device, such that the second device authenticates the core network side device. Moreover, the first message authentication code is generated based on the shared key of the second device, and thus the first device can obtain the first key, here, the first key is used for communication between the first device and the second device when the first device is used as a relay or proxy device. In this way, the second device can obtain authentication-related information from the network side through the first device and obtain the key used for communication between the first device and the second device, to achieve data transmission between the second device and the target service device through the first device. Furthermore, in the above solutions, since the first message authentication code is generated based on the shared key of the second device, the second device only needs to use the shared key to achieve authentication, which reduces process complexity for the second device, and is especially applicable to devices with lower capabilities.

### BRIEF DESCRIPTION OF THE DRAWINGS

FIG. 1 is a diagram of an application scenario according to an embodiment of the disclosure.
FIG. 2 to FIG. 5 are multiple flowcharts of communication methods according to embodiments of the disclosure.
FIG. 6 to FIG. 12 are multiple exemplary flowcharts of communication methods according to embodiments of the disclosure.
FIG. 13 is a diagram of an application scenario according to an embodiment of the disclosure.
FIG. 14 to FIG. 16 are multiple flowcharts of key security communication according to embodiments of the disclosure.
FIG. 17 is a diagram of derivation of Non-Access Stratum (NAS) and Access Stratum (AS) security contexts according to an embodiment of the disclosure.
FIG. 18 is a block diagram of a first device according to an embodiment of the disclosure.
FIG. 19 is a block diagram of a second device according to an embodiment of the disclosure.
FIG. 20 is a block diagram of a core network side device according to an embodiment of the disclosure.
FIG. 21 is a block diagram of a target service device according to an embodiment of the disclosure.
FIG. 22 is a block diagram of a communication device according to an embodiment of the disclosure.
FIG. 23 is a block diagram of a chip according to an embodiment of the disclosure.
FIG. 24 is a block diagram of a communication system according to an embodiment of the disclosure.

### DETAILED DESCRIPTION

Technical solutions of the embodiments of the disclosure may be applied to various communication systems such as Global System for Mobile communication (GSM), Code Division Multiple Access (CDMA), Wideband Code Division Multiple Access (WCDMA), General Packet Radio Service (GPRS), Long Term Evolution (LTE), LTE-Advanced (LTE-A), New Radio (NR), evolution of NR, Wireless Local Area Network (WLAN), Wireless Fidelity (WiFi), or other communication systems.

In the embodiments of the disclosure, various embodiments are described in combination with network devices and terminals. The terminal may be mobile or fixed, and the terminal may also be referred to as a mobile station, a user unit, or the like. The terminal may be a station in WLAN, or may be a smart terminal, a wireless modem, a laptop computer, a tablet computer, or other terminals. In the embodiments of the disclosure, the terminal may be a Virtual Reality (VR) terminal/an Augmented Reality (AR) terminal, an industrial control terminal, a self-driving terminal, a telemedicine terminal, a smart grid terminal, a transportation safety terminal, a smart city terminal, or a wireless terminal in a smart home, or the like. As an example rather than limitation, in the embodiments of the disclosure, the terminal may also be a wearable device.

In the embodiments of the disclosure, the network device may be a device communicating with the terminal, and the network device may be an access point in WLAN, or a base station in GSM, CDMA or WCDMA, or an evolved base station in LTE, or a relay station, or a vehicle-mounted device, or a wearable device or a network device (gNB) in an NR network, or a network device in a future evolved Public Land Mobile Network (PLMN) network, or a network device in a non-terrestrial network, or the like. As an example rather than limitation, in the embodiments of the disclosure, the network device may have mobility characteristics, for example, the network device may be a mobile device.

It should be understood that terms "system" and "network" here are often used interchangeably in the disclosure. A term "and/or" in the disclosure is only an association relationship describing associated objects, and represents that three relationships may exist. For example, A and/or B may represent three cases, i.e., existence of A alone, existence of both A and B, and existence of B alone. Furthermore, a character "/" in the disclosure usually represents that anterior and posterior associated objects form an "or" relationship. It should be understood that "indicate" mentioned in the embodiments of the disclosure may be a direct indication or an indirect indication, or may represent existence of an association relationship. For example, A indicates B, which may represent that A directly indicates B, for example, B may be obtained through A; or may represent that A indirectly indicates B, for example, A indicates C, B may be obtained through C; or may represent that A and B have an association relationship therebetween. In descriptions of the embodiments of the disclosure, a term "correspond" may represent that there is a direct or indirect correspondence between two objects, or may represent that there is an association relationship between two objects, or may represent an indicating and being indicated relationship, a configuring and being configured relationship, or the like.

In order to facilitate understanding the technical solutions of the embodiments of the disclosure, relevant technologies of the embodiments of the disclosure will be described below. The following relevant technologies as optional solutions may be arbitrarily combined with the technical solutions of the embodiments of the disclosure, and all of them belong to the scope of protection of the embodiments of the disclosure.

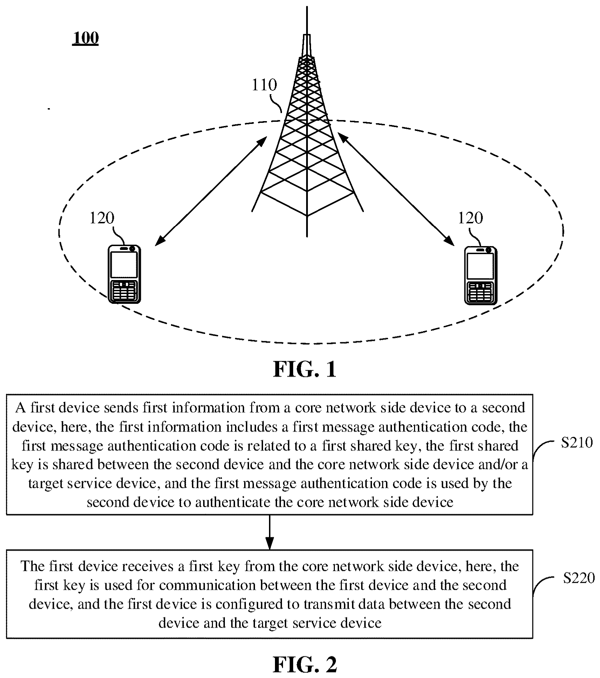

FIG. 1 exemplarily illustrates a communication system 100. The communication system includes a network device 110 and two terminals 120. In a possible implementation, the communication system 100 may include multiple network devices 110, and other number of terminals 120 may be included within coverage of each network device 110, which is not limited in the embodiments of the disclosure. In a possible implementation, the communication system 100 may further include a mobility management entity, an access and mobility management function, or other network entities, which is not limited in the embodiments of the disclosure. The network device may include an access network device and a core network device. That is, the communication system may further include multiple core networks communicating with the access network device. The access network device may be a base station in an LTE, LTE-A or NR system. Taking the communication system illustrated in FIG. 1 as an example, communication devices may include a network device and terminals with communication functions, and the communication devices may further include other devices in the communication system such as a network controller, a mobile management entity, or other network entities, which is not limited in the embodiments of the disclosure.

FIG. 2 is a schematic flowchart of a communication method according to an embodiment of the disclosure. The method includes at least a part of the following contents.

In operation S210, a first device sends first information from a core network side device to a second device, here, the first information includes a first message authentication code, the first message authentication code is related to a first shared key, the first shared key is shared between the second device and the core network side device and/or a target service device, and the first message authentication code is used by the second device to authenticate the core network side device.

In operation S220, the first device receives a first key from the core network side device, here the first key is used for communication between the first device and the second device, and the first device is configured to transmit data between the second device and the target service device.

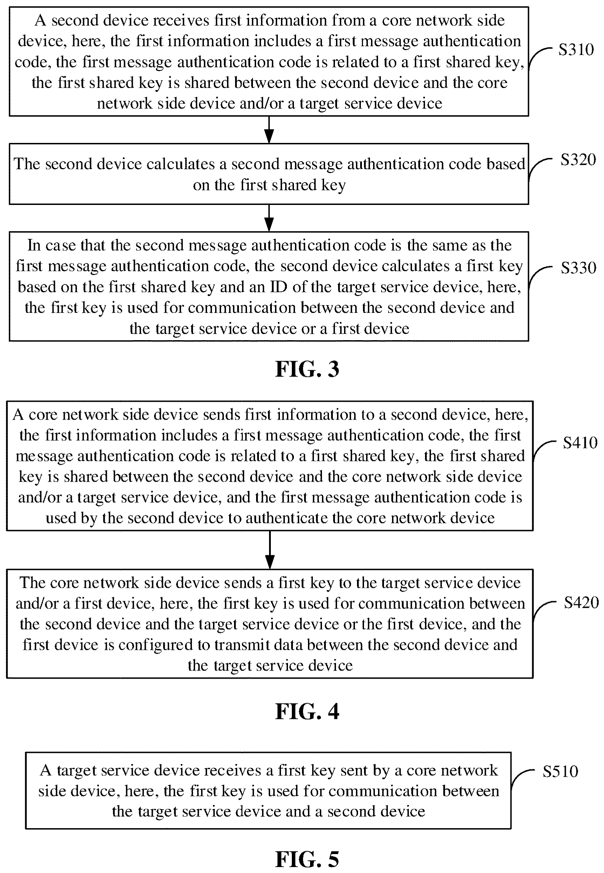

FIG. 3 is a schematic flowchart of a communication method according to another embodiment of the disclosure. The method includes at least a part of the following contents.

In operation S310, a second device receives first information from a core network side device, here, the first information includes a first message authentication code, the first message authentication code is related to a first shared key, the first shared key is shared between the second device and the core network side device and/or a target service device.

In operation S320, the second device calculates a second message authentication code based on the first shared key.

In operation S330, in case that the second message authentication code is the same as the first message authentication code, the second device calculates a first key based on the first shared key and an identifier (ID) of the target service device, here, the first key is used for communication between the second device and the target service device and/or a first device.

FIG. 4 is a schematic flowchart of a communication method according to another embodiment of the disclosure. The method includes at least a part of the following contents.

In operation S410, a core network side device sends first information to a second device, here, the first information includes a first message authentication code, the first message authentication code is related to a first shared key, the first shared key is shared between the second device and the core network side device and/or a target service device, and the first message authentication code is used by the second device to authenticate the core network device.

In operation S420, the core network side device sends a first key to the target service device and/or a first device, here, the first key is used for communication between the second device and the target service device or the first device, and the first device is configured to transmit data between the second device and the target service device.

FIG. 5 is a schematic flowchart of a communication method according to yet another embodiment of the disclosure. The method includes at least a part of the following contents.

In operation S510, a target service device receives a first key sent by a core network side device, here, the first key is used for communication between the target service device and a second device.

The first device includes at least one of a first terminal device or a first access network device. In some possible examples, the first device may also be an Integrated Access and Backhaul (IAB) node.

The second device is one of an Ambient power-enabled Internet of Things (A-IoT) device or a zero-power device.

In some possible examples, the second device may be a zero-power device such as an active zero-power device, or a passive zero-power device, or a semi-passive zero-power device, or the like. Optionally, the second device may be referred to as a Tag. In some other possible examples, the second device may be a terminal with a low operational capability. All possible names or possible devices related to the second device are not exhaustively listed here.

Exemplarily, the above second device may be connected to a core network via an indirect mode, and in this mode, the second device is connected to the core network via a first terminal device and an access network device corresponding to the first terminal device, and in this case, the above first device is the terminal device. Exemplarily, the above second device may be connected to the core network via a direct mode, and in this mode, the second device is connected to the core network via a corresponding first access network device, and in this case, the above first device is the first access network device. Furthermore, in case that the above first device is the first terminal device, the first device may be a proxy User Equipment (UE), or a relay UE, or the like.

The core network side device includes at least one of a Bootstrapping Server Function (BSF), an A-IoT network element, a Home Subscriber System (HSS), a Home Location Register (HLR), a Key Management Server (KMS), or an Authentication Server Function (AUSF).

The A-IoT network element may be represented as an Ambient power-enabled Network Function (A-NF). The above A-IOT network element may refer to a network element with an A-IOT function. The network element with the A-IoT function may be any one of a core network element with the A-IOT function, or a core network element specific to an A-IoT service, or a core network element with at least an A-IoT authentication function, or a network element with at least an A-IoT authentication function, or the like. It should be understood that the A-IOT network element may be a network element (such as a core network element) provided separately and dedicated to serving the A-IOT function, or it may be an existing core network element added with the A-IOT function (or added with at least the A-IoT authentication function, or added with A-IoT related functions). All possible cases are not exhaustively listed in this embodiment.

The KMS may be KMS dedicated to the A-IoT service, or KMS that can serve the A-IoT.

In addition to the devices exemplified above, the core network side device may further include at least one of a Unified Data Management (UDM), an Authentication credential Repository and Processing Function (ARPF), an Authentication Management Function (AMF), a User Plane Function (UPF), or a Security Anchor Function (SEAF), or the like. It should be understood that this is only an exemplary explanation, and in actual processing, the core network side device may further include other devices of the core network, however, they are not exhaustively listed here. It should also be pointed out that any device at the core network side may also be referred to as a core network element. In the following embodiments, the core network device has the same meaning as the core network element, which will not be described repeatedly.

The target service device may refer to a target Application Function (AF), or a target server. The target service device may be a device dedicated to serving the A-IoT service, or a device that can serve A-IoT related services. All possible functions of the target service device are not exhaustively listed here.

In some possible implementations, the above first device is used as a proxy device to participate in an authentication process of the second device, and after the second device completes the authentication, the above first device is used as the proxy device between the second device and the target service device to transmit data between the second device and the target service device.

Processing performed by the second device may include that: the second device sends a first request message to the first device, here, the first request message is configured to request authentication, and the first request message carries a first ID of the second device.

Processing performed by the first device may include that: the first device receives a first request message from the second device, here, the first request message is configured to request authentication, and the first request message carries a first ID of the second device.

Further, processing performed by the first device may further include that: the first device sends a second request message to the core network side device, here, the second request message is configured to request authentication, and the second request message carries the first ID of the second device and/or a second ID of the second device.

Processing performed by the core network side device may include that: the core network side device receives a second request message sent by the first device, here, the second request message is configured to request authentication, and the second request message carries a first ID of the second device and/or a second ID of the second device.

Here, in case that the first device is the first terminal device, the first request message may be any sidelink message; in case that the first device is the first access network device, the first request message may be any Access Stratum (AS) message.

The second ID of the second device may be an original ID of the second device, and the original ID may be an ID and/or a network ID. The ID may include, but is not limited to at least one of a Subscription Permanent Identifier (SUPI), a Subscription Concealed Identifier (SUCI), a Permanent Equipment Identifier (PEI), a 5G Globally Unique Temporary Identifier (5G-GUTI), an Internal-Group Identifier (IGI), or a Generic Public Subscription Identifier (GPSI), or the like. The above network ID may include at least one of an Internet Protocol (IP) address, or a Media Access Control (MAC) address, or the like.

The first ID of the second device may be an ID obtained by anonymously processing the second ID of the second device. For example, the first ID of the second device may be referred to as an anonymous ID of the second device, or a pseudonym of the second device, or the like. All possible names of the first ID are not exhaustively listed here. As long as the first ID of the second device is different from the second ID, they fall within the scope of protection of this embodiment.

Optionally, manners of anonymously processing the second ID by the second device may include that: the second device calculates the first ID based on the second ID and a second shared key in a third calculation manner, here, the second shared key may be a key shared between the second device and the first device. For example, the second shared key may be at least one of a Pre-Shared Key (PSK), a pre-allocated key, a private network key, an application layer key, or a physical layer (PHY) key, or the like.

The third calculation manner may be at least one of a first authentication function (for example, represented as f1), a second authentication function (for example, represented as f2), a third authentication function (for example, represented as f3), a hash algorithm, an Advanced Encryption Standard (AES), SNOW 3G, ZUC, a fourth key generation function (for example, represented as f4), a fifth key generation function (for example, represented as f5), a Key Derivation Function (KDF), an XOR calculation, or a direct concatenation calculation, or the like.

Taking the third calculation manner being the XOR calculation as an example, the above calculation of the first ID may be represented as: DIDi = IDi⊕N1, here, DIDi is the first ID of the second device, IDi is the second ID of the second device, and N1 is the second shared key. Taking the third calculation manner being any one of the above functions as an example, the above calculation of the first ID may be represented as: DIDi = fn1(IDi), here, n1 is the second shared key, and f represents any one of the above functions or algorithms in the third calculation manner, for example, f may be specifically any one of f1~f5, KDF or the like, which are not exhaustively listed here.

Optionally, manners of anonymously processing the second ID by the second device may include that: the second device calculates the first ID based on the second ID and a second random number in the third calculation manner, here, the second random number may be a random number shared between the second device and the core network side device.

The second random number may be sent in advance by the core network side device to the second device. For example, after the second device establishes a security context in advance, the second random number is sent by the core network device to the second device. Processes of establishing the security context between the second device and the core network side device are not limited in this embodiment.

Assuming that the second random number may also be represented as N1, manners of calculating the first ID are the same as the foregoing examples, which will not be described repeatedly.

Hereinafter, in order to distinguish the second shared key from the second random number, in some possible examples, the second shared key may be represented as K2, and the second random number may be represented as N1; in some possible examples, the second shared key may be represented as N1, and the second random number may be represented as Nonce1. All possible manners of representing the second shared key and the second random number are not exhaustively listed here.

The second request message may be a Hyper Text Transfer Protocol (HTTP) request. Alternatively, the second request message may be another type of message. For example, in case that the first device is the first terminal device, the second request message may be any Non-Access Stratum (NAS) message. For example, in case that the first device is the first access network device, the second request message may be any message transmitted between the access network device and the core network side device. All possible types of the second request message are not exhaustively listed in this embodiment.

Optionally, the foregoing first ID of the second device is calculated based on the second shared key.

After receiving the first request message, the first device may de-anonymize the first ID of the second device, which may specifically include that: the first device performs calculation on the first ID of the second device based on the second shared key in the third calculation manner, to obtain the second ID of the second device. For example, the first device performs the XOR calculation on the first ID of the second device and the second shared key, to obtain the second ID of the second device.

In this case, the second request message carries the second ID of the second device. Further, the second request message may also carry at least one of: an ID of the first device, or the second shared key. Here, the ID of the first device may be an ID and/or network ID of the first device. Descriptions related to the ID and the network ID are the same as those in the foregoing embodiments and will not be elaborated.

Optionally, the foregoing first ID of the second device is calculated based on the second shared key.

After receiving the first request message, the first device may not de-anonymize the first ID of the second device. In this case, the second request message carries the first ID of the second device, and the second request message may further carry at least one of: the ID of the first device or the second shared key.

Optionally, the foregoing first ID of the second device is calculated based on the second random number.

Since the second random number is shared between the second device and the core network side device, the first device may not de-anonymize the first ID of the second device after receiving the first request message, and in this case, the second request message carries the first ID of the second device; further, the second request message may also carry the ID of the first device.

After receiving the second request message, the core network side device may determine whether a preset condition is met based on a subscription credential of the first device and a subscription credential of the second device. If the preset condition is met, the core network side device determines to authorize the first device and the second device to use a target service. The preset condition may include at least one of: the first device can be used as a proxy device for the second device, or the second device has right to use the target service. The target service may refer to the A-IoT service, or other types of services requested by the second device, which are not exhaustively listed here.

If the foregoing second request message carries the second ID of the second device, the core network side device obtains the subscription credential of the second device based on the second ID of the second device, obtains the subscription credential of the first device based on the ID of the first device, and then determines whether the preset condition is met based on the subscription credential of the first device and the subscription credential of the second device.

If the foregoing second request message carries the first ID of the second device, before determining whether the preset condition is met based on the subscription credential of the first device and the subscription credential of the second device, the core network side device may also de-anonymize the first ID of the second device to obtain the second ID of the second device, and then obtains the subscription credential of the second device based on the second ID of the second device and obtains the subscription credential of the first device based on the ID of the first device.

Optionally, the foregoing first ID of the second device is calculated based on the second shared key. The second request message received by the core network side device may carry the second shared key, and the core network side device performs calculation on the first ID of the second device based on the second shared key in the third calculation manner, to obtain the second ID of the second device. For example, the core network side device performs the XOR calculation on the first ID of the second device and the second shared key, to obtain the second ID of the second device.

Optionally, the foregoing first ID of the second device is calculated based on the second random number. The core network side device performs calculation on the first ID of the second device based on the second random number in the third calculation manner, to obtain the second ID of the second device. For example, the core network side device performs the XOR calculation on the first ID of the second device and the second random number, to obtain the second ID of the second device, which may be for example represented by the following calculation formula: IDi = DIDi⊕N1, here, N1 represents the second random number. For another example, taking the third calculation manner being any one of the above functions as an example, performing the above calculation to obtain the second ID of the second device may be represented as: IDi = fn1(DIDi), here, n1 is the second shared key, and f represents any one of the above functions or algorithms in the third calculation manner, for example, f may be specifically any one of f1~f5, KDF or the like, which are not exhaustively listed here.

An order of the above authorization process performed by the core network side device for the first device and the second device and the authentication process performed by the core network side device is not limited in this embodiment. In some possible examples, the process of authorizing the first device and the second device by the core network side device to use the target service may occur in parallel with the process of performing the authentication process by the core network side device. In some other possible examples, the core network side device may perform the authentication process after determining to authorize the first device and the second device to use the target service. This is only an exemplary explanation, and is not used as a timing limitation for the authentication process performed by the core network side device.

The authentication process performed by the core network side device for the second device may further include at least one of: the core network side device calculates the first message authentication code based on the first shared key, a first random number and a first authentication parameter in a first calculation manner, here, the first authentication parameter includes at least one of: a second shared key, a second random number, or a third random number; or, the core network side device calculates a second response based on the first shared key, the first random number and a second authentication parameter in a second calculation manner, here, the second authentication parameter includes at least one of: the second shared key, the second random number, or the third random number, the first calculation manner is different from the second calculation manner, and/or the first authentication parameter is at least partially different from the second authentication parameter.

The first shared key may be at least one of: a PSK, a pre-allocated key, a private network key, an application layer key, or a PHY key, or the like. In a possible example of this implementation, the first shared key may be a PSK between the second device and the core network side device, such as a root key.

The above first random number may be generated by the core network side device, and the foregoing first information may further include the first random number. The second random number is shared between the second device and the core network side device and/or the target service device; and/or, the second shared key is shared between the second device and the first device; and/or, the third random number is configured, or the third random number is selected by the core network side device, or the third random number is shared between the second device and the core network side device and/or the target service device. In this implementation, the second random number may be shared between the second device and the core network side device; and the third random number may be selected by the core network side device, or may be shared between the second device and the core network side device.

Optionally, the first authentication parameter is at least partially different from the second authentication parameter, which may mean that the first authentication parameter is totally different from the second authentication parameter, or the first authentication parameter is partially the same as the second authentication parameter and the first authentication parameter is partially different from the second authentication parameter. For example, if the first authentication parameter includes the second shared key (or the second random number), the second authentication parameter includes the third random number, or vice versa; or, the first authentication parameter includes the second shared key, the second random number and the third random number, and the second authentication parameter number includes only one of the second shared key, the second random number and the third random number, or vice versa. Various cases where the first authentication parameter is at least partially different from the second authentication parameter are not exhaustively listed here.

Optionally, each of the first calculation manner and the second calculation manner may include at least one of: a first authentication function, a second authentication function, a third key generation function, a fourth key generation function, a fifth key generation function, a hash algorithm, AES, Ascon, SNOW 3G, ZUC, SPECK, SIMON, or KDF, or the like. The first calculation manner is different from the second calculation manner, which may mean that in an actual calculation, the first calculation manner may select at least one of the above algorithms or functions, and the second calculation manner may select an algorithm or function from the above algorithms or functions except the first calculation manner. For example, the first calculation manner is specifically the first authentication function, and the second calculation manner may be the hash algorithm. For example, the first calculation manner is specifically the second authentication function, and the second calculation manner may be the fifth key generation function. It should be understood that this is only an exemplary explanation on the first calculation manner being different from the second calculation manner, and other selection manners may be used in actual processing, which are not exhaustively listed here.

Optionally, the first authentication parameter is at least partially different from the second authentication parameter, and/or the first calculation manner is different from the second calculation manner, which may mean that: the first authentication parameter and the second authentication parameter which are the same as each other are used, but the first calculation manner and the second calculation manner which are different from each other are used; or, the first authentication parameter and the second authentication parameter which are at least partially different from each other are used, but the first calculation manner and the second calculation manner which are the same as each other are used; or, the first authentication parameter and the second authentication parameter which are at least partially different from each other are used, and the first calculation manner and the second calculation manner which are different from each other are used.

In this implementation, the core network side device may calculate the first message authentication code based on the first shared key, the first random number and the first authentication parameter in the first calculation manner; and the core network side device may calculate the second response based on the first shared key, the first random number and the second authentication parameter in the second calculation manner.

For example, the first authentication parameter is different from the second authentication parameter, the first authentication parameter includes the second shared key, and the second authentication parameter includes the third random number. As to calculating the first message authentication code based on the first shared key, the first random number and the first authentication parameter in the first calculation manner, it may be represented as: MAC = fk(RAND, N1), here, MAC is the first message authentication code, f is any one of the above algorithms or functions in the first calculation manner, k represents the first shared key, RAND represents the first random number, and N1 represents the second shared key. As to calculating the second response based on the first shared key, the first random number and the second authentication parameter in the second calculation manner, it may be represented as: XRES = fk(RAND, N2), here, XRES represents the second response (or, referred to as a second expected response), f may be any one of the above algorithms or functions in the second calculation manner, f may use the same algorithm or function as that for calculation of the first message authentication code, RAND is the first random number, and N2 is the third random number.

For example, the first authentication parameter is partially different from the second authentication parameter, the first authentication parameter includes the second shared key and the third random number, the second authentication parameter includes the second shared key, and the first calculation manner is different from the second calculation manner. As to calculating the first message authentication code based on the first shared key, the first random number and the first authentication parameter in the first calculation manner, it may be represented as: MAC = flk(RAND, N1, N2), here, MAC is the first message authentication code, f1 is any one of the above algorithms or functions in the first calculation manner, k represents the first shared key, RAND represents the first random number, N1 represents the second shared key, and N2 is the third random number. As to calculating the second response based on the first shared key, the first random number and the second authentication parameter in the second calculation manner, it may be represented as: XRES = f2k(RAND, N1), here, XRES represents the second response (or, referred to as a second expected response), f2 may be any one of the above algorithms or functions in the second calculation manner, f2 is different from f1, RAND is the first random number, and N1 is the second shared key.

For example, in processes of calculating the first message authentication code and/or the second response, the first authentication parameter and the second authentication parameter may not be used. For example, the first message authentication code is calculated based on the first shared key and the first random number in the first calculation manner, which may be represented as: MAC = flk(RAND). For example, the second response is calculated based on the first shared key and the first random number in the second calculation manner, which may also use only the first shared key and the first random number, and may be represented as: XRES = f2k(RAND), here, f1 and f2 are different algorithms or functions.

The above descriptions are only exemplary explanations, and all possible manners of generating the first message authentication code and the second response are not exhaustively listed here. As long as these manners finally ensure that the generated second response is totally different from the first message authentication code, they fall within the scope of protection of this embodiment.

After obtaining the first message authentication code and the second response, the core network side device may use the first message authentication code and the second response as an Authentication Vector (AV).

Optionally, the AV may further include relevant information of the third random number and/or an Anonymous Key (AK).

For example, if the third random number is selected or generated by the core network side device, the AV includes the relevant information of the third random number, and the relevant information of the third random number may be a result obtained from calculation of the third random number and the AK, for example, it is represented as N2⊕AK, here, N2 is the third random number, AK is the anonymous key, and ⊕ is an XOR calculation. It should be understood that calculation manners of the third random number and the AK may be further replaced by other algorithms or functions in addition to the XOR calculation, which are not exhaustively listed here. In this case, the above AV may be represented as: AV = RAND∥N2⊕AK∥MAC∥XRES, here, AV is the authentication vector, ∥ indicates a direct concatenation calculation, and meanings of remaining contents are the same as those in the foregoing examples and will not be elaborated.

For another example, if the third random number is shared between the core network side device and the second device, the AV may include the AK. In this case, the above AV may be represented as: AV = RAND∥AK∥MAC∥XRES, here, meanings of contents in the formula are the same as those in the foregoing examples and will not be elaborated.

Optionally, the AV may further include at least one of: the second ID of the second device, the ID of the first device, or an ID of the core network side device, or the like. All contents that may be included in the AV are not exhaustively listed in this embodiment.

A calculation manner of the above AK may be that: the AK is calculated based on the first shared key. "The AK is calculated based on the first shared key" may include one of: calculating the AK based on the first shared key and the first random number; calculating the AK based on the first shared key and the second shared key; or calculating the AK based on the first shared key and the second random number.

As to calculating the AK based on the first shared key and the first random number, it may be applicable to a case where the second shared key is shared between the first device and the second device (that is, a case where the second shared key is carried in the second request message), or may be applicable to a case where the second random number is shared between the second device and the core network side device. For example, the AK may be calculated based on the first random number and the first shared key by using any one of the above algorithms or functions in the first calculation manner or the second calculation manner, which may be exemplarily represented as: AK = fk(RAND), here, k is the first shared key, f is any one of the above algorithms or functions in the first calculation manner or the second calculation manner, RAND is the first random number, and AK is the anonymous key.

As to calculating the AK based on the first shared key and the second shared key, it is especially applicable to a case where the second shared key is shared between the first device and the second device (that is, a case where the second shared key is carried in the second request message). For example, the AK may be calculated based on the first shared key and the second shared key by using any one of the above algorithms or functions in the first calculation manner or the second calculation manner, which may be exemplarily represented as: AK = K⊕N1, here, k is the first shared key, f is any one of the above algorithms or functions in the first calculation manner or the second calculation manner, N1 is the second shared key, and AK is the anonymous key.

As to calculating the AK based on the first shared key and the second random number, it is especially applicable to a case where the second random number is shared between the second device and the core network side device. For example, the AK may be calculated based on the first shared key and the second random number by using any one of the above algorithms or functions in the first calculation manner or the second calculation manner, which may be exemplarily represented as: AK = K⊕Nonce1, here, k is the first shared key, f is any one of the above algorithms or functions in the first calculation manner or the second calculation manner, Nonce1 is the second random number, and AK is the anonymous key.

The foregoing embodiments have explained that the core network side device may include one or more core network devices (or core network elements), and interaction may be performed within the core network side device.

For example, the core network side device includes a first core network device and a second core network device. The above first core network device may include BSF and/or A-NF, and the above second core network device may include at least one of HSS/HLR, AUSF, or KMS, or the like.

The first core network device may be configured to receive a second request message, and then the first core network device sends the second request message to the second core network device. The second core network device may query a subscription credential of the first device and a subscription credential of the second device, and then determine whether a preset condition is met based on the subscription credential of the first device and the subscription credential of the second device. If the preset condition is met, the second core network device authorizes the first device and the second device to use the target service. Relevant explanations on an order of the processes of authorizing the first device and the second device to use the target service and performing the authentication process by the core network side device are the same as those in the foregoing embodiments and will not be repeatedly described here. Furthermore, the second core network device may also perform the foregoing process of de-anonymizing the first ID of the second device, which will not be elaborated.

Here, when the first core network device sends the second request message to the second core network device, the first core network device may also add authentication type indication information into the second request message. The authentication type indication information is configured to indicate an authentication type corresponding to the second device, and the authentication type indication information may include at least one of: type indication based on an ID of the first core network device, or type indication based on the first ID of the second device, or type indication based on an authentication type (for example, represented as Auth_type_ID). Correspondingly, the second core network device may also determine whether the authentication type corresponding to the second device is a target type based on the authentication type indication information in the second request message, in case of determining that the preset condition is met; and if the authentication type corresponding to the second device is the target type, the second core network device determines to authorize the first device and the second device to use the target service. The target type may be set according to an actual situation, for example, the target type may be A-IoT authentication or other specified types of authentication, which are not exhaustively listed here.

The second core network device may perform the foregoing processes of generating the first message authentication code and the second response, to finally obtain the AV, and the second core network device may send the AV to the first core network device. It should be understood that the above AV may include an AK, the AK is provided to the BSF/A-NF (that is, the first core network device) and/or protects transmission of the third random number (N2) (especially applicable to a case where the third random number N2 is selected by the core network side).

After completing the above processing, the core network side device sends the above first information to the first device; then the first device sends the first information from the core network side device to the second device. Correspondingly, the second device receives the first information from the core network side device, which includes that: the second device receives the first information from the core network side device through the first device.

Here, the core network side device (such as the foregoing first core network device) may carry the first information in a first message and send the first message to the first device. The first message may be a 401 message or any NAS message. For example, if the first core network device in the core network side device is a BSF, the foregoing first message may be the 401 message; if the first core network device in the core network side device is an N-AF, the foregoing first message may be any NAS message.

The operation of sending, by the first device, the first information from the core network side device to the second device may be that: the first device carries the first information in a second message and sends the second message to the second device. Correspondingly, the second device obtains the first information from the core network side device by receiving the second message. The above second message may be in response to the first request message, and the second message may also be referred to as an authentication response message. The second message may be a sidelink message or an AS message. For example, if the first device is the first terminal device, the second message may be any sidelink message; if the first device is the first access network device, the second message may be any AS message. It should be understood that in addition to carrying the foregoing first information, the first message and/or the second message may further carry the ID of the core network side device, which may be specifically the ID of the first core network device.

Further, after receiving the first information, the second device calculates the second message authentication code based on the first shared key, which may specifically include that: the second device calculates the second message authentication code based on the first shared key, the first random number and a first authentication parameter in a first calculation manner, here, the first authentication parameter includes at least one of: a second shared key, a second random number, or a third random number.

The second random number is shared between the second device and the core network side device and/or the target service device. In this embodiment, the second random number may be shared between the second device and the core network side device.

And/or, the second shared key is shared between the second device and the first device.

And/or, the third random number is configured, or the third random number is shared between the second device and the core network side device and/or the target service device. For example, if the third random number is configured, it may mean that the third random number is generated by the core network side device and configured to the second device, and in this case, the foregoing first information may further include relevant information of the third random number. The relevant information of the third random number may be "N2⊕AK", and explanations on the relevant information of the third random number are the same as those in the foregoing embodiments and will not be described repeatedly. Further, the second device may calculate an AK, and then perform an XOR calculation based on the AK and the relevant information of the third random number, to obtain the third random number. Manners of calculating the AK by the second device should be the same as manners of calculating the AK by the core network side device, which for example may be AK = fk(RAND) or AK = K⊕N1.

In this implementation, the second message authentication code is calculated mainly based on the first shared key, the first random number and the first authentication parameter in the first calculation manner. Manners of calculating the second message authentication code by the second device should be the same as manners of calculating the first message authentication code by the core network side device. For example, if the first authentication parameter includes the second shared key, as to calculating the second message authentication code based on the first shared key, the first random number and the first authentication parameter in the first calculation manner, it may be represented as: MAC' = fk(RAND,N1), here, MAC' represents the second message authentication code, and meanings of remaining parameters in the formula are the same as those in the foregoing embodiments and are not elaborated here. It should be understood that this is only an exemplary explanation, and in actual processing, the foregoing various manners of calculating the first message authentication code by the core network side device may be used by the second device to calculate the second message authentication code. As long as these manners ensure that the core network side device and the second device use the same parameter and the same algorithm or function, they fall within the scope of protection of this embodiment and will not be elaborated here one by one.

In case that the second message authentication code is the same as the first message authentication code, the second device may determine that the second device successfully authenticates the core network side device. After determining that the second device successfully authenticates the core network side device, the second device may further include that: the second device calculates a first response based on the first shared key, here, the first response is used by the core network side device to authenticate the second device; and the second device sends second information to the core network side device, here, the second information includes the first response.

The operation of calculating, by the second device, the first response based on the first shared key may include that: the second device calculates the first response based on the first shared key, the first random number and a second authentication parameter in a second calculation manner, here, the second authentication parameter includes at least one of: the second shared key, the second random number, or the third random number, the first calculation manner is different from the second calculation manner, and/or the first authentication parameter is at least partially different from the second authentication parameter.

Explanations on "the first calculation manner is different from the second calculation manner, and/or the first authentication parameter is at least partially different from the second authentication parameter" are the same as explanations in the foregoing embodiments and will not be elaborated.

In this implementation, the first response is calculated mainly based on the first shared key, the first random number and the second authentication parameter in the second calculation manner. Manners of calculating the first response by the second device should be the same as manners of calculating the second response by the core network side device. For example, if the second authentication parameter includes the third random number, as to calculating the first response based on the first shared key, the first random number and the second authentication parameter in the second calculation manner, it may be represented as: RES = fk(RAND, N2), here, RES represents the first response, and meanings of remaining parameters in the formula are the same as those in the foregoing embodiments and are not elaborated here. It should be understood that this is only an exemplary explanation, and in actual processing, the foregoing various manners of calculating the second response by the core network side device may be used by the second device to calculate the first response. As long as these manners ensure that the core network side device and the second device use the same parameter and the same algorithm or function, they fall within the scope of protection of this embodiment and will not be elaborated here one by one.

The operation of sending, by the second device, the second information to the core network side device includes that: the second device sends the second information to the core network side device through the first device. Correspondingly, the core network side device receives the second information from the second device, here, the second information includes the first response; and in case that the first response is the same as the second response, the core network side device determines that authentication of the second device is successful. Processes of generating the second response by the core network side device have been detailed in the foregoing embodiments and will not be repeatedly described here.

Furthermore, processing performed by the first device may further include that: the first device sends the second information from the second device to the core network side device, here, the second information includes the first response, and the first response is used by the core network side device to authenticate the second device. Correspondingly, the operation of receiving, by the core network side device, the second information from the second device includes that: the core network side device receives the second information from the second device through the first device.

Here, when the second device sends the second information to the first device, if the first device is the first terminal device, the second information may be carried by any sidelink message; and if the first device is the first access network device, the second information may be carried by any AS message. When the first device sends the second information from the second device to the core network side device, the second information may be carried by any NAS message or any HTTP request message.

After the core network side device successfully authenticates the second device, it may further include: the core network side device sends a first response message to the first device, here, the first response message is configured to indicate successful authentication of the second device, the first response message carries identification information, and the identification information is related to at least one of: the second ID of the second device, the first ID of the second device, an ID of the first device, or an ID of the core network side device.

Processing performed by the first device may further include that: the first device receives the first response message from the core network side device, here, the first response message is configured to indicate the successful authentication of the second device, the first response message carries the identification information, and the identification information is related to at least one of: the second ID of the second device, the first ID of the second device, the ID of the first device, or the ID of the core network side device. Then, the first device may also perform the following processing: the first device sends a fifth response message to the second device, here, the fifth response message is configured to indicate the successful authentication of the second device, and the fifth response message carries the identification information.

Processing performed by the second device may further include that: the second device receives the fifth response message from the first device, here, the fifth response message is configured to indicate the successful authentication of the second device, the fifth response message carries the identification information, and the identification information is related to at least one of: the second ID of the second device, the first ID of the second device, the ID of the first device, or the ID of the core network side device.

A manner of obtaining the identification information by the core network side device may be one of: obtaining the identification information by calculation based on the first ID of the second device and the ID of the core network side device; or calculating a second intermediate key based on the AK, and obtaining the identification information by calculation based on the ID of the core network side device and a result obtained through performing calculation on the second ID of the second device based on the second intermediate key.

In the manner of obtaining the identification information by calculation based on the first ID of the second device and the ID of the core network side device, a direct concatenation calculation manner may be used, for example, it may be represented as: B-TID = DIDi∥BSF ID, here, B-TID is the identification information, DIDi is the first ID of the second device, and BSF ID is the ID of the core network side device (such as the first core network device). Alternatively, the identification information may also be calculated with addition of the ID of the first device, for example, the identification information is obtained by calculation based on the first ID of the second device, the ID of the core network side device and the ID of the first device, and it is represented by the following formula: B-TID = DIDi∥UE ID∥BSF ID, here, UE ID may be the ID of the first device (in case that the first device is the first terminal device), and meanings of remaining contents are the same as those in the foregoing embodiments and will not be elaborated.

As to calculating the second intermediate key based on the AK, it may mean that: the second intermediate key is calculated based on the AK and a fourth authentication parameter, here, the fourth authentication parameter includes at least one of: a second shared key, a second random number, a third random number, a second ID of the second device, an ID of the core network side device, or an ID of the first device. Exemplarily, the second intermediate key may be calculated by using the AK, the second shared key, the third random number, the second ID of the second device and the ID of the core network side device, such as Ks = fak(N1, N2, IDi, BSF ID), here, Ks may be the second intermediate key, ak represents the AK, N1 may be the second shared key, N2 is the third random number, IDi is the second ID of the second device, BSF ID is the ID of the core network side device (for example, the first core network device is the BSF), and f may be any one of the above algorithms or functions in the third calculation manner. Exemplarily, the second intermediate key may be calculated by using the AK, the second shared key, the third random number, the second ID of the second device, the ID of the core network side device and the ID of the first device, such as Ks = fak(N1, N2, UE ID, IDi, BSF ID). It should be understood that this is only an exemplary explanation, and in actual processing, one or more of the above parameters may also be used in combination to calculate the second intermediate key Ks. Furthermore, in case that the above first device is an access network device, the above UE ID may also be replaced by a gNB ID; in case that the first core network device is the A-NF, the above BSF ID may also be replaced by an A-NF ID, and the like. All possible examples are not exhaustively listed here.

As to obtaining the identification information by calculation based on the ID of the core network side device and the result obtained through performing calculation on the second ID of the second device based on the second intermediate key, it may be represented by the following formula: B-KID = fks(IDi)||BSF ID, here, B-KID is the identification information, f is any one of the foregoing third calculation manner (or the first calculation manner or the second calculation manner), ks is the second intermediate key, and BSF ID is the ID of the core network device. For another example, the identification information may be obtained by calculation based on the ID of the core network side device, the ID of the first device, and a result obtained through performing calculation on the second ID of the second device based on the second intermediate key, this may be represented by the following formula: B-KID = fks(IDi)||UE ID∥BSF ID, here, meanings of contents in the formula are the same as those in the foregoing embodiments and will not be elaborated. It should be understood that the above ID of the core network side device is only explained by taking the first core network device being the BSF as an example. In fact, the first core network device may also be the A-NF, that is, the BSF ID may also be replaced by the A-NF ID. All possible situations are not exhaustively listed here.

After the second device successfully authenticates the core network side, the second device may also calculate the second intermediate key based on the AK. Specific calculation manners thereof are the same as the foregoing manners of calculating the second intermediate key by the core network side device and will not be described repeatedly.

It should be pointed out that the first response message may further carry a validity period of the second intermediate key.

The purpose of calculating the second intermediate key by the second device may be that integrity protection verification is performed based on the second intermediate key. For example, if the core network side device has performed integrity protection based on the second intermediate key Ks when the core network side device sends the first response message, a second response message sent by the first device may be the same as the first response message. In this case, when receiving the second response message, the second device may perform integrity verification on the second response message based on the second intermediate key, and extract the identification information from the second response message in case that the verification is successful. Manners of performing integrity protection for the first response message by the core network side device may be that: the core network side device calculates an integrity verification code (for example, it may be Message Integrity Check (MIC)) for the first response message based on the second intermediate key, and carries the integrity verification code in the first response message. Correspondingly, the second device may calculate an integrity check code for the received second response message based on the second intermediate key, and if the integrity check code is the same as the integrity verification code, the second device determines that the integrity verification is successful.

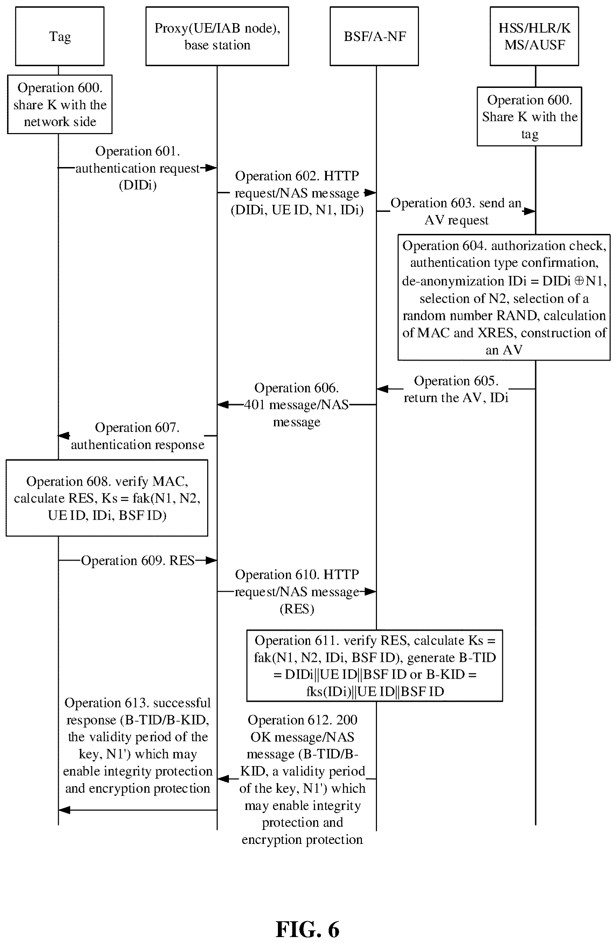

With reference to FIG. 6, the following example is taken: the first device is represented as a proxy (including any one of a UE, an IAB node or a base station), the second device is a Tag, the core network side device includes a first core network element such as BSF and/or A-NF (FIG. 6 represents the first core network element as BSF/A-NF, for the sake of simplicity), the core network side device further includes a second core network element, and the second core network element may include at least one of HSS, HLR, AUSF or KMS (FIG. 6 represents the second core network element as HSS/HLR/KMS/AUSF, for the sake of simplicity), the authentication process provided in the foregoing embodiments (the authentication may also be referred to as Bootstrapping authentication) is explained.

In operation 600, a pre-shared root key K is present between the Tag and a second network element (HSS/HLR/KMS/AUSF) at the network side. The second network element may be the foregoing second core network element. The root key is the foregoing first shared key.

In operation 601, the Tag sends a request message (an authentication request or a communication request) to the proxy (the proxy may be a UE, an IAB node or a device in the access network, and this example is explained by taking the proxy being the UE as an example), where the request message includes an anonymously processed identity identifier DIDi of the Tag. The request message is the first request message in the foregoing embodiments.

The "anonymously processing" may be done in the following two processing manners 1 and 2. In processing manner 1, N1 is a random number pre-shared between the Tag and the network side (HSS), and after a security context of the Tag is established, a new random number may be sent by the network side to the Tag to update the pseudonym DIDi, and the pseudonym is generated as follows: DIDi = IDi⊕N1. In processing manner 2, N1 is a key between the Tag and the UE (which may be a PHY key), and the UE, when sending an authentication request of the Tag to the network side, needs to carry N1, DIDi = IDi⊕N1 or DIDi = fn1(IDi). It is noted that mutual authentication may also be performed between the proxy UE and the Tag, and the operation 601 is performed after completing the mutual authentication.

In operation 602, the proxy sends a HTTP request/NAS message to the BSF. Here, taking the proxy being the UE as an example, the message includes DIDi and UE ID (GPSI, SUCI, GUTI). The message may further include at least one of N1 or IDi, or the like. The message may be the second request message in the foregoing embodiments.

Exemplarily, if the Tag uses the key N1 (that is, the second shared key) between the Tag and the UE/the base station to process IDi, the UE de-anonymizes and obtains IDi correspondingly, and the HTTP request sent to the BSF includes IDi, UE ID and N1.

Exemplarily, the proxy (such as the UE) sends an authentication request to the core network element A-NF specific to the A-IoT service, and the request message is carried on an NAS message of the UE and is securely protected by using a NAS security context of the UE.

In operation 603, the BSF/A-NF sends a request for an AV to the second network element in the core network (at least one of HSS, HLR, AUSF, or a key management center KMS of the Tag), where the message may include an ID that can indicate an authentication type, which may be based on a BSF ID or an A-NF ID, or based on an IDi, or based on an authentication type Auth_type_ID.

In operation 604, the second network element in the core network (at least one of HSS, HLR, AUSF, or KMS) performs at least one of: authorization check, authentication type confirmation, de-anonymization, selection of N2 (the third random number), selection of RAND (the first random number), calculation of MAC (the first message authentication code), calculation of XRES (the second response), or construction of the AV.

Optionally, subscription credentials of the Tag and the UE are queried through the core network element (such as UDM), to determine whether they have right to use the A-IoT service. Here, the subscription credentials of the Tag and the UE may be checked through the core network element UDM based on IDi and UE ID.

Optionally, determination of the authentication type is that: it is determined that the authentication type is A-IoT authentication, based on the ID that can indicate the authentication type.

Optionally, the process of de-anonymization may be calculated by using the following formula: IDi = DIDi⊕N1. This example is especially applicable to a case where N1 (the second random number) is pre-shared between the Tag and the network side.

Optionally, AK = K⊕N1 (applicable to a case where N1 (the second random number) is pre-shared) or AK = fk(RAND) (applicable to a case where N1 (the second random number) is pre-shared or N1 (the second shared key) is uploaded by the proxy) is calculated.

Optionally, the third random number N2 is selected, or N2 is pre-shared between the core network side device (such as the second network element) and the Tag.

Optionally, the first random number RAND is selected, and AK = fk(RAND) or AK = K⊕N1 and MAC/XRES = fk(RAND, N1, N2) are calculated. AK is provided to the BSF/A-NF and protects transmission of N2 (applicable to a case where N2 is selected by the core network side device (such as the second network element)); the functions f may be functions f1 to f5 defined by 3rd Generation Partnership Project (3GPP), or KDF (HMAC-SHA256), or other lightweight functions such as ASCON; calculation parameters of MAC/XRES may include only RAND, or include RAND and N1, or include RAND and N2, or include RAND, N1 and N2; the manner of calculating MAC is different from the manner of calculating XRES, that is, parameters introduced when MAC is calculated are different from parameters introduced when XRES is calculated, or if same calculation parameters are used, the function used when MAC is calculated is different from the function used when XRES is calculated.

Optionally, the authentication vector AV = RAND∥N2⊕AK∥MAC∥XRES (applicable to a case where N2 is selected by the network side) or AV = RAND∥AK∥MAC∥XRES (applicable to a case where N2 is pre-shared) is constructed.

Optionally, the AV may further include at least one of IDi, UE ID, or BSF ID.

In operation 605, the second network element in the core network (at least one of HSS, HLR, AUSF, or KMS) returns the AV to the BSF/A-NF.

In operation 606, the BSF/A-NF returns a 401 message to the proxy (the A-NF returns an NAS message), where the message includes RAND, MAC (or N2⊕AK∥MAC, which is only applicable to a case where N2 is a random number selected by the network side, and secure transmission of N2 is protected by AK), and may include BSF ID. The 401 message (or the NAS message) is the first message in the foregoing embodiments. RAND, MAC (or N2⊕AK∥MAC) may be contents included in the first information in the foregoing embodiments.

In operation 607, the proxy returns an authentication response to the Tag, where the authentication response includes RAND, MAC (or N2⊕AK∥MAC, which is only applicable to a case where N2 is the random number selected by the network side, and secure transmission of N2 is protected by AK), and may include BSF ID. The authentication response may be the foregoing second message.

In operation 608, the Tag calculates and verifies MAC. After verification is successful, the Tag may determine that authentication of the core network side device is successful, and then calculate RES = fk(RAND, N1), Ks = fak(N1, N2, UE ID, IDi, BSF ID). RES is the foregoing first response, and Ks is the second intermediate key in the foregoing embodiments. Optionally, if the first core network element is the A-NF and the proxy is specifically the UE, the second intermediate key may be calculated by using the following formula: Ks = fak(N1, N2, UE ID, IDi, A-NF ID).

In operation 609, the Tag sends response information to the proxy, where the response information includes RES. The response message may be the foregoing second message.

In operation 610, the proxy sends a HTTP request to the BSF/A-NF (or sends an authentication response to the A-NF), where the HTTP request or the authentication response includes RES. The HTTP request or the authentication response may be any HTTP request or NAS message carrying the second information in the foregoing embodiments.

In operation 611, the BSF/A-NF verifies RES, for example, compares RES with XRES (the first response) to verify the Tag. After verification of the Tag is successful, the BSF/A-NF calculates Ks = fak(N1, N2, IDi, BSF ID) and generates identification information, where the identification information may be B-TID or B-KID. Here, taking the proxy being the UE as an example, B-TID = DIDi||UE ID||BSF ID, B-KID = fks(IDi)||UE ID∥BSF ID, here, B-KID may be configured to prevent propagation of B-TID on an air interface.

In operation 612, the BSF/A-NF sends a 200 OK message to the proxy, where the message includes B-TID/B-KID, a validity period of the key Ks, and may include a newly selected random number N1' which is used by the Tag to update the pseudonym. The key Ks may be used for integrity protection of the message or for integrity and encryption protection of the message. Here, the 200 OK message may be the first response message in the foregoing embodiments.

In operation 613, the proxy returns a successful response to the Tag, where the successful response includes B-TID/B-KID, the validity period of the key Ks, and may include N1' and a Message Integrity Code (MIC). The key Ks may be used for integrity protection of the message or for integrity and encryption protection of the message. Here, the successful response may be the second response message in the foregoing embodiments.

In some possible implementations, after the second device completes the above authentication process, the second device may also establish communication with the target service device through the first device.

The second device sends a third request message to the target service device through the first device, here, the third request message is configured to request communication, and the third request message carries the identification information. The method further includes at least one of: the second device receives a third response message from the first device, here, the third response message is configured to indicate that the target service device obtains the first key; or, the second device receives a sixth response message from the target service device, here, the sixth response message is configured to indicate that the target service device obtains the first key.

In this implementation, the second device may calculate the first key by itself. For example, the second device may calculate the first key in case that it determines that the first message authentication code is the same as the second message authentication code.

The operation of calculating, by the second device, the first key based on the first shared key and the ID of the target service device includes that: the second device calculates the first key based on the first shared key, the ID of the target service device and a third authentication parameter, here, the third authentication parameter includes at least one of: a second shared key, a second random number, a third random number, a second ID of the second device, an ID of the core network side device, an ID of the first device, or identification information.

The operation of calculating, by the second device, the first key based on the first shared key, the ID of the target service device and the third authentication parameter may include that: the second device calculates an AK based on the first shared key; the second device calculates a second intermediate key based on the AK and a fourth authentication parameter, here, the fourth authentication parameter includes at least one of: the second shared key, the second random number, the third random number, the second ID of the second device, the ID of the core network side device, or the ID of the first device; and the second device calculates the first key based on the second intermediate key, the identification information and the ID of the target service device. The third authentication parameter includes the foregoing fourth authentication parameter, and is further added with the identification information on the basis of the fourth authentication parameter, that is, the third authentication parameter may include at least one of the identification information and/or the fourth authentication parameter. Explanations on the fourth authentication parameter are the same as those in the foregoing embodiments and will not be elaborated.

Manners of calculating the AK by the second device based on the first shared key may be the same as manners of calculating the AK by the core network side device based on the first shared key in the foregoing embodiments, and will not be elaborated. Processing manners of calculating the second intermediate key based on the AK and the fourth authentication parameter are the same as explanations in the foregoing embodiments, and will not be elaborated.

As to calculating the first key based on the second intermediate key, the identification information and the ID of the target service device, it may include that: the first key is calculated based on the second intermediate key, the identification information and the ID of the target service device in the first calculation manner. For example, it may be represented by the following formula: Ks_NAF = fks(NAF ID, B-TID), here, Ks_NAF represents the first key, f may be any one of the above algorithms or functions in the first calculation manner, Ks is the second intermediate key, NAF ID is the ID of the target service device, B-TID is the identification information, and the B-TID may also be replaced by B-KID. Manners of obtaining the identification information are the same as those in the foregoing embodiments and will not be described repeatedly. Alternatively, the ID of the first device may also be added when the first key is calculated based on the second intermediate key, the identification information and the ID of the target service device. For example, the first key is calculated based on the second intermediate key, the identification information, the ID of the target service device and the ID of the first device in the first calculation manner. For example, it may be represented by the following formula: Ks_NAF = fks(NAF ID, B-TID, UE ID), here, meanings of contents in the formula are the same as those in the foregoing embodiments and will not be elaborated.

The second device may calculate the first key before sending the communication request, or the second device may calculate the first key after receiving the third response message and/or the sixth response message. The timing when the second device calculates the first key is not limited in this embodiment.

The operation of receiving, by the first device, the first key from the core network side device includes that: the first device forwards the third request message sent by the second device to the target service device, here, the third request message is configured to request communication, and the third request message carries the identification information; and the first device receives a third response message from the core network side device, here, the third response message carries the first key.

The method further includes the following operations. The first device sends a third response message to the second device, here, the third response message is configured to indicate that the target service device obtains the first key.

Processing performed by the target service device may include that: the method further includes one of: the target service device receives, through the first device, a third request message sent by the second device, here, the third request message is configured to request communication, the third request message carries identification information, and the identification information is related to at least one of: a second ID of the second device, a first ID of the second device, an ID of the first device, or an ID of the core network side device; or, the target service device receives a sixth request message sent by the second device, here, the sixth request message is configured to request communication, and the sixth request message carries the identification information.

Processing performed by the target service device further includes that: the target service device sends a key request message to the core network side device, here, the key request message carries the identification information. The method further includes the following operations. The target service device receives a ninth response message from the core network side device, here, the ninth response message is in response to the key request message, and the ninth response message carries the first key. The target service device sends a sixth response message to the second device, here, the sixth response message is configured to indicate that the target service device obtains the first key.

In this implementation, the target service device does not directly receive the request from the second device, therefore, processing performed by the target service device in this embodiment may be specifically that: the target service device receives, through the first device, the third request message sent by the second device; and after receiving the third request message, the target service device sends the key request message to the core network side device.

In processing performed by the core network side device, the method further includes the following operations. The core network side device receives the key request message from the target service device, here, the key request message carries the identification information.

Manners of calculating the first key at the core network side may also be that: the core network side device calculates the first key based on the first shared key, the ID of the target service device and the third authentication parameter, here, the third authentication parameter includes at least one of: the second shared key, the second random number, the third random number, the second ID of the second device, the ID of the core network side device, the ID of the first device, or the identification information. Specific manners of calculating the first key by the core network side device should be the same as those of the second device and will not be described repeatedly.

In processing performed by the core network side device, the method further includes at least one of: the core network side device sends a second response message to the first device, here, the second response message is in response to the key request message, the second response message carries the first key, the first key is used for communication between the first device and the second device, and the first device is configured to transmit data between the second device and the target service device; or, the core network side device sends a ninth response message to the target service device, here, the ninth response message is in response to the key request message, the ninth response message carries the first key, and the first key is used for communication between the second device and the target service device.

It should be pointed out that the above sixth response message may further carry a validity period of the first key; and similarly, the ninth response message may further carry the validity period of the first key. A specific duration of the validity period of the first key is not limited in this embodiment.

According to the above solutions, both the second device and the first device may obtain the first key, and then in the process of the second device communicating with the target service device through the first device, an integrity protection key and an encryption key may be further derived based on the first key; or, the second device and the first device further calculate the second key based on the first key and the second shared key, and derive the integrity protection key and the encryption key based on the second key. For example, manners of calculating the second key based on the first key and the second shared key may be that: an XOR calculation is performed on the first key and the second shared key, to obtain the second key. For example, it may be calculated by the following formula: Ku1 = Ks_NAF⊕N1, here, Ku1 is the second key, KS_NAF is the first key, and N1 is the foregoing second shared key. Manners of deriving the integrity protection key and the encryption key based on the first key are not limited in this embodiment, and similarly, manners of deriving the integrity protection key and the encryption key based on the second key are not limited in this embodiment, either.

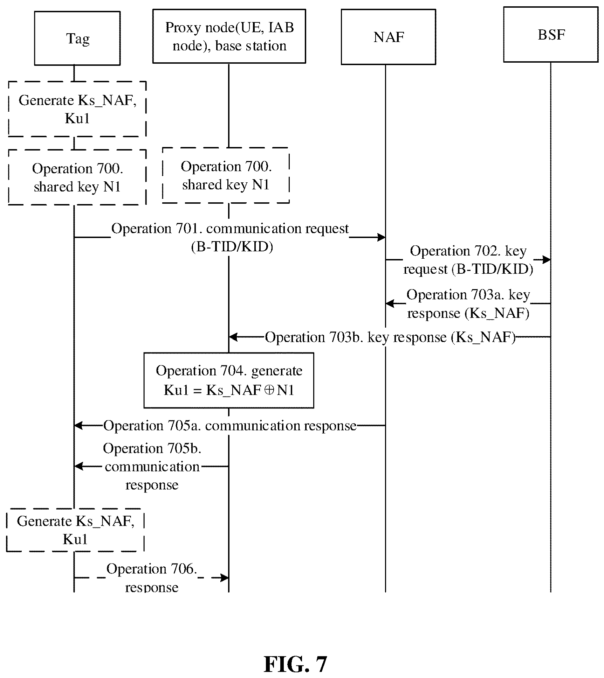

With reference to FIG. 7, the following example is taken: the first device is used as a proxy node (including any one of a UE, an IAB node or a base station), the second device is a Tag (that is, any Tag), the target service device is a Network Application Function (NAF), and the core network side device is specifically a first core network device BSF, the above communication method is exemplarily explained, and the above communication method includes the following operations S700 to S706.

In operation 700, a second shared key N1 is shared between the Tag and the proxy node, this key may be a PHY key.

In operation 701, the Tag sends a communication request to the NAF through the proxy node, here, the communication request includes B-TID or B-KID. The communication request may be the third request message in the foregoing embodiments.

In operation 702, the NAF sends a key request to the BSF, here, the key request includes B-TID or B-KID. The key request is the key request message in the foregoing embodiments.

In operation 703a, the BSF generates a first key Ks_NAF = fks(NAF ID, B-TID/B-KID), and returns a key response carrying Ks_NAF and a validity period of the key to the NAF. Here, the key response may be the foregoing ninth response message. In this operation, the BSF may also return Ks_NAF and the validity period of the key to KMS, to facilitate mobility management. In operation 705a, the NAF returns a communication response to the Tag, the communication response may be the sixth response message in the foregoing embodiments.

And/or, in operation 703b, the BSF returns a key response carrying Ks_NAF and a validity period of the key to the proxy node. Here, the key response returned by the BSF to the proxy node may be the second response message in the foregoing embodiments. In this operation, the BSF may also return Ks_NAF and the validity period of the key to KMS, to facilitate mobility management. In operation 705b, the proxy node returns a communication response to the Tag, the communication response may be the third response message in the foregoing embodiments.

In the foregoing operation 703a, the BSF may also send the key response to the UE. For example, the foregoing ninth response message may be sent to the NAF and the UE simultaneously.

Optionally, if the proxy node receives Ks_NAF and the validity period of the key, the proxy node and the Tag may generate an integrity protection key and an encryption key for protecting communication between the Tag and the proxy, based on Ks_NAF = fks(NAF ID, B-TID/B-KID, UE ID). Optionally, as shown in operation 704 of FIG. 7, the proxy node generate a second key Ku1 = Ks_NAF⊕N1 based on the shared key N1, Ks_NAF = fks(NAF ID, B-TID/B-KID). Ku1 is further used to generate the encryption key and the integrity protection key for protecting communication. Then, when the Tag uses another UE (such as UEx) as the proxy, Ks_NAF and a key Nx between the Tag and UEx may be used to derive a lower-level key Kux, without necessarily requiring Authentication and Key Agreement (AKA) for the Tag. In order to illustrate various possibilities in FIG. 7, processing performed at the Tag side to calculate Ks_NAF and Ku1 is represented by dotted boxes, and processing performed by the Tag to calculate Ks_NAF and Ku1 may occur before the operation 700 is performed or after operations 705a and 705b are performed. After receiving the communication response, the Tag may also perform the operation 706 to send a response to the proxy node.

Through the above process, the first device and the second device may obtain the shared first key and/or second key. In a case where the first device is a Layer 3 (L3) relay, there may be only a security context between the first device and the second device; in a case where the first device is a Layer 2 (L2) relay, there may be both a security context between the first device and the second device and a NAS/AS security context of the second device.

In processing performed by the second device to establish the NAS/AS security context (especially applicable to the case where the first device is an L2 relay), after the second device performs the solutions provided in the foregoing embodiments (such as the authentication process), both the core network side device and the second device may obtain the second intermediate key, and may use the second intermediate key as a shared key. The core network side device may derive a NAS security context based on the second intermediate key, and establishment of the NAS security context may refer to the 5G security mechanism, which is not exhaustively listed in this embodiment. The core network side device may also provide the second intermediate key to the access network device, for the access network device to derive an AS security context.

For example, the second device is a Tag, and the core network side device specifically includes a first core network device and a third core network device. The first core network device may be a BSF, the third core network device may be an AMF, and the BSF and the Tag generate the shared second intermediate key Ks. The BSF provides the key Ks to the AMF to derive the NAS security context, here, the NAS security context may refer to the existing 5G security mechanism, that is, Ks = Kamf, to derive Knas-int (that is, a NAS integrity protection key) and Knas-enc (that is, a NAS encryption key (or, referred to as a security key)). For another example, the access network device is specifically a base station (such as gNB). The BSF provides the key Ks to the gNB to derive the AS security context, here, the AS security context may refer to the existing 5G security mechanism, that is, Ks = Kgnb, and then the gNB derives a lower-level key based on Kgnb.

In some possible implementations, security agreement may also be performed between the second device and the first device.

Processing performed by the second device may further include that: the second device sends security capability information to the first device, here, the security capability information is configured to indicate one or more security algorithms supported by the second device, or the security capability information is configured to indicate a target security algorithm specified by the second device.

Correspondingly, processing performed by the first device may further include that: the first device receives security capability information from the second device, here, the security capability information is configured to indicate one or more security algorithms supported by the second device, or the security capability information is configured to indicate a target security algorithm specified by the second device.

The foregoing security capability information may be carried in any information and/or message sent by the second device to the first device.

Optionally, the security capability information may be carried in the first request message, then the first device may receive and save the security capability information, and send the second request message that does not include the security capability information to the core network side device; alternatively, the first device may further carry the security capability information in the second request message and send the second request message to the core network side device, which is not limited in this embodiment.

Optionally, the security capability information may be sent simultaneously with the second information, for example, the second information may include the security capability information, or the second device takes the second information and the security capability information as information elements, carries them in the same message and sends the message to the first device. In this case, the first device may extract the security capability information from the second information and save the security capability information without sending it to the core network device, or the first device does not process the second information or the message carrying the second information and the security capability information, and directly transmits the second information or the message to the core network side device transparently.

Optionally, the security capability information may also be carried in the foregoing third request message. In this case, the core network side device may carry the security capability information in the second response message and send the second response message to the first device. That is, the second response message and/or the ninth response message may be generated in processing performed by the core network side device, here, the second response message further carries the security capability information of the second device, the security capability information is configured to indicate one or more security algorithms supported by the second device, or the security capability information is configured to indicate the target security algorithm specified by the second device; and/or, the ninth response message further carries the security capability information of the second device.

It should be understood that this is only an exemplary explanation, and in other examples, the security capability information may also be carried by other messages or information, which is not exhaustively listed in this embodiment.

Optionally, the above security capability information may be configured to indicate one or more security algorithms supported by the second device, that is, the security capability information may include all security algorithms supported by the second device, or the security capability information may include preferred security algorithms supported by the second device, or the like. The security capability information may specifically include names and/or numbers and/or IDs of various security algorithms supported by the second device, and/or the like.

In this case, processing performed by the first device may further include that: the first device sends security algorithm indication information to the second device, here, the security algorithm indication information is configured to indicate the target security algorithm. Correspondingly, processing performed by the second device may further include that: the second device receives security algorithm indication information from the first device, here, the security algorithm indication information is configured to indicate the target security algorithm.

The security algorithm indication information may include a name and/or number and/or ID of the target security algorithm, and/or the like. The security algorithm indication information may be carried in any information or message sent by the first device to the second device. For example, the security algorithm indication information may be carried in the foregoing second message, or the second response message, or the third response message. Various possible information or messages that may carry the security algorithm indication information are not exhaustively listed here.

Manners of selecting the target security algorithm by the first device may be that: the first device may determine whether one or more security algorithms supported by the first device itself exist among the one or more security algorithms supported by the second device, and if so, the first device may select any one of the security algorithms supported by the first device itself, as the target security algorithm. Alternatively, it may further include that: if security algorithm(s) supported by the first device itself do not exist among the one or more security algorithms supported by the second device, the first device may select a security algorithm supported by the first device itself as the target security algorithm based on security capability of the second device, here, the security capability of the second device may also be carried in the security capability information, for example, the security capability of the second device may be configured to indicate at least one of: a type of the second device, a model of the second device, or a maximum computational capability supported by the second device, or the like. Alternatively, it may further include that: if security algorithm(s) supported by the first device itself do not exist among the one or more security algorithms supported by the second device, the first device may send indication information of failure of security algorithm agreement to the second device. The indication information of failure of security algorithm agreement may also be carried in any information or message sent by the first device to the second device.

Optionally, the above security capability information may be configured to indicate the target security algorithm specified by the second device.

In this case, processing performed by the first device may include that: in case that the first device itself supports the target security algorithm, the first device directly uses the target security algorithm. Furthermore, it may further include: if the first device does not support the target security algorithm, the first device sends indication information of failure of security algorithm agreement to the second device. The indication information of failure of security algorithm agreement may also be carried in any information or message sent by the first device to the second device.

For example, the second device is a Tag, the first device is a proxy, the core network side device includes a BSF, and the target service device is an NAF. Reporting of the security capability of the Tag and the selected security algorithm is that: the Tag may carry them in a bootstrapping initial process, an uplink message of lightweight bootstrapping authentication (such as the operation 601 and the operation 609 in FIG. 6), and a communication request message to the NAF (such as the operation 701 in FIG. 7). The BSF may carry the security capability of the Tag and the selected security algorithm when the NAF requests a key, and return them in a response message, such as the operation 703b in FIG. 7. After receiving the security capability of the Tag, the proxy selects a security algorithm that can be supported according to its own security capability; or checks, based on the security algorithm selected by the Tag, whether it supports the security algorithm. If the security algorithm cannot be supported, the proxy selects a security algorithm that can be supported in the security capability of the Tag; otherwise, the proxy will return an indication of failure of agreement. If the security algorithm is successfully determined, the proxy returns the security algorithm (that is, the target security algorithm) selected based on the security capability of the Tag (resistance to downgrade attacks) to the Tag; and this parameter may be carried in a downlink message of lightweight bootstrapping authentication (such as the operation 613 in FIG. 6) and a communication response returned by the proxy to the Tag (such as the operation 705b in FIG. 7). Alternatively, considering low security and computational capabilities of the Tag, the Tag may directly report the security algorithm supported by it to the network side and the proxy (that is, directly specifying the target security algorithm).

In some possible embodiments, the target security algorithm includes a target integrity protection algorithm and/or a target encryption algorithm, the target integrity protection algorithm is used by the second device to calculate an integrity protection code for a sent message based on an integrity protection key and/or to verify integrity of a received message based on the integrity protection key, the target encryption algorithm is used by the second device to encrypt sent data based on an encryption key and/or to decrypt received data based on the encryption key, the integrity protection key is related to the first key, and the encryption key is related to the first key. Correspondingly, the first device may also determine the target security algorithm corresponding to the second device. At the first device side, the target integrity protection algorithm is used by the first device to calculate an integrity protection code for a sent message based on an integrity protection key and/or to verify integrity of a received message based on the integrity protection key, the target encryption algorithm is used by the first device to encrypt sent data based on an encryption key and/or to decrypt received data based on the encryption key, the integrity protection key is related to the first key, and the encryption key is related to the first key.

Optionally, the second device may directly generate the foregoing first key (and/or the second key) after completing the authentication.

After obtaining the second intermediate key, the second device may use the second intermediate key to derive a lower-level key as the integrity protection key, and perform integrity protection for the message sent by the second device to the first device. For example, when the second device sends the second information to the first device, the second device calculates an integrity protection code (or, referred to as a Message Integrity Code (MIC)) for a message carrying the second information, and carries the integrity protection code in the message carrying the second information. Furthermore, the first device may perform integrity verification when the first device receives the message carrying the second information. For example, the second device is a Tag, and after generating the key Ks, the Tag may enable integrity protection by using Ks or a lower-level key derived from Ks. Then, an MIC message integrity verification code may be included in the response message sent in the operation 609 of FIG. 6.

Alternatively, after completing the authentication process, the second device may calculate the first key Ks_NAF, or calculate the first key Ks_NAF and the second key Ku1. The second device may derive a next level integrity protection key based on the first key (or the second key) and perform integrity protection. For example, when the second device sends the foregoing third request message, the second device carries a corresponding integrity protection code (or, referred to as MIC) in the third request message. For example, the second device is a Tag, and after generating Ks_NAF/Ku1, the Tag may enable integrity protection by using Ks_NAF/Ku1 or a lower-level key derived from Ks_NAF/Ku1. Then, the MIC may be included in the communication request sent in the operation 701 of FIG. 7.

Before obtaining the first key, the first device may send an integrity-protected message to the core network side device, and the core network side device performs integrity verification. In this case, if the integrity-protected message received by the first device further carries the security capability information of the second device, the first device may select the target security algorithm, and report the security capability information of the second device, the target security algorithm and the integrity verification code to the core network side device simultaneously. For example, the first device is a proxy, and the proxy sends the message sent by the second device and MIC carried by the message to the BSF/A-NF for integrity verification. If the message further carries the security capability of the Tag, the first device may further select the target security algorithm, and report the security capability of the Tag and the selected target security algorithm to the BSF/A-NF (that is, the core network side device).

Alternatively, after receiving the first key (or obtaining the second key through calculation), the first device may also perform integrity verification on the message sent by the second device. For example, the first device is a proxy, and after receiving the key Ks (the second intermediate key) and Ks_NAF (the first key) returned by the BSF (that is, the core network side device), or generating Ku1 (the second key) based on Ks_NAF, the proxy may verify integrity of the message based on the security algorithm selected by the Tag.

Further, the first device may enable integrity protection and encryption protection after successfully verifying security of any message carrying the integrity verification code sent by the second device. Correspondingly, the second device such as a Tag may enable encryption protection after receiving the message carrying the integrity verification code and successfully checking integrity thereof.

Optionally, the second device may calculate the first key and/or the second key after receiving a response message responding to the third request message.

After receiving the first key (or further calculating the second key), the first device may derive a lower-level encryption key and/or integrity protection key based on the first key and/or the second key and perform integrity protection. For example, the first device may perform integrity protection for the third response message, that is, carry the integrity protection code in the third response message. Correspondingly, after receiving the third response message, the second device may calculate the first key (or further calculate the second key) to derive a lower-level encryption key and/or integrity protection key based on the first key and/or the second key, and perform integrity verification on the third response message. If verification is successful, the second device may send a response to the first device. Correspondingly, after receiving the response, the first device determines that the integrity verification is successful and enables encryption protection.

For example, the second device is a Tag, and the Tag generates Ks_NAF, or Ks_NAF and Ku1 after receiving the communication response. Specifically, after receiving the key Ks_NAF, the proxy (the first device) generates Ku1, generates a lower-level encryption key and an integrity protection key based on Ks_NAF/Ku1, and uses integrity protection for the communication response (such as the operation 705b in FIG. 7); after receiving the communication response including MIC sent by the proxy (the operation 705b in FIG. 7), the Tag generates the key Ks_NAF or Ku1 as well as a lower-level encryption key and an integrity protection key, verifies the MIC by using the integrity protection key, enables encryption and integrity protection after verification is successful, and returns a response message to the proxy. After receiving the response message, the proxy checks integrity successfully, and may enable encryption protection.

In some possible implementations, processing performed by the second device may include that: the second device sends a first request message to the first device, here, the first request message is configured to request authentication, and the first request message carries a first ID of the second device.

Processing performed by the first device may include that: the first device receives the first request message from the second device, here, the first request message is configured to request authentication, and the first request message carries the first ID of the second device.

In this implementation, processing performed by the first device may further include that: the first device sends a fourth request message to the target service device, here, the fourth request message is configured to request authentication, and the fourth request message carries the first ID of the second device and/or the second ID of the second device.

In processing performed by the target service device, the method further includes one of: the target service device receives the fourth request message sent by the first device, here, the fourth request message is configured to request authentication, and the fourth request message carries the first ID of the second device and/or the second ID of the second device; or, the target service device receives a seventh request message sent by the second device, here, the seventh request message is configured to request authentication, and the seventh request message carries the first ID of the second device.

In this implementation, processing performed by the target service device is specifically that the target service device receives the fourth request message sent by the first device. Further, the method further includes the following operations. The target service device sends an eighth request message to the core network side device, here, the eighth request message is configured to request authentication, the eighth request message carries a security credential and the second ID of the second device, the security credential includes at least one of: a first shared key, relevant information of the first shared key, or a first intermediate key, the first shared key is shared between the second device and the target service device, and the first intermediate key is obtained based on the first shared key.

Processing performed by the core network side device may include that: the core network side device receives the eighth request message sent by the target service device, here, the eighth request message is configured to request authentication, the eighth request message carries the security credential and the second ID of the second device, the security credential includes at least one of: the first shared key, the relevant information of the first shared key, or the first intermediate key, and the first intermediate key is obtained based on the first shared key.

The first request message, the second ID of the second device, the first ID of the second device, and manners of anonymously processing the second ID by the second device are the same as those in the foregoing embodiments and are not elaborated in this embodiment.

Optionally, the foregoing first ID of the second device is calculated based on the second shared key. After receiving the first request message, the first device may de-anonymize the first ID of the second device, of which specific processes are the same as those in the foregoing embodiments and will not be elaborated here. In this case, the fourth request message carries the second ID of the second device; further, the fourth request message may also carry at least one of: the ID of the first device, or the second shared key.

Optionally, the foregoing first ID of the second device is calculated based on the second shared key. After receiving the first request message, the first device may not de-anonymize the first ID of the second device. In this case, the fourth request message carries the first ID of the second device, and the second request message may further carry at least one of: the ID of the first device, or the second shared key.

Optionally, the foregoing first ID of the second device is calculated based on the second random number. The second random number is shared between the second device and the target service device. In this case, after receiving the first request message, the first device may not de-anonymize the first ID of the second device, and the fourth request message carries the first ID of the second device; further, the second request message may also carry the ID of the first device.

After receiving the fourth request message, the target service device may perform authorization management on the second device, and perform mapping management between the first device and the second device. Specifically, the target service device obtains the second ID of the second device, and checks whether the second device is authorized based on the second ID of the second device; if the second device is authorized, the target service device extracts the ID of the first device from the fourth request message, and checks whether the first device is authorized to act as a proxy device to provide communication services for the second device; and if so, the target service device further checks a mapping relationship between the first device and the second device, and determines that the check is passed if a mapping relationship exists between the first device and the second device.

As to the target service device obtaining the second ID of the second device, it may include that: the target service device obtains the first ID of the second device from the fourth request message, and de-anonymizes the first ID of the second device to obtain the second ID of the second device. The process of de-anonymization is the same as that in the foregoing embodiments and is not described repeatedly. Alternatively, as to the target service device obtaining the second ID of the second device, it may include that: the target service device extracts the second ID of the second device from the fourth request message.

As to checking the mapping relationship between the first device and the second device, it may be that: the target service device determines the mapping relationship between the first device and the second device based on a whitelist of the first device and a whitelist of the second device which are saved by itself. For example, if the first device is in the whitelist of the second device and the second device is in the whitelist of the first device, then a mapping relationship exists between the first device and the second device; otherwise, no mapping relationship exists between the first device and the second device.

The target service device further generates the security credential.

Optionally, the security credential includes the first shared key, and the first shared key differs from that in the foregoing embodiments in that: the first shared key in this embodiment is shared between the second device and the target service device. The rest of explanations on the first shared key are the same as those in the foregoing embodiments. For example, the first shared key may be a root key K.

Optionally, the security credential includes the relevant information of the first shared key. The relevant information of the first shared key may be obtained based on direct concatenation of the first shared key and other parameters, for example, direct concatenation of the first shared key and the second shared key, or direct concatenation of the first shared key and the second random number, or direct concatenation of the first shared key and the third random number, or direct concatenation of the first shared key, the second random number (or the second shared key) and the third random number. For example, the relevant information of the first shared key may be represented as: K∥N1 or K∥N1∥N2 or K∥N2, here, K is the first shared key (or the root key), N1 is the second shared key (shared between the second device and the first device), or N1 is the second random number (shared between the second device and the target service device), and N2 is the third random number. It should be understood that this is only an exemplary explanation and is not exhaustively listed.

Optionally, the security credential may include the first intermediate key. The first intermediate key may be calculated based on the first shared key. For example, the first intermediate key may be obtained by performing an XOR calculation on the first shared key and other parameters. The other parameters may be at least one of: the second shared key, the second random number, or the third random number. For example, the first intermediate key is Kb, Kb = K⊕N1, or Kb = K⊕N2. For another example, the first intermediate key may be obtained by performing an XOR calculation on the first shared key and other parameters, and the relevant information of the first intermediate key is further obtained. The relevant information of the first intermediate key may also be obtained by directly concatenating the first intermediate key with the other parameters, for example, the relevant information of the first intermediate key may be represented as: Kb∥N2 (in case that Kb = K⊕N1) or Kb∥N1 (in case that Kb = K⊕N2).

The second random number is shared between the second device and the target service device; and/or, the second shared key is shared between the second device and the first device; and/or, the third random number is selected by the target service device, or the third random number is shared between the second device and the target service device.

If the third random number is selected by the target service device, the third random number may be sent by the target service device to the core network side device, for example, the third random number may be carried in the eighth request message. Further, the core network side device may include the third random number in the first information when it sends the first information. If the third random number is shared between the second device and the target service device, the third random number may be sent by the target service device to the core network side device, for example, the third random number may be carried in the eighth request message, and it is unnecessary for the core network side device to send the third random number to the second device.

Authentication type indication information may also be added to the eighth request message sent by the target service device. The authentication type indication information is configured to indicate an authentication type corresponding to the second device. Detailed explanations on the authentication type indication information are the same as those in the foregoing embodiments and will not be described repeatedly.

After receiving the eighth request message, the core network side device may determine whether the preset condition is met based on the subscription credential of the first device and the subscription credential of the second device. If the preset condition is met, the core network side device determines to authorize the first device and the second device to use the target service. Specific processes thereof are the same as those in the foregoing embodiments and will not be elaborated.

Further, if the core network side device determines to authorize the first device and the second device to use the target service, the core network side device may perform subsequent authentication processes on the second device. Processing performed by the core network side device may further include at least one of: the core network side device calculates the first message authentication code based on the first shared key, the first random number and a first authentication parameter in a first calculation manner, here, the first authentication parameter includes at least one of: a second shared key, a second random number, or a third random number; the core network side device calculates the first message authentication code based on a first intermediate key, the first random number and the first authentication parameter in the first calculation manner, here, the first intermediate key is related to the first shared key; the core network side device calculates the second response based on the first shared key, the first random number and a second authentication parameter in a second calculation manner, here, the second authentication parameter includes at least one of: the second shared key, the second random number, or the third random number, the first calculation manner is different from the second calculation manner, and/or the first authentication parameter is at least partially different from the second authentication parameter; or, the core network side device calculates the second response based on the first intermediate key, the first random number and the second authentication parameter in the second calculation manner.

The above first random number may be generated by the core network side device, and the foregoing first information may further include the first random number. Explanations on "the first calculation manner is different from the second calculation manner, and/or the first authentication parameter is at least partially different from the second authentication parameter" are the same as those in the foregoing embodiments and will not be elaborated.

Optionally, if the security credential includes the first shared key, the core network side device may directly obtain the first shared key. Alternatively, if the security credential includes relevant information of the first shared key, the core network side device may extract the first shared key from the relevant information of the first shared key based on at least one of the second random number, the second shared key, or the third random number.

Correspondingly, the core network side device may calculate the first message authentication code based on the first shared key, the first random number and the first authentication parameter in the first calculation manner; the core network side device calculates the second response based on the first shared key, the first random number and the second authentication parameter in the second calculation manner. In this example, relevant explanations on calculating the first message authentication code are the same as those in the foregoing embodiments and will not be described repeatedly.

Optionally, if the security credential includes the first intermediate key, the core network side device may directly use the first intermediate key. Alternatively, if the security credential includes relevant information of the first intermediate key, the core network side device may extract the first intermediate key from the relevant information of the first intermediate key based on at least one of the second random number, the second shared key, or the third random number.

Correspondingly, the core network side device calculates the first message authentication code based on the first intermediate key, the first random number and the first authentication parameter in the first calculation manner; the core network side device calculates the second response based on the first intermediate key, the first random number and the second authentication parameter in the second calculation manner.

For example, the first authentication parameter is different from the second authentication parameter, the first authentication parameter includes the second shared key, and the second authentication parameter includes the third random number. As to calculating the first message authentication code based on the first shared key, the first random number and the first authentication parameter in the first calculation manner, it may be represented as: MAC = fkb(RAND, N1). As to calculating the second response based on the first shared key, the first random number and the second authentication parameter in the second calculation manner, it may be represented as: XRES = fkb(RAND, N2), here, f may be an algorithm or function the same as that used to calculate the first message authentication code, kb represents the first intermediate key, and meanings of remaining parameters are the same as those in the foregoing embodiments and will not be elaborated.

The above descriptions are only exemplary explanations, and all possible manners of generating the first message authentication code and the second response are not exhaustively listed here. As long as these manners finally ensure that the generated second response is totally different from the first message authentication code, they fall within the scope of protection of this embodiment.

After obtaining the first message authentication code and the second response, the core network side device may use the first message authentication code and the second response as an AV.

Optionally, the AV may further include the first random number and/or an AK. For example, the above AV may be represented as: AV = RAND∥AK∥MAC∥XRES; or the above AV may be represented as: AV = RAND∥MAC∥XRES, here, meanings of contents in the formula are the same as those in the foregoing examples and will not be elaborated.

Optionally, the AV may further include at least one of: the second ID of the second device, the ID of the first device, the ID of the core network side device, or the ID of the target service device, or the like. All contents that can be included in the AV are not exhaustively listed in this embodiment.

Calculation manners of the above AK are the same as those in the foregoing embodiments and will not be elaborated.

For example, the core network side device includes a first core network device and a second core network device. The above first core network device may include BSF and/or A-NF, and the above second core network device may include at least one of HSS/HLR, AUSF, or KMS, or the like. Functions of the above first core network device and the second core network device are the same as those in the foregoing embodiments, and difference therebetween is only that manners of calculating the first message authentication code and the second response by the second core network device are different from those in the foregoing embodiments. The calculation manners have been described in detail in the foregoing embodiments and thus will not be described repeatedly.

After completing the above processing, the core network side device sends the above first information to the first device; then the first device sends the first information from the core network side device to the second device. Correspondingly, the second device receives the first information from the core network side device, which includes that: the second device receives the first information from the core network side device through the first device.

Here, the core network side device (such as the foregoing first core network device) may carry the first information in a first message and send the first message to the first device. The operation of sending, by the first device, the first information from the core network side device to the second device may be that: the first device carries the first information in a second message and sends the second message to the second device. Correspondingly, the second device obtains the first information from the core network side device by receiving the second message. The above second message may be in response to the first request message, and the second message may also be referred to as an authentication response message. Relevant explanations on the first message and the second message are the same as those in the foregoing embodiments and will not be elaborated.

Further, after receiving the first information, the second device calculates the second message authentication code based on the first shared key, which may specifically include one of: the second device calculates the second message authentication code based on the first shared key, the first random number and a first authentication parameter in a first calculation manner, here, the first authentication parameter includes at least one of: a second shared key, a second random number, or a third random number; or, the second device calculates a first intermediate key based on the first shared key, and calculates the second message authentication code based on the first intermediate key, the first random number and the first authentication parameter in the first calculation manner.

The second random number is shared between the second device and the target service device. In this embodiment, the second random number may be shared between the second device and the core network side device. And/or, the second shared key is shared between the second device and the first device. And/or, the third random number is configured, or the third random number is shared between the second device and the target service device. For example, if the third random number is configured, it may mean that the third random number is generated by the target service device and configured to the second device, and in this case, the foregoing first information may further include relevant information of the third random number, and/or the third random number. Explanations on the relevant information of the third random number are the same as those in the foregoing embodiments and will not be described repeatedly.

In this implementation, manners of calculating the second message authentication code by the second device should be the same as manners of calculating the first message authentication code by the core network side device, which will not be elaborated.

In case that the second message authentication code is the same as the first message authentication code, the second device may determine that the second device successfully authenticates the core network side device. After determining that the second device successfully authenticates the core network side device, the second device may further include that: the second device calculates a first response based on the first shared key, here, the first response is used by the core network side device to authenticate the second device; and the second device sends second information to the core network side device, here, the second information includes the first response.

The operation of calculating, by the second device, the first response based on the first shared key may include one of: the second device calculates the first response based on the first shared key, the first random number and a second authentication parameter in a second calculation manner, here, the second authentication parameter includes at least one of the second shared key, the second random number, or the third random number, the first calculation manner is different from the second calculation manner, and/or the first authentication parameter is at least partially different from the second authentication parameter; or, the second device calculates the first intermediate key based on the first shared key, and calculates the first response based on the first intermediate key, the first random number and the second authentication parameter in the second calculation manner.

Explanations on "the first calculation manner is different from the second calculation manner, and/or the first authentication parameter is at least partially different from the second authentication parameter" are the same as explanations in the foregoing embodiments and will not be elaborated.

In this implementation, processing performed by the second device to calculate the first response should also be the same as those performed by the core network side device and will not be elaborated.

Processing performed after the second device sends the second information to the core network side device and after the core network side device receives the second information from the second device are the same as those in the foregoing embodiments and will not be repeatedly described here. Furthermore, processing performed by the first device may further include that: the first device sends the second information from the second device to the core network side device, here, the second information includes the first response, and the first response is used by the core network side device to authenticate the second device. Correspondingly, the operation of receiving, by the core network side device, the second information from the second device includes that: the core network side device receives the second information from the second device through the first device. Here, manners of carrying the second information are the same as those in the foregoing embodiments and will not be elaborated.

After the core network side device successfully authenticates the second device, the method further includes at least one of: the core network side device sends a tenth response message to the target service device, here, the tenth response message is configured to indicate successful authentication of the second device, the tenth response message carries the identification information and the first key, the identification information is related to at least one of the second ID of the second device, a first ID of the second device, an ID of the first device, or an ID of the core network side device, the first key is used for communication between the second device and the target service device, and/or the first key is used for communication between the first device and the second device, and the first device is configured to transmit data between the second device and the target service device; or, the core network side device sends a fourth response message to the first device, here, the fourth response message is configured to indicate the successful authentication of the second device, and the fourth response message carries the identification information and the first key.

Correspondingly, the operation of receiving, by the first device, the first key from the core network side device includes that: the first device receives the fourth response message from the core network side device, here, the fourth response message is configured to indicate the successful authentication of the second device, the fourth response message carries the identification information and the first key, and the identification information is related to at least one of: the second ID of the second device, the first ID of the second device, the ID of the first device, or the ID of the core network side device.

Then, the first device may further perform the following processing. The first device sends a fifth response message to the second device, here, the fifth response message is configured to indicate the successful authentication of the second device, and the fifth response message carries the identification information.

Processing performed by the second device may further include that: the second device receives the fifth response message from the first device, here, the fifth response message is configured to indicate the successful authentication of the second device, the fifth response message carries the identification information, and the identification information is related to at least one of: the second ID of the second device, the first ID of the second device, the ID of the first device, or the ID of the core network side device.

The operation of receiving, by the target service device, the first key sent by the core network side device includes that: the target service device receives the tenth response message from the core network side device, here, the tenth response message is configured to indicate the successful authentication of the second device, the tenth response message carries the identification information and the first key, the identification information is related to at least one of: the second ID of the second device, the first ID of the second device, the ID of the first device, or the ID of the core network side device, the first key is used for communication between the second device and the target service device, or the first key is used for communication between the first device and the second device, and the first device is configured to transmit data between the second device and the target service device. In this implementation, the first key is used for communication between the first device and the second device.

Manners of obtaining the identification information by the core network side device are the same as those in the foregoing embodiments and will not be elaborated.

In this implementation, the second device may calculate the first key by itself. For example, the second device may calculate the first key in case of determining that the first message authentication code is the same as the second message authentication code. Alternatively, the second device may calculate the first key after receiving the fifth response message.

The operation of calculating, by the second device, the first key based on the first shared key and the ID of the target service device includes that: the second device calculates the first key based on the first shared key, the ID of the target service device and a third authentication parameter, here, the third authentication parameter includes at least one of: a second shared key, a second random number, a third random number, a second ID of the second device, an ID of the core network side device, an ID of the first device, or identification information.

Optionally, the operation of calculating, by the second device, the first key based on the first shared key, the ID of the target service device and the third authentication parameter may include that: the second device calculates an AK based on the first shared key; the second device calculates a second intermediate key based on the AK and a fourth authentication parameter, here, the fourth authentication parameter includes at least one of: the second shared key, the second random number, the third random number, the second ID of the second device, the ID of the core network side device, the ID of the first device, or the ID of the target service device; and the second device calculates the first key based on the second intermediate key, the identification information and the ID of the target service device. Here, the third authentication parameter includes the foregoing fourth authentication parameter, and is further added with the identification information on the basis of the fourth authentication parameter, that is, the third authentication parameter may include at least one of the identification information and/or the fourth authentication parameter.

The fourth authentication parameter differs from the foregoing embodiments only in that: the fourth authentication parameter is added with the ID of the target service device. Specific calculation manners may be that: an NAF ID (that is, the ID of the target service device) is added to the formula of calculating the second intermediate key in the foregoing embodiments, such as Ks = fak(N1, N2, IDi, UE ID, BSF ID, NAF ID), which will not be repeatedly described here. The above specific manners of calculating the first key are the same as those in the foregoing embodiments and will not be elaborated.

Optionally, the operation of calculating, by the second device, the first key based on the first shared key, the ID of the target service device and the third authentication parameter may include that: the second device calculates a first intermediate key based on the first shared key; the second device calculates a second intermediate key based on the first intermediate key and a fourth authentication parameter, here, the fourth authentication parameter includes at least one of the second shared key, the second random number, the third random number, the second ID of the second device, the ID of the core network side device, the ID of the first device, or the ID of the target service device; and the second device calculates the first key based on the second intermediate key, the identification information and the ID of the target service device.

Manners of calculating the first intermediate key based on the first shared key by the second device may be the same as manners of calculating the first intermediate key based on the first shared key by the target service device in the foregoing embodiments, and will not be elaborated.

A possible example of calculating the second intermediate key based on the first intermediate key and the fourth authentication parameter is that: the second intermediate key may be calculated by using the first intermediate key, the second shared key, the third random number, the second ID of the second device, the ID of the core network side device and the ID of the target service device, such as Ks = fkb(N1, N2, IDi, BSF ID, NAF ID), here, Ks may be the second intermediate key, kb represents the first intermediate key, N1 may be the second shared key, N2 is the third random number, Idi is the second ID of the second device, BSF ID is the ID of the core network side device (for example, the first core network device is the BSF), f may be any one of the above algorithms or functions in the third calculation manner, and NAF ID is the ID of the target service device. Exemplarily, the second intermediate key may be calculated by using the first intermediate key, the second shared key, the third random number, the second ID of the second device, the ID of the core network side device, the ID of the first device and the ID of the target service device, such as Ks = fkb(N1, N2, IDi, UE ID, BSF ID, NAF ID). It should be understood that this is only an exemplary explanation, and in actual processing, one or more of the above parameters may also be used in combination to calculate the second intermediate key Ks. In case that the above first device is an access network device, the above UE ID may also be replaced by a gNB ID; and/or, in case that the first core network device is the A-NF, the above BSF ID may also be replaced by an A-NF ID; the NAF ID in the above formula may not be used either, and/or the like. All possible examples are not exhaustively listed here.

As to calculating the first key based on the second intermediate key, the identification information and the ID of the target service device, it may include that: the first key is calculated based on the second intermediate key, the identification information and the ID of the target service device in the first calculation manner. For example, it may be represented by the following formula: Ks_NAF = fks(NAF ID, B-TID), here, Ks_NAF represents the first key, f may be any one of the above algorithms or functions in the first calculation manner, Ks is the second intermediate key, NAF ID is the ID of the target service device, B-TID is the identification information, and the B-TID may also be replaced by B-KID. Manners of obtaining the identification information are the same as those in the foregoing embodiments and will not be described repeatedly. Alternatively, the ID of the first device may also be added when the first key is calculated based on the second intermediate key, the identification information and the ID of the target service device. For example, the first key is calculated based on the second intermediate key, the identification information, the ID of the target service device and the ID of the first device in the first calculation manner. For example, it may be represented by the following formula: Ks_NAF = fks(NAF ID, B-TID, UE ID), here, meanings of contents in the formula are the same as those in the foregoing embodiments and will not be elaborated. For another example, the second ID of the second device may also be added to parameters for calculating the first key, such as Ks_NAF = fks(NAF ID, IDi, UE ID, B-TID (or B-KID)), or the like, which are not exhaustively listed here.

Manners of calculating the first key by the core network side device should also be the same as the foregoing manners of calculating the first key by the second device, and difference there-between may be that it is unnecessary for the core network side device to calculate the first intermediate key, and the core network side device may directly perform the foregoing process of calculating the second intermediate key based on the first intermediate key and the fourth authentication parameter, and calculating the first key based on the second intermediate key, the identification information and the ID of the target service device. The remaining processes are the same as the foregoing processes performed by the second device, and thus will not be elaborated.

It should be pointed out that the fifth response message may further carry a validity period of the first key. The fifth response message may further include an updated second random number, and the fifth response message may further carry an MIC (or, referred to as an integrity verification code or an integrity protection code), the MIC may be obtained based on the first key, or the second key calculated from the first key, or a further derived lower-level key, which is not exhaustively listed here.

It should also be pointed out that in some possible examples, the foregoing second intermediate key may be directly used as the first key.

The second device may also calculate the second key based on the first key, calculate the integrity protection key and the encryption key based on the first key or the second key or a further derived lower-level key. Manners of calculating the second key are the same as those in the foregoing embodiments and will not be elaborated.

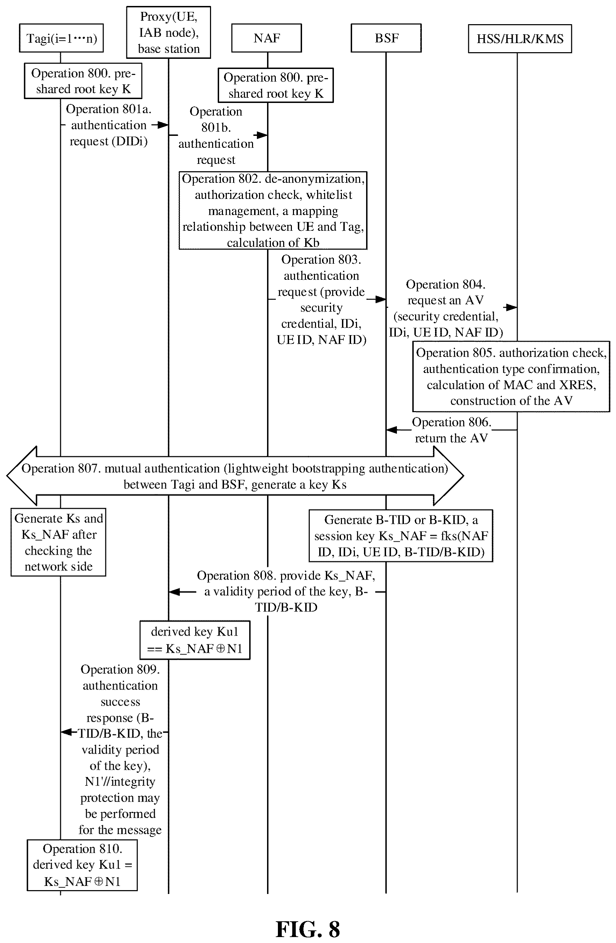

With reference to FIG. 8, the following example is taken: the first device is represented as a proxy (including any one of a UE, an IAB node or a base station), the second device is a Tag, the core network side device includes a first core network element such as BSF and/or A-NF (FIG. 8 represents the first core network element as BSF, for the sake of simplicity), the core network side device further includes a second core network element, the second core network element may include at least one of HSS, HLR or KMS (FIG. 8 represents the second core network element as HSS/HLR/KMS, for the sake of simplicity), and the target service device is an NAF, the communication method provided in the foregoing embodiments is explained.

In operation 800, a root key K is pre-shared between the Tag and the A-IoT application server NAF (or, may be represented as AF). The root key is the foregoing first shared key.

In operation 801a, the Tag sends a request message (an authentication request or a communication request) to the proxy (the proxy may be a UE, an IAB node or a device in the access network, and this example is explained by taking the proxy being the UE as an example), where the request message includes an anonymously processed identity identifier DIDi of the Tag. The request message is the first request message in the foregoing embodiments.

The "anonymously processing" may be done in the following two manners A and B. In processing manner A, N1 is a random number pre-shared between the Tag and the NAF, and after a security context of the Tag is established, a new random number may be sent by the NAF to the Tag to update the pseudonym DIDi, and the pseudonym is generated as follows: DIDi = IDi⊕N1. In processing manner B, N1 is a key between the Tag and the UE (which may be a PHY key), and the UE, when sending an authentication request of the Tag to the NAF, needs to carry N1, DIDi = IDi⊕N1 or DIDi = fn1(IDi). It is noted that mutual authentication may also be performed between the proxy UE and the Tag, and the operation 801 is performed after completing the mutual authentication

In operation 801b, the proxy sends an authentication request to the NAF, where the authentication request includes DIDi and UE ID (GPSI, SUCI, GUTI) or includes IDi, UE ID and N1. In this operation, the authentication request is the fourth request message in the foregoing embodiments.

In operation 802, the NAF performs at least one of: de-anonymization, authorization check, whitelist management, determination of a mapping relationship, or calculation of Kb (that is, the foregoing first intermediate key).

Optionally, the authorization management and mapping management between the Tag and the UE may be as follows. The NAF performs de-anonymization through IDi = DIDi⊕N1 or IDi = fn1(DIDi) based on N1 shared with the Tag, checks whether the Tag is authorized, checks whether the UE is authorized to act as a proxy to provide A-IoT communication services, and checks the mapping relationship between the UE and the Tag. The NAF may manage mapping between a whitelist of the Tag and a list of the proxy UE. Here, if the NAF receives IDi, UE ID and N1, the NAF directly performs the authorization check and mapping management between the Tag and the UE.

In operation 803, the NAF provides a security credential to the BSF. Specifically, the NAF may provide the root key K or K∥N1 or K∥N1∥N2 or K∥N2; or provide a processed key Kb or Kb∥N2 (Kb = K⊕N1) or Kb∥N1 (Kb = K⊕N2). N2 may be shared between the Tag and the NAF, or may be selected by the NAF. Here, the security credential may be carried in the eighth request message in the foregoing embodiments and sent to the BSF.

The message may include an ID that can indicate an authentication type, which may be based on an NAF ID, or based on an IDi, or based on an authentication type Auth_type_ID.

In operation 804, the BSF requests an AV from HSS/HLR/KMS (or, AUSF may be further included). The sent authentication request includes the NAF ID, IDi, UE ID, the security credential from the NAF, and the ID that can indicate the authentication type.

In operation 805, the HSS/HLR/KMS (or, AUSF may be further included) performs at least one of: authorization check, authentication type confirmation, calculation of MAC and XRES, or construction of the AV.

Optionally, subscription credentials of the Tag and the UE may be queried through the core network element (such as UDM), and the subscription credentials of the Tag and the UE are checked based on IDi and UE ID to determine whether they have right to use the A-IoT service.

Optionally, the authentication type confirmation may be that: it is determined that the authentication type is A-IoT authentication, based on the ID that can indicate the authentication type.

Optionally, calculation of the AV is that: if the root key K or K∥N1 or K∥N1∥N2 is received, a random number RAND is selected, AK = fk(RAND) or AK = K⊕N1 and MAC/XRES = fk(RAND, N1, N2) are calculated, then AV = RAND∥AK∥MAC∥XRES; if Kb or Kb∥N1/N2 is received, and MAC/XRES = fkb(RAND) or fkb(RAND, N1/N2), then AV = RAND∥MAC∥XRES; here, the functions f may be functions f1 to f5 defined by 3GPP, or KDF (HMAC-SHA256), or other lightweight functions.

In operation 806, the HSS/HLR/KMS returns the AV to the BSF. The AV may include IDi, UE ID, BSF ID and NAF ID.

In operation 807, the BSF performs lightweight bootstrapping authentication with the Tag, and forwards corresponding authentication messages through the proxy.

Taking the proxy being the UE as an example, this operation may include that: the BSF returns an authentication response to the Tag through the UE, where the authentication response includes RAND and MAC, may include AK⊕N2 or Kb⊕N2 (only applicable to a case where N2 is selected by the NAF and is securely sent), and may include BSF ID and IDi; the Tag verifies the network side by calculating and verifying MAC, and calculates RES and Ks = fak/kb(N1, N2, IDi, UE ID, BSF ID, NAF ID) after verification is successful; the Tag sends response information to the UE, where the response information includes RES; the UE sends a HTTP request to the BSF, where the HTTP request includes RES; the BSF verifies the Tag based on comparison of RES with XRES, calculates Ks = fak/kb(N1, N2, IDi, UE ID, BSF ID, NAF ID) after verification is successful, generates B-TID = DIDi||UE ID∥BSF ID, and may generate B-KID = fks(IDi)||UE ID||BSF ID to prevent propagation of B-TID on the air interface. Here, the authentication response may be the foregoing second message. The response information may be the foregoing second information.

In operation 808, the BSF provides the proxy/NAF with Ks_NAF = fks(NAF ID, IDi, UE ID, B-TID/B-KID) (or Ks_NAF = Ks, here is an exemplary explanation by taking the proxy being the UE as an example) and a validity period of the key, and a newly selected random number N1' may be included, which is used by the Tag to update the pseudonym. That is, the BSF may send the foregoing fourth response message to the proxy and send the tenth response message to the NAF.

In operation 809, the proxy returns a successful response to the Tag, where the successful response includes B-TID or B-KID, the validity period of the key, and may include the newly selected random number N1' and an MIC (integrity protection or integrity protection and encryption protection may be performed for the message by using the key Ks_NAF, Ku1 and a derived lower-level key). The successful response may be the fifth response message in the foregoing embodiments.

In operation 810, the key N1 (it may be a PHY key) between the Tag and the UE is used for mobility management: a key Ku1 = Ks_NAF⊕N1 is generated between the Tag and UE1 based on the shared key N1 and Ks_NAF = fks(NAF ID, IDi, UE ID, B-TID/B-KID). It should be noted that Ku1 may be further used to generate the encryption key and the integrity protection key for protecting communication. Then, when the Tag uses another UE (such as UEx) as the proxy, Ks_NAF and a key Nx between the Tag and UEx may be used to derive a lower-level key Kux, without necessarily requiring AKA for the Tag.

Through the above process, in a case where the first device is an L3 relay, there may be only a security context between the first device and the second device; and the first device and the second device may obtain the shared first key and/or second key. In a case where the first device is an L2 relay, there may be both a security context between the first device and the second device and a NAS/AS security context of the second device. In processing performed by the second device to establish the NAS/AS security context, after the second device performs the solutions provided in the foregoing embodiments, both the core network side device and the second device may obtain the second intermediate key Ks, and may use the second intermediate key as a shared key. The core network side device may derive a NAS security context based on the second intermediate key, and establishment of the NAS security context may refer to a 5G security mechanism, which is not exhaustively listed in this embodiment. The core network side device may also provide the second intermediate key to the access network device, such that the access network device derives an AS security context by using the second intermediate key.

For example, the second device is a Tag, and the core network side device specifically includes a first core network device and a third core network device. The first core network device may be a BSF, the third core network device may be an AMF, and the BSF and the Tag generate the shared second intermediate key Ks. The BSF provides the key Ks to the AMF to derive the NAS security context, here, the NAS security context may refer to an existing 5G security mechanism, that is, Ks = Kamf, to derive Knas-int (that is, an NAS integrity protection key) and Knas-enc (that is, an NAS encryption key (or, referred to as a security key)). For another example, the access network device is specifically a base station (such as gNB). The BSF provides the key Ks to the gNB to derive the AS security context, here, the AS security context may refer to an existing 5G security mechanism, that is, Ks = Kgnb, and then the gNB derives a lower-level key based on Kgnb.

In some possible implementations, security agreement may also be performed between the second device and the first device.

This implementation differs from the foregoing embodiments in that: in this implementation, the security capability information may be carried in the first request message, then the first device may receive and save the security capability information, and send the fourth request message that does not include the security capability information to the core network side device; alternatively, the first device may further carry the security capability information in the fourth request message and send the fourth request message to the core network side device, which is not limited in this embodiment. Optionally, the security capability information may be sent simultaneously with the second information, for example, the second information may include the security capability information, or the second device takes the second information and the security capability information as information elements, carries them in the same message and sends the message to the first device. In this case, the first device may extract the security capability information from the second information and save the security capability information without sending it to the core network device; or the first device does not process the second information or the message carrying the second information and the security capability information, and directly transmits the second information or the message to the core network side device transparently. It should be understood that this is only an exemplary explanation, and in other examples, the security capability information may also be carried by other messages or information, which is not exhaustively listed in this embodiment.

Optionally, the above security capability information may be configured to indicate the target security algorithm specified by the second device.

For example, the second device is a Tag, the first device is a proxy, the core network side device includes a BSF, and the target service device is an NAF. Reporting of security capability of the Tag and the selected security algorithm is that: the Tag may carry them in a bootstrapping initial process, an uplink message of lightweight bootstrapping authentication. After receiving the security capability of the Tag, the proxy selects a security algorithm that can be supported based on its own security capability; or checks, based on the security algorithm selected by the Tag, whether the proxy supports this security algorithm. If the security algorithm cannot be supported, the proxy selects a security algorithm that can be supported in the security capability of the Tag; otherwise, the proxy will return an indication of failure of agreement. If the security algorithm is successfully determined, the proxy returns the security algorithm (that is, the target security algorithm) selected based on the security capability of the Tag (resistance to downgrade attacks) to the Tag; and this parameter may be carried in a downlink message of lightweight bootstrapping authentication and a communication response returned by the proxy to the Tag. Alternatively, considering low security and computing capabilities of the Tag, the Tag may directly report the security algorithm supported by it to the network side and the proxy (that is, the Tag may directly specify the target security algorithm).

In some possible embodiments, the target security algorithm includes a target integrity protection algorithm and/or a target encryption algorithm. Explanations on the target integrity protection algorithm are the same as those in the foregoing embodiments and will not be elaborated. For example, the second device is a Tag, the Tag directly generates Ks_NAF/Ku1 after completing the authentication, and may enable integrity protection by using Ks_NAF/Ku1 or a lower-level key derived from Ks_NAF/Ku1. The first device is a proxy, and the proxy sends the message sent by the second device and MIC carried by the message to the BSF/A-NF to verify integrity. If the message further carries security capability of the Tag, the first device may further select the target security algorithm, and report the security capability of the Tag and the selected target security algorithm to the BSF/A-NF (that is, the core network side device). Alternatively, after receiving the key Ks and Ks_NAF (the first key) returned by the BSF (that is, the core network side device), or generating Ku1 (the second key) based on Ks_NAF, the proxy may verify integrity of the message based on the security algorithm selected by the Tag. Integrity protection and encryption protection may be enabled after successfully verifying security of any message carrying the integrity verification code. Correspondingly, the Tag may enable encryption protection after receiving the message carrying the integrity verification code and successfully checking integrity thereof. For example, after receiving the fifth response message, the Tag may calculate Ks_NAF, or Ks_NAF and Ku1. Specifically, after receiving the key Ks_NAF, the proxy (the first device) generates Ku1, generates a lower-level encryption key and integrity protection key based on Ks_NAF/Ku1, and uses integrity protection for an authentication success response; and after receiving the communication response including MIC sent by the proxy, the Tag generates the key Ks_NAF or Ku1 as well as a lower-level encryption key and integrity protection key, verifies the MIC by using the integrity protection key, enables encryption and integrity protection after verification is successful, and returns a response message to the proxy. After receiving the response message, the proxy checks integrity successfully, and may enable encryption protection.

In some possible implementations, the above second device may directly perform information interaction with the core network side device to complete the authentication process, and then the second device may directly interact with the target service device.

Processing performed by the second device may include that: the second device sends a fifth request message to the core network side device, here, the fifth request message is configured to request authentication, and the fifth request message carries a first ID of the second device.

The method further includes the following operations. The second device receives a seventh response message from the core network side device, here, the seventh response message is configured to indicate successful authentication of the second device, the seventh response message carries the identification information, and the identification information is related to at least one of: the second ID of the second device, the first ID of the second device, or the ID of the core network side device.

Processing performed by the core network side device may include that: the core network side device receives the fifth request message sent by the second device, here, the fifth request message is configured to request authentication, and the fifth request message carries the first ID of the second device.

The method further includes the following operations. The core network side device sends athe seventh response message to the second device, here, the seventh response message is configured to indicate the successful authentication of the second device, the seventh response message carries the identification information, and the identification information is related to at least one of: the second ID of the second device, the first ID of the second device, or the ID of the core network side device.

Here, the fifth request message may be any one of: a HTTP request, any NAS message, any upper layer protocol carried by a PHY, or any upper layer protocol carried by a MAC layer. For example, in case that the second device interacts with the first core network device at the core network side, and the first core network device is an A-NF, the fifth request message may be any NAS message. For example, in case that the first core network device is a BSF, the fifth request message may be any HTTP request. All possible types of the fifth request message are not exhaustively listed in this embodiment.

The second ID of the second device, the first ID of the second device, and manners of anonymously processing the second ID by the second device are the same as those in the foregoing embodiments and will not be described repeatedly.

Optionally, after receiving the fifth request message, the core network side device de-anonymizes the first ID of the second device first. In this embodiment, parameters used for the processes of anonymization or de-anonymization may include a second random number or a second shared key, here, both the second random number and the second shared key may be represented as N1, and the second random number or the second shared key may be shared between the second device and the core network side device, or the second random number may be selected by the core network side device. The remaining processes are the same as the foregoing processes of anonymization or de-anonymization and will not be described repeatedly.

Optionally, after receiving the fifth request message, the core network side device may determine whether a preset condition is met based on a subscription credential of the second device. If the preset condition is met, the core network side device determines to authorize the second device to use a target service. The preset condition may include that the second device has right to use the target service. The target service may refer to the A-IoT service, or other types of services requested by the second device, which are not exhaustively listed here.

Further, processing performed by the core network side device may further include at least one of: the core network side device calculates the first message authentication code based on the first shared key, the first random number and a first authentication parameter in a first calculation manner, here, the first authentication parameter includes at least one of a second shared key, a second random number, or a third random number; or, the core network side device calculates the second response based on the first shared key, the first random number and a second authentication parameter in a second calculation manner, here, the second authentication parameter includes at least one of the second shared key, the second random number, or the third random number, the first calculation manner is different from the second calculation manner, and/or the first authentication parameter is at least partially different from the second authentication parameter.

In this implementation, the first shared key may be a PSK between the second device and the core network side device, for example, the first shared key may be a root key.

Optionally, manners of calculating the first message authentication code and the second response by the core network side device are the same as those in the foregoing embodiments and will not be described repeatedly.

Optionally, processing performed by the core network side device to calculate the first message authentication code may include that: the core network side device calculates the AK based on the first shared key and the third random number by using any one of the above algorithms or functions in the first calculation manner, and then calculates the first message authentication code based on the AK, the first random number and the first authentication parameter by using any one of the above algorithms or functions in the first calculation manner. Exemplarily, calculation of the AK may be represented as: AK = fk(RAND, N2), here, k is the first shared key, f is any one of the above algorithms or functions in the first calculation manner or the second calculation manner, RAND is the first random number, AK is the anonymous key, and N2 is the third random number. Alternatively, exemplarily, calculation of the AK may be represented as AK = K⊕N2, here, meanings of contents in the formula are the same as those in the foregoing embodiments and will not be described repeatedly. In this embodiment, the AK may also be represented as Kc.

For example, calculation of the first message authentication code may be represented as: MAC = flkc(RAND, N2), or MAC = flkc(RAND), here, MAC is the first message authentication code, f1 is any one of the above algorithms or functions in the first calculation manner, kc represents the AK, RAND represents the first random number, N1 represents the second shared key, and N2 is the third random number.

Processing performed by the core network side device to calculate the second response may include that: the core network side device calculates the second response based on the AK, the first random number and the second authentication parameter by using any one of the above algorithms or functions in the second calculation manner. For example, calculation of the second response may be represented as: XRES = f2kc(RAND, N1), here, XRES represents the second response (or the second expected response), f2 may be any one of the above algorithms or functions in the second calculation manner, f2 is the same as or different from f1, RAND is the first random number, and N1 is the second shared key (or the second random number).

After obtaining the first message authentication code and the second response, the core network side device may use the first message authentication code and the second response as an AV.

Optionally, the AV may further include the second random number and/or the AK. For example, if the second random number is selected or generated by the core network side device, the AV includes the second random number. The above AV may be represented as: AV = RAND∥MAC∥XRES∥AK∥N1, here, AV is an authentication vector, ∥ represents a direct concatenation calculation, RAND is the first random number, MAC is the first message authentication code, XRES is the second response, AK is an anonymous key (or the anonymous key may also be represented as Kc), and N1 is the second random number.

Optionally, the AV may further include at least one of: the second ID of the second device, the ID of the first device, or the ID of the core network side device, or the like. All contents that may be included in the AV are not exhaustively listed in this embodiment.

The foregoing embodiments have explained that the core network side device may include one or more core network devices (or core network elements), and interaction may be performed within the core network side device. For example, the core network side device includes a first core network device and a second core network device. The above first core network device may include BSF and/or A-NF, and the above second core network device may include at least one of HSS/HLR, AUSF, or KMS, or the like. Functions of the first core network device and the second core network device are also similar to those in the foregoing embodiments and will not be repeatedly described here.

After completing the above processing, the core network side device sends the above first information to the second device. Correspondingly, the second device receives the first information from the core network side device.

Here, the core network side device (such as the foregoing first core network device) may carry the first information in a third message and send the third message to the second device. The third message may be a 401 message or any NAS message. For example, if the first core network device in the core network side device is a BSF, the foregoing third message may be the 401 message; if the first core network device in the core network side device is an N-AF, the foregoing third message may be any NAS message.

Further, after receiving the first information, the second device calculates the second message authentication code based on the first shared key, which may specifically include that: the second device calculates the second message authentication code based on the first shared key, the first random number and a first authentication parameter in the first calculation manner, here, the first authentication parameter includes at least one of: a second shared key, a second random number, or a third random number.

The second random number is shared between the second device and the core network side device. And/or, the third random number is configured, or the third random number is shared between the second device and the core network side device. For example, if the third random number is configured, it may mean that the third random number is generated by the core network side device and configured to the second device, and in this case, the foregoing first information may further include the third random number. Explanations on the relevant information of the third random number are the same as those in the foregoing embodiments and will not be described repeatedly.

Further, the second device may calculate the AK first, for example, the second device may perform an XOR calculation based on the first shared key and the third random number, to obtain the AK. Manners of calculating the AK by the second device should be the same as manners of calculating the AK by the core network side device, which for example may be AK' = fk(RAND, N2) or AK' = K⊕N2. In this embodiment, in order to distinguish AKs calculated by different devices, the AK obtained by the second device is represented as AK'. In some possible examples, the AK obtained by the second device may also be represented as Kc'. All possible representations thereof are not exhaustively listed in this embodiment.

Manners of calculating the second message authentication code by the second device should be the same as manners of calculating the first message authentication code by the core network side device. For example, the first authentication parameter includes the second shared key, and as to calculating the second message authentication code based on the first shared key, the first random number and the first authentication parameter in the first calculation manner, it may be represented as: MAC' = fkc'(RAND, N1), here, MAC' represents the second message authentication code, kc is another representation of the foregoing AK, kc' represents the AK calculated by the second device, and meanings of remaining parameters in the formula are the same as those in the foregoing embodiments and will not be elaborated. It should be understood that this is only an exemplary explanation, and in actual processing, the foregoing various manners of calculating the first message authentication code by the core network side device may be used by the second device to calculate the second message authentication code. As long as these manners ensure that the core network side device and the second device use the same parameter and the same algorithm or function, they fall within the scope of protection of this embodiment and will not be elaborated here one by one.

In case that the second message authentication code is the same as the first message authentication code, the second device may determine that the second device successfully authenticates the core network side device. After determining that the second device successfully authenticates the core network side device, the second device may further include that: the second device calculates a first response based on the first shared key, here, the first response is used by the core network side device to authenticate the second device; and the second device sends second information to the core network side device, here, the second information includes the first response.

Manners of calculating the first response based on the first shared key by the second device should be the same as the foregoing manners of calculating the second response by the core network side device, such as RES = fkc'(RAND, N1), here, RES is the first response, kc is another representation of the foregoing AK, kc' represents the AK calculated by the second device, RAND is the first random number, and N1 is the second random number (or the second shared key). As long as the second device calculates the first response by using the same parameter and the same algorithm or function as those used by the core network side device to calculate the second response, it falls within the scope of protection of this embodiment and will not be elaborated here by one here.

After calculating the first response, the second device may send the second information to the core network side device. Correspondingly, the core network side device receives the second information from the second device, where the second information includes the first response; and in case that the first response is the same as the second response, the core network side device determines that authentication of the second device is successful. Processing performed by the core network side device to generate the second response has been described in detail in the foregoing embodiments, and will not be repeatedly described here.

Here, when the second device sends the second information, the second information may be carried by any NAS message or any HTTP request message.

After the core network side device successfully authenticates the second device, the method may further include the following operations. The core network side device sends a seventh response message to the first device, where the seventh response message may be any NAS message or any HTTP message (such as a 200 OK message).

Here, manners of obtaining the identification information by the core network side device are the same as those in the foregoing embodiments. For example, the identification information is obtained by calculation based on the first ID of the second device and the ID of the core network side device; and/or, a second intermediate key is calculated based on the AK, and the identification information is obtained by calculation based on the ID of the core network side device and a result obtained through performing calculation on the second ID of the second device based on the second intermediate key.

As to calculating the second intermediate key based on the AK, it may mean that: the second intermediate key is calculated based on the AK and a fourth authentication parameter, here, the fourth authentication parameter includes at least one of: the second shared key, the second random number, the third random number, the second ID of the second device, or the ID of the core network side device. Compared to the foregoing embodiments, it is unnecessary to introduce the ID of the first device into the fourth authentication parameter. Exemplarily, the second intermediate key may be calculated by using the AK, the second shared key, the second ID of the second device and the ID of the core network side device, such as Ks = fkc(N1, IDi, BSF ID), here, Ks may be the second intermediate key, kc represents the AK, N1 may be the second shared key (or the second random number), Idi is the second ID of the second device, BSF ID is the ID of the core network side device (for example, the first core network device is the BSF), and f may be any one of the above algorithms or functions in the third calculation manner. All possible examples are not exhaustively listed here.

As to obtaining the identification information by calculation based on the ID of the core network side device and a result obtained through performing calculation on the second ID of the second device based on the second intermediate key, it may be represented by the following formula: B-KID = fks(IDi)||BSF ID, here, B-KID is the identification information, f is any one of the foregoing third calculation manner (or the first calculation manner or the second calculation manner), ks is the second intermediate key, and BSF ID is the ID of the core network device. It differs from the foregoing embodiments in that: it is unnecessary to introduce the ID of the first device for calculation, and the remaining processes are the same as those in the foregoing embodiments and will not be elaborated.

After the second device successfully authenticates the core network side, the second device may also calculate the second intermediate key based on the AK. Specific calculation manners thereof are the same as the foregoing manners of calculating the second intermediate key by the core network side device and will not be described repeatedly.

It should be pointed out that the seventh response message may further carry a validity period of the second intermediate key. Optionally, the seventh response message may further carry an updated second random number (N1'), where the updated second random number may be used by the second device to update the first ID (that is, pseudonym).

The purpose of calculating the second intermediate key by the second device may be that verification of integrity protection is performed based on the second intermediate key. For example, if the second intermediate key Ks is applied with integrity protection when the core network side device sends the first response message, the second response message sent by the first device may be the same as the first response message. In this case, the second device may perform integrity verification on the second response message based on the second intermediate key when it receives the second response message, and extract the identification information from the second response message in case that the verification is successful. Manners of performing integrity protection for the first response message by the core network side device may be that: an integrity verification code (for example, it may be MIC) is calculated for the first response message based on the second intermediate key, and the integrity verification code is carried in the first response message. Correspondingly, the second device may calculate an integrity check code for the received second response message based on the second intermediate key, and if the integrity check code is the same as the integrity verification code, the second device determines that the integrity verification is successful.

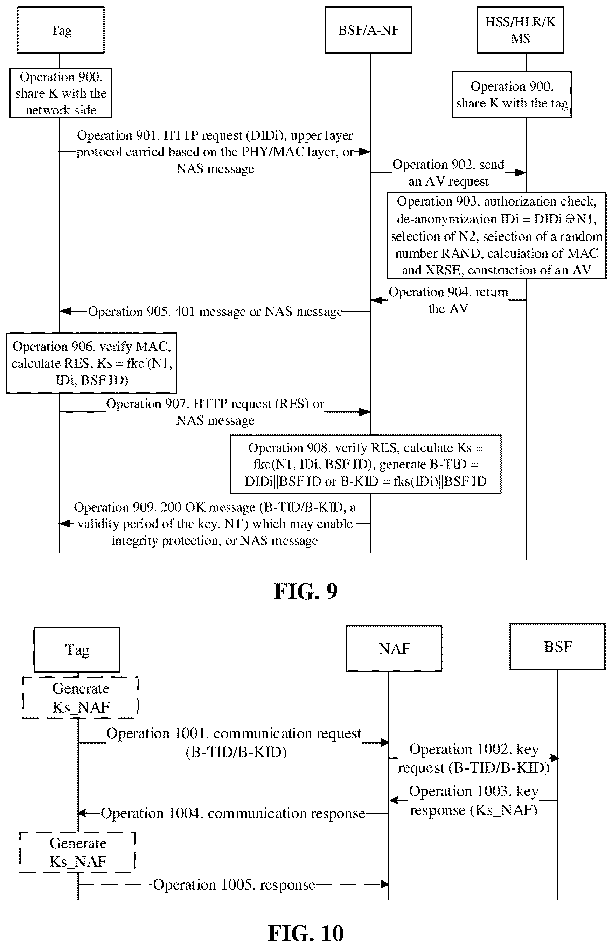

With reference to FIG. 9, the following example is taken: the second device is a Tag, the core network side device includes a first core network element such as BSF and/or A-NF (FIG. 9 represents the first core network element as BSF/A-NF, for the sake of simplicity), the core network side device further includes a second core network element, and the second core network element may include at least one of HSS, HLR, AUSF or KMS (FIG. 9 represents the second core network element as HSS/HLR/KMS, for the sake of simplicity), the authentication process provided in the foregoing embodiments (the authentication may also be referred to as Bootstrapping authentication) is explained.

In operation 900, a pre-shared root key K is present between the Tag and a second network element (HSS/HLR/KMS/AUSF) at the network side. The second network element may be the foregoing second core network element. The root key is the foregoing first shared key.

In operation 901, the Tag sends a HTTP request to the BSF/A-NF, where the HTTP request includes DIDi. The HTTP request may also be replaced by any upper layer protocol carried by the PHY, any upper layer protocol carried by the MAC layer, and/or any NAS message. The HTTP request is the fifth request message in the foregoing embodiments. Manners of anonymous processing may be: DIDi = IDi⊕N1.

In operation 902, the BSF/A-NF sends a request for an AV to the second network element in the core network (at least one of HSS, HLR, AUSF, or a key management center KMS of the Tag).

In operation 903, the second network element in the core network (HSS/HLR/KMS) performs at least one of: authorization check, de-anonymization, selection of RAND (the first random number), calculation of MAC (the first message authentication code), calculation of XRES (the second response), or construction of the AV.

Optionally, subscription credentials of the Tag and the UE are queried through the core network element (such as UDM), to determine whether they have right to use the A-IoT service. Here, the subscription credentials of the Tag and the UE may be checked through the core network element UDM based on IDi and UE ID.

Optionally, the process of de-anonymization may be calculated by using the following formula: IDi = DIDi⊕N1.

Optionally, Kc (or, represented as AK) = K⊕N2 is calculated, here, N2 is the third random number.

Optionally, the first random number RAND is selected, and AK = fkc(RAND, N2) and XRES = fkc(RAND, N1) are calculated. The functions f may be functions f1 to f5 defined by 3GPP, or KDF (HMAC-SHA256), or other lightweight functions such as ASCON.

In operation 904, the second network element (HSS/HLR/KMS) in the core network returns the authentication vector AV = RAND∥MAC∥XRES∥Kc∥N1 to the BSF/A-NF, the AV may include Idi.

In operation 905, the BSF/A-NF returns a 401 message to the Tag (the A-NF returns an NAS message), where the message includes RAND, MAC, and may include BSF ID. The 401 message (or the NAS message) is the first message in the foregoing embodiments. RAND, MAC may be contents included in the first information in the foregoing embodiments.

In operation 906, the Tag calculates and verifies MAC. After verification is successful, the Tag may determine that authentication of the core network side device is successful, and then calculate Kc' = Kr ⊕ N2, RES = fkc'(RAND, N1), Ks = fkc'(N1, IDi, BSF ID).

In operation 907, the Tag sends a HTTP request to the BSF/A-NF (or sends an authentication response to the A-NF), where the HTTP request or the authentication response includes RES. The HTTP request or the authentication response may be any HTTP request or NAS message carrying the second information in the foregoing embodiments.

In operation 908, the BSF/A-NF verifies RES, for example, compares RES with XRES (the first response) to verify the Tag. After verification of the Tag is successful, the BSF/A-NF calculates Ks = fkc(N1, IDi, BSF ID) to generate identification information, where the identification information may be B-TID or B-KID. Here, B-TID = DIDi∥BSF ID, or B-KID = fks(IDi)||BSF ID, here, B-KID may be configured to prevent propagation of B-TID on the air interface.

In operation 909, the BSF/A-NF sends a 200 OK message to the Tag, where the message includes B-TID/B-KID, a validity period of the key Ks, and may include a newly selected second random number N1' which is used by the Tag to update the pseudonym. Integrity protection or integrity and encryption protection may be performed for the message by using the key Ks. Here, the 200 OK message may be the seventh response message in the foregoing embodiments.

In some possible implementations, after the second device completes the above authentication process, the second device may also establish communication with the target service device.

The second device sends a sixth request message to the target service device, here, the sixth request message is configured to request communication, and the sixth request message carries the identification information. The method further includes the following operations. The second device receives a sixth response message from the target service device, here, the sixth response message is configured to indicate that the target service device obtains the first key. The sixth response message may be in response to the foregoing sixth request message.

In this implementation, the second device may calculate the first key by itself. For example, the second device may calculate the first key, in case of determining that the first message authentication code is the same as the second message authentication code.

The operation of calculating, by the second device, the first key based on the first shared key and the ID of the target service device includes that: the second device calculates the first key based on the first shared key, the ID of the target service device and a third authentication parameter, here, the third authentication parameter includes at least one of: a second shared key, a second random number, a third random number, a second ID of the second device, an ID of the core network side device, an ID of the first device, or identification information. In this implementation, the third authentication parameter may not use the ID of the first device, since the first device is not used as a proxy device in this implementation.

The operation of calculating, by the second device, the first key based on the first shared key, the ID of the target service device and the third authentication parameter may include that: the second device calculates an AK based on the first shared key; the second device calculates a second intermediate key based on the AK and a fourth authentication parameter, here, the fourth authentication parameter includes at least one of: the second shared key, the second random number, the third random number, the second ID of the second device, the ID of the core network side device, or the ID of the first device; and the second device calculates the first key based on the second intermediate key, the identification information and the ID of the target service device. The third authentication parameter includes the foregoing fourth authentication parameter, and is further added with the identification information on the basis of the fourth authentication parameter, that is, the third authentication parameter may include at least one of the identification information and/or the fourth authentication parameter. Except that the fourth authentication parameter does not use the ID of the first device in this implementation, explanations of the fourth authentication parameter are the same as those in the foregoing embodiments and will not be elaborated.

Manners of calculating the AK based on the first shared key by the second device may be the same as manners of calculating the AK based on the first shared key by the core network side device in the foregoing embodiments, and will not be elaborated. Processing manners of calculating the second intermediate key based on the AK and the fourth authentication parameter are the same as explanations in the foregoing embodiments, and will not be elaborated. Except that the ID of the first device is not used, the remaining processes of manners of calculating the first key based on the second intermediate key, the identification information and the ID of the target service device are the same as those in the foregoing embodiments, and will not be described repeatedly.

The second device may calculate the first key before sending the communication request, or the second device may calculate the first key after receiving the sixth response message. The timing when the second device calculates the first key is not limited in this embodiment.

Processing performed by the target service device may include that: the method further includes one of: the target service device receives the sixth request message sent by the second device, here, the sixth request message is configured to request communication, and the sixth request message carries the identification information.

Processing performed by the target service device further includes that: the target service device sends a key request message to the core network side device, here, the key request message carries the identification information. The method further includes the following operations. The target service device receives a ninth response message from the core network side device, here, the ninth response message is in response to the key request message, and the ninth response message carries the first key. The target service device sends the sixth response message to the second device, here, the sixth response message is configured to indicate that the target service device obtains the first key.

In processing performed by the core network side device, the method further includes the following operations. The core network side device receives the key request message from the target service device, here, the key request message carries the identification information.

Manners of calculating the first key at the core network side should be the same as those of the second device, and will not be described repeatedly.

In processing performed by the core network side device, the method further includes the following operations. The core network side device sends the ninth response message to the target service device, here, the ninth response message is in response to the key request message, the ninth response message carries the first key, and the first key is used for communication between the second device and the target service device.

It should be pointed out that the ninth response message may further carry a validity period of the first key. A specific duration of the validity period of the first key is not limited in this embodiment.

According to the above solutions, both the second device and the target service device may obtain the first key, and then in the process of the second device communicating with the target service device, an integrity protection key and an encryption key may be further derived based on the first key; or, the target service device and the first device further calculate the second key based on the first key and the second shared key, and derive the integrity protection key and the encryption key based on the second key. Manners of deriving the integrity protection key and the encryption key based on the first key are not limited in this embodiment, and similarly, manners of deriving the integrity protection key and the encryption key based on the second key are not limited in this embodiment, either.

With reference to FIG. 10, the following example is taken: the second device is a Tag (that is, any Tag), the target service device is a NAF, and the core network side device is specifically a first core network device BSF, the above communication method is exemplarily explained, the above communication method includes the following operations S1001 to S1005.

In operation 1001, the Tag sends a communication request to the NAF, here, the communication request includes B-TID or B-KID. The communication request may be the sixth request message in the foregoing embodiments.

In operation 1002, the NAF sends a key request to the BSF, here, the key request includes B-TID or B-KID. The key request is the key request message in the foregoing embodiments.

In operation 1003, the BSF generates a first key Ks_NAF = fks(NAF ID, B-TID/B-KID), and returns a key response carrying Ks_NAF and a validity period of the key to the NAF. The key response may be the ninth response message in the foregoing embodiments.

In operation 1004, the NAF returns a communication response to the Tag. The communication response may be the foregoing sixth response message.

Optionally, the operation 1005 may also be performed, in which the Tag sends a response to the NAF, to indicate that the first key is generated successfully.

The Tag may generate the first key Ks_NAF before the operation 1001 is performed, or may generate the first key Ks_NAF after the operation 1004 is performed and before the operation 1005 is performed, which is not limited in this embodiment.

In some possible implementations, security agreement may also be performed between the second device and the target service device.

In processing performed by the second device, the method further includes one: the second device reports security capability information to the target service device, here, the security capability information is configured to indicate one or more security algorithms supported by the second device, or the security capability information is configured to indicate a target security algorithm specified by the second device; or, the second device reports the security capability information to the core network side device.

Correspondingly, in processing performed by the target service device, the method further includes one of: the target service device receives the security capability information from the second device, here, the security capability information is configured to indicate the one or more security algorithms supported by the second device, or the security capability information is configured to indicate the target security algorithm specified by the second device; or, the target service device receives the security capability information from the core network side device.

If the core network side device receives the security capability information, the security capability information of the second device may be further carried in the ninth response message. Correspondingly, as to the target service device receiving the security capability information from the core network side device, it may mean that: the target service device receives the ninth response message from the core network side device, here, the ninth response message further carries the security capability information.

The foregoing security capability information may be carried in any information and/or message sent by the foregoing second device to the target service device.

Optionally, the security capability information may be carried in the fifth request message. Optionally, the security capability information may be sent simultaneously with the second information, for example, the second information may include the security capability information, or the second device takes the second information and the security capability information as information elements, and carries them in the same message. Optionally, the security capability information may also be carried in the foregoing sixth request message. It should be understood that this is only an exemplary explanation, and in other examples, the security capability information may also be carried by other messages or information, which is not exhaustively listed in this embodiment.

Optionally, the above security capability information may be configured to indicate one or more security algorithms supported by the second device, that is, the security capability information may include all security algorithms supported by the second device, or the security capability information may include preferred security algorithms supported by the second device, or the like. Explanations of the security capability information are the same as those in the foregoing embodiments and will not be elaborated.

In this case, processing performed by the target service device may further include that: the target service device sends security algorithm indication information to the second device, here, the security algorithm indication information is configured to indicate a target security algorithm. Correspondingly, processing performed by the second device may further include that: the second device receives the security algorithm indication information from the target service device, here, the security algorithm indication information is configured to indicate the target security algorithm. The security algorithm indication information may include name and/or number and/or ID of the target security algorithm, and/or the like. Explanations of the security algorithm indication information are the same as those in the foregoing embodiments and will not be elaborated. Manners of selecting the target security algorithm by the target service device are the same as manners of selecting the target security algorithm by the first device in the foregoing embodiments, and will not be described repeatedly.

Optionally, the above security capability information may be configured to indicate the target security algorithm specified by the second device.

In this case, processing performed by the target service device may include that: in case that the target service device itself supports the target security algorithm, the target service device directly uses the target security algorithm. Furthermore, processing performed by the target service device may further include: if the target service device does not support the target security algorithm, the target service device sends indication information of failure of security algorithm agreement to the second device. The indication information of failure of security algorithm agreement may also be carried in any information or message sent by the first device to the second device.

For example, the second device is a Tag, and the target service device is an NAF. Reporting of security capability of the Tag and the selected security algorithm is that: the Tag may carry them in a bootstrapping initial process, an uplink message of lightweight bootstrapping authentication (such as the operation 901 and the operation 907 in FIG. 9), and a communication request message to the NAF (such as the operation 1001 in FIG. 10). The BSF may carry the security capability of the Tag and the selected security algorithm when the NAF requests a key, and return them to the NAF in a response message, such as the operation 1003 in FIG. 10. After receiving the security capability of the Tag, the NAF selects a security algorithm that can be supported based on its own security capability; or checks, based on the security algorithm selected by the Tag, whether the NAF supports the security algorithm. If the security algorithm cannot be supported, the NAF selects a security algorithm that can be supported in the security capability of the Tag; otherwise, the NAF will return an indication of failure of agreement. If the security algorithm is successfully determined, the NAF returns the security algorithm (that is, the target security algorithm) selected based on the security capability of the Tag (resistance to downgrade attacks) to the Tag; and this parameter may be carried in the operation 1004 of FIG. 10. Alternatively, considering low security and computing capabilities of the Tag, the Tag may directly report the security algorithm supported by it to the network side (that is, the Tag may directly specify the target security algorithm).

In some possible embodiments, explanations of the target security algorithm are the same as those in the foregoing embodiments and will not be elaborated.

Optionally, the second device may directly generate the foregoing first key after completing the authentication.

After obtaining the first key, the second device may use the first key to derive a lower-level key as the integrity protection key, and perform integrity protection for the message sent by the second device. Furthermore, the target service device may perform integrity verification when the target service device receives the message carrying the second information. For example, the second device is a Tag, and after generating the key Ks_NAF, the Tag may enable integrity protection by using Ks_NAF or a lower-level key derived from Ks_NAF. In this case, an MIC message integrity verification code may be included in the response message when the response message is sent in the operation 1001 of FIG. 10.

Before obtaining the first key, the target service device may send the integrity-protected message to the core network side device, and the core network side device performs integrity verification. In this case, if the integrity-protected message received by the target service device further carries the security capability information of the second device, the target service device may select the target security algorithm, and report the security capability information of the second device, the target security algorithm and the integrity verification code to the core network side device simultaneously. For example, the target service device (NAF) sends the message sent by the Tag and MIC carried by the message to the BSF/A-NF to verify integrity. If the message further carries security capability of the Tag, the target service device may further select the target security algorithm, and report the security capability of the Tag and the selected target security algorithm to the BSF/A-NF (that is, the core network side device).

Alternatively, after receiving the first key, the target service device may also perform integrity verification on the message sent by the second device. For example, after receiving Ks_NAF returned by the BSF (that is, the core network side device), the NAF may verify integrity of the message based on the security algorithm selected by the Tag. Integrity protection and encryption protection may be enabled after successfully verifying security of any message carrying the integrity verification code sent by the second device. Correspondingly, the second device such as the Tag may enable encryption protection after receiving the message carrying the integrity verification code and successfully checking integrity thereof.

Optionally, the second device may calculate the first key after receiving the sixth response message.

After receiving the first key, the target service device may derive a lower-level encryption key and/or integrity protection key based on the first key and perform integrity protection. For example, the target service device may perform integrity protection for the sixth response message, that is, carry the integrity protection code in the sixth response message. Correspondingly, after receiving the sixth response message, the second device may calculate the first key to derive a lower-level encryption key and/or integrity protection key based on the first key, and perform integrity verification on the sixth response message. If verification is successful, the second device may send a response to the target service device. Correspondingly, after receiving the response, the target service device determines that the integrity verification is successful and enables encryption protection.

For example, after receiving Ks_NAF, the NAF generates a lower-level encryption key and integrity protection key based on Ks_NAF, and uses integrity protection for the communication response (such as the operation 1004 in FIG. 10). After receiving the communication response including MIC sent by the NAF (the operation 1004 in FIG. 10), the Tag generates the key Ks_NAF as well as a lower-level encryption key and integrity protection key, verifies the MIC by using the integrity protection key, enables encryption and integrity protection after verification is successful, and returns a response message. After receiving the response message, the NAF checks integrity successfully, and may enable encryption protection.

In some possible implementations, processing performed by the second device may include that: the second device sends a seventh request message to the target service device, here, the seventh request message is configured to request authentication, and the seventh request message carries a first ID of the second device.

The method further includes the following operations. The second device receives an eighth response message from the target service device, here, the eighth response message is configured to indicate successful authentication of the second device, the eighth response message includes the identification information, and the identification information is related to at least one of: the second ID of the second device, the first ID of the second device, or the ID of the core network side device.

In processing performed by the target service device, the method further includes the following operations. The target service device receives the seventh request message sent by the second device, here, the seventh request message is configured to request authentication, and the seventh request message carries the first ID of the second device.

Further, the method further includes the following operations. The target service device sends an eighth request message to the core network side device, here, the eighth request message is configured to request authentication, the eighth request message carries a security credential and the second ID of the second device, the security credential includes at least one of a first shared key, relevant information of the first shared key, or a first intermediate key, the first shared key is shared between the second device and the target service device, and the first intermediate key is obtained based on the first shared key.

Processing performed by the core network side device may include that: the core network side device receives the eighth request message sent by the target service device, here, the eighth request message is configured to request authentication, the eighth request message carries the security credential and the second ID of the second device, the security credential includes at least one of the first shared key, the relevant information of the first shared key, or the first intermediate key, and the first intermediate key is obtained based on the first shared key.

Contents that may carried by the seventh request message are the same as contents that may carried by the first request message in the foregoing embodiments, and will not be described repeatedly. The second ID of the second device, the first ID of the second device, and manners of anonymously processing the second ID by the second device are the same as those in the foregoing embodiments, and will not be elaborated in this embodiment.

After receiving the seventh request message, the target service device may perform authorization management for the second device. For example, the target service device obtains the second ID of the second device, and checks whether the second device is authorized based on the second ID of the second device.

As to the target service device obtaining the second ID of the second device, it may include that: the target service device obtains the first ID of the second device from the seventh request message, and de-anonymizes the first ID of the second device to obtain the second ID of the second device. The process of de-anonymization is the same as that in the foregoing embodiments and is not described repeatedly.

The target service device further generates the security credential. Explanations of the security credential are the same as those in the foregoing embodiments and will not be elaborated.

Authentication type indication information may also be added to the eighth request message sent by the target service device. The authentication type indication information is configured to indicate an authentication type corresponding to the second device. Detailed explanations on the authentication type indication information are the same as those in the foregoing embodiments and will not be described repeatedly.

After receiving the eighth request message, the core network side device may determine whether the preset condition is met based on the subscription credential of the first device and the subscription credential of the second device. If the preset condition is met, the core network side device determines to authorize the first device and the second device to use the target service. Specific processes thereof are the same as those in the foregoing embodiments and will not be elaborated.

Further, if the core network side device determines to authorize the first device and the second device to use the target service, the core network side device may perform subsequent authentication processes on the second device. Processing performed by the core network side device may further include at least one of: the core network side device calculates the first message authentication code based on the first shared key, the first random number and a first authentication parameter in a first calculation manner, here, the first authentication parameter includes at least one of: a second shared key, a second random number, or a third random number; the core network side device calculates the first message authentication code based on a first intermediate key, the first random number and the first authentication parameter in the first calculation manner, here, the first intermediate key is related to the first shared key; the core network side device calculates the second response based on the first shared key, the first random number and a second authentication parameter in a second calculation manner, here, the second authentication parameter includes at least one of the second shared key, the second random number, or the third random number, the first calculation manner is different from the second calculation manner, and/or the first authentication parameter is at least partially different from the second authentication parameter; or, the core network side device calculates the second response based on the first intermediate key, the first random number and the second authentication parameter in the second calculation manner.

Detailed explanations on calculating the first message authentication code and calculating the second response by the core network side device are the same as those in the foregoing embodiments and will not be elaborated.

After obtaining the first message authentication code and the second response, the core network side device may use the first message authentication code and the second response as an AV. Explanations of the AV are also the same as those in the foregoing embodiments and will not be elaborated.

After completing the above processing, the core network side device sends the above first information to the second device. Correspondingly, the second device receives the first information from the core network side device.

Further, after receiving the first information, the second device calculates the second message authentication code based on the first shared key, which may specifically include one of: the second device calculates the second message authentication code based on the first shared key, the first random number and a first authentication parameter in a first calculation manner, here, the first authentication parameter includes at least one of a second shared key, a second random number, or a third random number; or, the second device calculates a first intermediate key based on the first shared key, and calculates the second message authentication code based on the first intermediate key, the first random number and the first authentication parameter in the first calculation manner.

The second random number is shared between the second device and the target service device. In this embodiment, the second random number may be shared between the second device and the core network side device. And/or, the second shared key is shared between the second device and the first device. And/or, the third random number is configured, or the third random number is shared between the second device and the target service device. For example, if the third random number is configured, it may mean that the third random number is generated by the target service device and configured to the second device, and in this case, the foregoing first information may further include relevant information of the third random number and/or the third random number. Explanations on the relevant information of the third random number are the same as those in the foregoing embodiments and will not be described repeatedly.

In this implementation, manners of calculating the second message authentication code by the second device should be the same as manners of calculating the first message authentication code by the core network side device, which will not be elaborated.

In case that the second message authentication code is the same as the first message authentication code, the second device may determine that the second device successfully authenticates the core network side device. After determining that the second device successfully authenticates the core network side device, it may further include that: the second device calculates a first response based on the first shared key, here, the first response is used by the core network side device to authenticate the second device; and the second device sends second information to the core network side device, here, the second information includes the first response.

The operation of calculating, by the second device, the first response based on the first shared key may include one of: the second device calculates the first response based on the first shared key, the first random number and a second authentication parameter in a second calculation manner, here, the second authentication parameter includes at least one of the second shared key, the second random number, or the third random number, the first calculation manner is different from the second calculation manner, and/or the first authentication parameter is at least partially different from the second authentication parameter; or, the second device calculates the first intermediate key based on the first shared key, and calculates the first response based on the first intermediate key, the first random number and the second authentication parameter in the second calculation manner.

Explanations on "the first calculation manner is different from the second calculation manner, and/or the first authentication parameter is at least partially different from the second authentication parameter" are the same as explanations in the foregoing embodiments and will not be elaborated. In this implementation, processing performed by the second device to calculate the first response should also be the same as those performed by the core network side device and will not be elaborated.

Processing performed by the second device to send the second information to the core network side device and processing performed by the core network side device to receive the second information from the second device are the same as those in the foregoing embodiments and will not be repeatedly described here.

After the core network side device successfully authenticates the second device, the method further includes at least one of: the core network side device sends a tenth response message to the target service device, here, the tenth response message is configured to indicate successful authentication of the second device, the tenth response message carries the identification information and the first key, the identification information is related to at least one of the second ID of the second device, the first ID of the second device, an ID of the first device, or the ID of the core network side device, the first key is used for communication between the second device and the target service device, and/or the first key is used for communication between the first device and the second device, and the first device is configured to transmit data between the second device and the target service device.

Correspondingly, the operation of receiving, by the target service device, the first key sent by the core network side device includes that: the target service device receives the tenth response message from the core network side device, here, the tenth response message is configured to indicate the successful authentication of the second device, the tenth response message carries the identification information and the first key, the identification information is related to at least one of the second ID of the second device, the first ID of the second device, the ID of the first device, or the ID of the core network side device, the first key is used for communication between the second device and the target service device, or the first key is used for communication between the first device and the second device, and the first device is configured to transmit data between the second device and the target service device. In this implementation, the first key is used for communication between the target service device and the second device.

Manners of obtaining the identification information by the core network side device are the same as those in the foregoing embodiments and will not be elaborated.

In this implementation, the second device may calculate the first key by itself. For example, the second device may calculate the first key, in case of determining that the first message authentication code is the same as the second message authentication code. Alternatively, the second device may calculate the first key after receiving the eighth response message.

The operation of calculating, by the second device, the first key based on the first shared key and the ID of the target service device includes that: the second device calculates the first key based on the first shared key, the ID of the target service device and a third authentication parameter, here, the third authentication parameter includes at least one of: a second shared key, a second random number, a third random number, the second ID of the second device, the ID of the core network side device, the ID of the first device, or the identification information.

Optionally, the process of the second device calculating the first key based on the first shared key, the ID of the target service device and the third authentication parameter is the same as that in the foregoing embodiments, and difference there-between is only that the ID of the target service device may be added to the third authentication parameter, the ID of the target service device may also be added to the fourth authentication parameter, and the ID of the first device may not be included in the third authentication parameter and the fourth authentication parameter. The fourth authentication parameter differs from the foregoing embodiments only in that: the fourth authentication parameter is added with the ID of the target service device, and does not use the ID of the first device. Specific calculation manners may be that: a NAF ID (that is, the ID of the target service device) is added to the formula of calculating the second intermediate key in the foregoing embodiments, and the ID of the first device is removed from that formula, such as Ks = fak(N1, N2, IDi, BSF ID, NAF ID), which will not be repeatedly described here. The above specific manners of calculating the first key are the same as those in the foregoing embodiments and will not be elaborated.

Optionally, the operation of calculating, by the second device, the first key based on the first shared key, the ID of the target service device and the third authentication parameter may include that: the second device calculates a first intermediate key based on the first shared key; the second device calculates a second intermediate key based on the first intermediate key and a fourth authentication parameter, here, the fourth authentication parameter includes at least one of the second shared key, the second random number, the third random number, the second ID of the second device, the ID of the core network side device, the ID of the first device, or the ID of the target service device; and the second device calculates the first key based on the second intermediate key, the identification information and the ID of the target service device.

Manners of calculating the first intermediate key based on the first shared key by the second device may be the same as manners of calculating the first intermediate key based on the first shared key by the target service device in the foregoing embodiments, and will not be elaborated.

A possible example of calculating the second intermediate key based on the first intermediate key and the fourth authentication parameter is that: the second intermediate key may be calculated by using the first intermediate key, the second shared key, the third random number, the second ID of the second device, the ID of the core network side device and the ID of the target service device, such as Ks = fkb(N1, N2, IDi, BSF ID, NAF ID), here, Ks may be the second intermediate key, kb represents the first intermediate key, N1 may be the second shared key, N2 is the third random number, Idi is the second ID of the second device, BSF ID is the ID of the core network side device (for example, the first core network device is the BSF), f may be any one of the above algorithms or functions in the third calculation manner, and NAF ID is the ID of the target service device. As to calculating the first key based on the second intermediate key, the identification information and the ID of the target service device, it may include that: the first key is calculated based on the second intermediate key, the identification information and the ID of the target service device in the first calculation manner. For example, it may be represented by the following formula: Ks_NAF = fks(NAF ID, B-TID), here, Ks_NAF represents the first key, f may be any one of the above algorithms or functions in the first calculation manner, Ks is the second intermediate key, NAF ID is the ID of the target service device, B-TID is the identification information, and the B-TID may also be replaced by B-KID. Manners of obtaining the identification information are the same as those in the foregoing embodiments and will not be described repeatedly.

Manners of calculating the first key by the core network side device should also be the same as the foregoing manners of calculating the first key by the second device, and difference there-between may be that it is unnecessary for the core network side device to calculate the first intermediate key, and the core network side device may directly perform the foregoing process of calculating the second intermediate key based on the first intermediate key and the fourth authentication parameter, and calculating the first key based on the second intermediate key, the identification information and the ID of the target service device. The remaining processes are the same as the foregoing processes performed by the second device, and thus will not be elaborated.

It should be pointed out that the eighth response message may further carry a validity period of the first key. The eighth response message may further include an updated second random number, and the eighth response message may further carry an MIC (or, referred to as an integrity verification code or an integrity protection code), the MIC may be obtained based on a lower-level key further derived from the first key, which is not exhaustively listed here.

It should also be pointed out that in some possible examples, the second intermediate key may be directly used as the first key, such as Ks_NAF = Ks.

The second device may also calculate a lower-level key based on the first key, calculate the integrity protection key and the encryption key, and/or the like, which will not be elaborated.

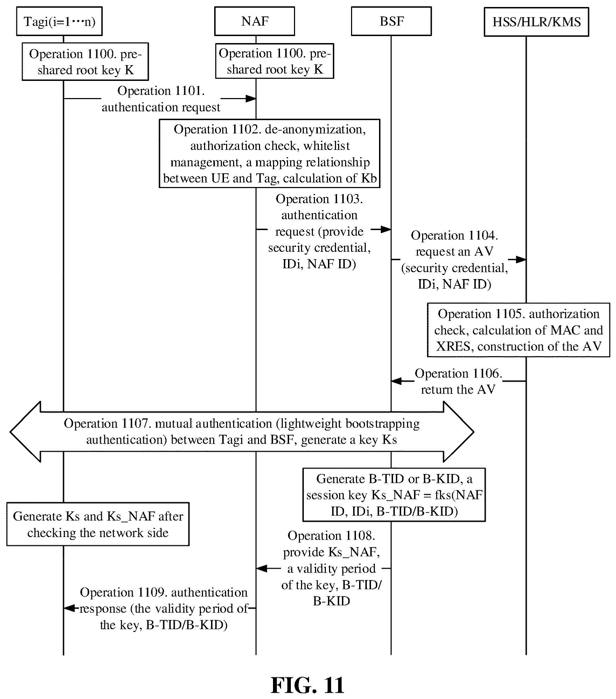

With reference to FIG. 11, the following example is taken: the second device is a Tag, the core network side device includes a first core network element such as BSF and/or A-NF (FIG. 11 represents the first core network element as BSF, for the sake of simplicity), the core network side device further includes a second core network element, the second core network element may include at least one of HSS, HLR or KMS (FIG. 11 represents the second core network element as HSS/HLR/KMS, for the sake of simplicity), and the target service device is an NAF, the communication method provided in the foregoing embodiments is explained.

In operation 1100, a root key K is pre-shared between the Tag and the A-IoT application server NAF (or, may be represented as AF). The root key is the foregoing first shared key.

In operation 1101, the Tag sends a request message (an authentication request or a communication request) to the NAF (the proxy may be a UE, an IAB node or a device in the access network, and this example is explained by taking the proxy being the UE as an example), where the request message includes an anonymously processed identity identifier DIDi of the Tag. The request message is the seventh request message in the foregoing embodiments. N1 is a random number pre-shared between the Tag and the NAF, and after a security context of the Tag is established, a new random number may be sent by the NAF to the Tag to update the pseudonym DIDi, and the pseudonym is generated as follows: DIDi = IDi⊕N1.

In operation 1102, the NAF performs at least one of: de-anonymization, authorization check, whitelist management, or calculation of Kb (that is, the foregoing first intermediate key).

Optionally, the NAF performs de-anonymization through IDi = DIDi⊕N1 or IDi = fn1(DIDi) based on N1, and checks whether the Tag is authorized. If the Tag is authorized, the NAF may manage a whitelist of the Tag.

In operation 1103, the NAF provides a security credential to the BSF. Specifically, the NAF may provide the root key K or K∥N1 or K∥N1∥N2 or K∥N2; or provide a processed key Kb or Kb∥N2 (Kb = K⊕N1) or Kb||N1 (Kb = K⊕N2). N2 (the third random number) may be shared between the Tag and the NAF, or may be selected by the NAF. Here, the security credential may be carried in the eighth request message in the foregoing embodiments and sent to the BSF. The message may include an ID that can indicate an authentication type, which may be based on an NAF ID, or based on an IDi, or based on an authentication type Auth_type_ID.

In operation 1104, the BSF requests an AV from HSS/HLR/KMS (or, AUSF may be further included). The sent authentication request includes the NAF ID, IDi, the security credential from the NAF, and the ID that can indicate the authentication type.

In operation 1105, the HSS/HLR/KMS (or, AUSF may be further included) performs at least one of: authorization check, calculation of MAC and XRES, or construction of the AV.

Optionally, subscription credentials of the Tag and the UE may be queried through the core network element (such as UDM), and the subscription credentials of the Tag and the UE are checked based on IDi and UE ID to determine whether they have right to use the A-IoT service.

Optionally, the authentication type confirmation may be that: it is determined that the authentication type is A-IoT authentication, based on the ID that can indicate the authentication type.

Optionally, calculation of the AV is that: if the root key K or K∥N1 or K∥N1∥N2 is received, a random number RAND is selected, AK = fk(RAND) or AK = K⊕N1 and MAC/XRES = fk(RAND, N1, N2) are calculated, then AV = RAND∥AK∥MAC∥XRES; if Kb or Kb∥N1/N2 is received, and MAC/XRES = fkb(RAND) or fkb(RAND, N1/N2), then AV = RAND∥MAC∥XRES; here, the functions f may be functions f1 to f5 defined by 3GPP, or KDF (HMAC-SHA256), or other lightweight functions.

In operation 1106, the HSS/HLR/KMS returns the AV to the BSF. The AV may include IDi, BSF ID and NAF ID.

In operation 1107, the BSF performs lightweight bootstrapping authentication with the Tag, and forwards corresponding authentication messages through the proxy.

This operation may include that: the BSF returns an authentication response to the Tag, where the authentication response includes RAND and MAC, may include AK⊕N2 or Kb⊕N2 (only applicable to a case where N2 is selected by the NAF and is securely sent), and may include BSF ID; the Tag verifies the network side by calculating and verifying MAC, and calculates RES and Ks = fak(N1, N2, IDi, BSF ID, NAF ID) after verification is successful; the Tag sends response information to the BSF, where the response information includes RES; and the BSF verifies the Tag based on comparison of RES with XRES, calculates Ks = fak/kb(N1, N2, IDi, BSF ID, NAF ID) after verification is successful, and generates B-TID = DIDi∥BSF ID or B-KID = fks(IDi)∥BSF ID to prevent propagation of B-TID on the air interface.

In operation 1108, the BSF provides the NAF with Ks_NAF = fks(NAF ID, IDi, B-TID/B-KID) (or Ks_NAF = Ks) and a validity period of the key, and a newly selected random number N1' may be included, which is used by the Tag to update the pseudonym. That is, the BSF sends the tenth response message to the NAF.

In operation 1109, the NAF returns a successful response to the Tag, where the successful response includes B-TID or B-KID, the validity period of the key, and may include the newly selected random number N1' and an MIC (integrity protection or integrity protection and encryption protection may be performed for the message by using the key Ks_NAF, Ku1 and a derived lower-level key). The successful response may be the eighth response message in the foregoing embodiments.

Through the above process, a shared key (such as the foregoing first key) may be generated for the second device and the target service device. In L3, there may be only a security context between the target service device and the second device; and the target service device and the second device may obtain the shared first key. In case of L2, there may be both a security context between the target service device and the second device and a NAS/AS security context of the second device. In processing performed by the second device to establish the NAS/AS security context, after the second device performs the solutions provided in the foregoing embodiments, both the core network side device and the second device may obtain the second intermediate key Ks, and may use the second intermediate key as a shared key. The core network side device may derive the NAS security context based on the second intermediate key, where establishment of the NAS security context may refer to a 5G security mechanism, which is not exhaustively listed in this embodiment. The core network side device may also provide the second intermediate key to the access network device, such that the access network device derives the AS security context by using the second intermediate key.

For example, the second device is a Tag, and the core network side device specifically includes a first core network device and a third core network device. The first core network device may be a BSF, the third core network device may be an AMF, and the BSF and the Tag generates a shared second intermediate key Ks. The BSF provides the key Ks to the AMF to derive the NAS security context, here, the NAS security context may refer to an existing 5G security mechanism, that is, Ks = Kamf, to derive Knas-int (that is, a NAS integrity protection key) and Knas-enc (that is, a NAS encryption key (or, referred to as a security key)). For another example, the access network device is specifically a base station (such as gNB). The BSF provides the key Ks to the gNB to derive the AS security context, here, the AS security context may refer to an existing 5G security mechanism, that is, Ks = Kgnb, and then the gNB derives a lower-level key based on Kgnb.

In some possible implementations, security agreement may also be performed between the second device and the target service device.

Processing performed by the second device may further include that: the second device reports security capability information to the target service device. Correspondingly, in processing performed by the target service device, the method further includes one of: the target service device receives the security capability information from the second device, here, the security capability information is configured to indicate one or more security algorithms supported by the second device, or the security capability information is configured to indicate a target security algorithm specified by the second device; or, the target service device receives the security capability information from the core network side device.

If the core network side device receives the security capability information, the security capability information of the second device may be further carried in the ninth response message. Correspondingly, as to the target service device receiving the security capability information from the core network side device, it may mean that: the target service device receives the ninth response message from the core network side device, here, the ninth response message further carries the security capability information.

The foregoing security capability information may be carried in any information and/or message sent by the second device to the target service device.

Optionally, the security capability information may be carried in the seventh request message. Optionally, the security capability information may be sent simultaneously with the second information, for example, the second information may include the security capability information, or the second device takes the second information and the security capability information as information elements, and carries them in the same message. It should be understood that this is only an exemplary explanation, and in other examples, the security capability information may also be carried by other messages or information, which is not exhaustively listed in this embodiment.

The above security capability information may be configured to indicate the one or more security algorithms supported by the second device, that is, the security capability information may include all security algorithms supported by the second device, or the security capability information may include preferred security algorithms supported by the second device, or the like. Explanations of the security capability information are the same as those in the foregoing embodiments and will not be elaborated. In this case, processing performed by the target service device may further include that: the target service device sends security algorithm indication information to the second device, here, the security algorithm indication information is configured to indicate a target security algorithm. Correspondingly, processing performed by the second device may further include that: the second device receives the security algorithm indication information from the target service device, here, the security algorithm indication information is configured to indicate the target security algorithm. Manners of selecting the target security algorithm by the target service device and explanations of the target security algorithm are the same as those in the foregoing embodiments and will not be described repeatedly.

Optionally, the above security capability information may be configured to indicate the target security algorithm specified by the second device. In this case, processing performed by the target service device may include that: in case that the target service device itself supports the target security algorithm, the target service device directly uses the target security algorithm. Furthermore, processing performed by the target service device may further include: if the target service device does not support the target security algorithm, the target service device sends indication information indicating security algorithm agreement failure to the second device. The indication information indicating security algorithm agreement failure may also be carried in any information or message sent by the first device to the second device.

For example, the second device is a Tag, and the target service device is an NAF. Reporting of security capability of the Tag and the selected security algorithm is that: the Tag may carry them in a bootstrapping initial process and an uplink message of lightweight bootstrapping authentication. After receiving the security capability of the Tag, the NAF selects a security algorithm that can be supported based on its own security capability; or checks, based on the security algorithm selected by the Tag, whether the NAF itself supports the security algorithm. If the security algorithm cannot be supported, the NAF selects a security algorithm that can be supported in the security capability of the Tag; otherwise, the NAF will return an indication of agreement failure. If the security algorithm is successfully determined, the NAF returns the security algorithm (that is, the target security algorithm) selected based on the security capability of the Tag (resistance to downgrade attacks) to the Tag; where this parameter may be carried in any one of a downlink message in the authentication process, authentication feedback to the Tag, or the communication response. Alternatively, considering low security and computing capabilities of the Tag, the Tag may directly report the security algorithm supported by it to the network side (that is, the Tag may directly specify the target security algorithm).

In some possible embodiments, the target security algorithm may be obtained by both the second device and the target service device. Relevant explanations on each device using the target security algorithm are the same as those in the foregoing embodiments and will not be elaborated.

For example, the second device is a Tag, the Tag directly generates Ks_NAF after completing the authentication, and enables integrity protection by using a lower-level key derived from Ks_NAF. The target service device sends the message sent by the second device and MIC carried by the message to the BSF/A-NF for integrity verification. If the message further carries the security capability of the Tag, the target service device may further select the target security algorithm, and report the security capability of the Tag and the selected target security algorithm to the BSF/A-NF (that is, the core network side device). Alternatively, after receiving the key Ks_NAF (the first key) returned by the BSF (that is, the core network side device), the target service device may verify integrity of the message based on the security algorithm selected by the Tag. Encryption protection may be enabled after security of any message carrying the integrity verification code is successfully verified. Correspondingly, after receiving the message carrying the integrity verification code, the Tag checks integrity successfully, and then may enable encryption protection.

For example, after receiving the eighth response message (the operation 1109 of FIG. 11), the Tag may calculate Ks_NAF, generates a lower-level encryption key and integrity protection key based on Ks_NAF, and uses integrity protection for the authentication success response; after receiving the communication response including MIC sent by the target service device, the Tag generates the key Ks_NAF or Ku1 as well as a lower-level encryption key and integrity protection key, verifies the MIC by using the integrity protection key, enables encryption and integrity protection after verification is successful, and returns response information to the target service device. After receiving the response information, the target service device checks integrity successfully, and then may enable encryption protection.

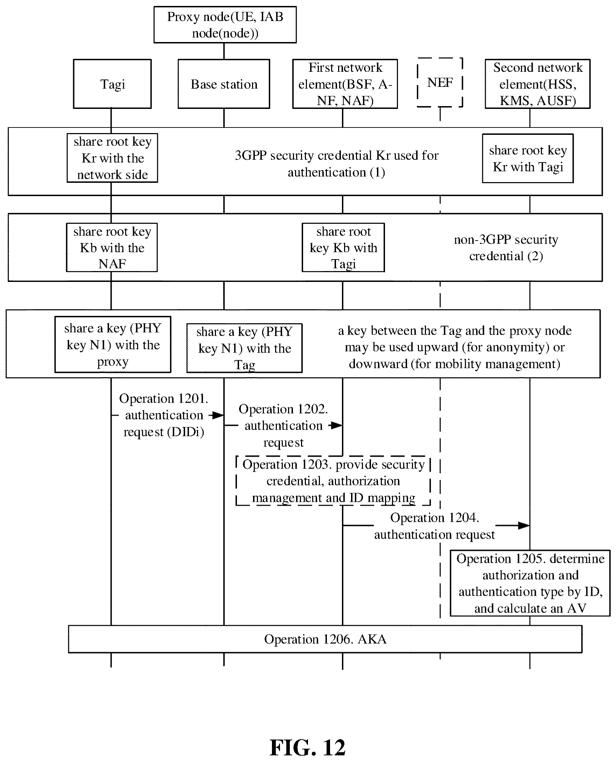

With reference to FIG. 12, the following example is taken: the first device is represented as a proxy (including any one of a UE, an IAB node or a base station), the second device is a Tagi, the core network side device includes a first network element such as BSF, A-NF, NAF, and the core network side device further includes a second core network element, where the second network element may include at least one of HSS, KMS or AUSF; furthermore, the core network side device also illustrates an NEF network element, the foregoing various communication methods provided in this embodiment are exemplarily explained. First, according to differences in zero-power architectures or Tag protocol stack designs, they are divided into the following two types.

Indirect Mode: the Tag is not necessarily required to support an application layer protocol, the Tag is connected to the first network element (BSF, A-NF, NAF/AF) through a proxy, and the proxy helps to forward interactive authentication information, here, the proxy may be the UE or the IAB node. Alternatively, the Tag is directly connected to the base station and accesses the network through the base station to perform AKA. The proxy or the base station may help the Tag connect to the first network element, with the authentication information carried over a HTTP message or NAS message of the proxy. Direct Mode: the Tag supports the application layer protocol (a HTTP protocol), or the Tag can use functions at a MAC layer or PHY layer to support an upper layer protocol (such as an application layer), thereby supporting functions of the application layer protocol (HTTP protocol). Furthermore, the Tag needs to pre-store a token "3gpp-gba-tmpi" for accessing the BSF. The Tag is connected to the BSF or NAF through the application layer protocol.

Different connection modes of the Tag may include different embodiments respectively. (1) 3GPP security credentials are used, where Kr is used for authentication. That is, the root key Kr is shared between the Tag and an authentication and authorization network element (such as the second network element HSS/HLR, KMS, AUSF in FIG. 12). Furthermore, the authentication and authorization network element needs to manage authorization (based on subscription credentials) and may store authentication results (timestamp for authentication of the Tag, an ID of the Tag, an authentication manner of the Tag, and an ID of a security context of the Tag). (2) Security credentials provided by a third-party application server (i.e., non-3GPP security credentials) are used, where the root key Kb is shared between the Tag and the AF/NAF (the first network element), and the NAF needs to perform authorization management (based on the application layer). In a scenario involving a proxy UE, it needs to manage mapping between the UE and the Tag, and provide the security credential Kb to the authentication and authorization network element. (3) A key between the Tag and the proxy or the base station may be used upward (for anonymity) or downward (for mobility management), and the key N1 (which may be a physical layer key or a pre-shared symmetric key) has three usages: the key is used to protect the ID of the Tag in an uplink message of the Tag; the key is used for AKA: the network side calculates an AV and a shared key Ks; the key used for mobility management: a key is generated between the Tag and the proxy/base station based on Ks and N1, and then when there is a Tag using another proxy or base station to access to the network, the network side may skip an AKA process and directly generate a key based on an authentication result of the Tag.

The following important parameters are present in the AKA process for the Tag: the root key K (or, represented as Kr, Kb or the like as in FIG. 12), N1 and N2.

The root key K (or, represented as Kr, Kb or the like as in FIG. 12) may be a security credential between the Tag and the authentication and authorization network element or between the Tag and the third-party application server.

N1 may be a random number pre-shared between the Tag and the authentication and authorization network element or the third-party application server, or a key between the Tag and the proxy/base station;

N2 may be a random number pre-shared between the Tag and the authentication and authorization network element or the third-party application server, or may be selected by the authentication and authorization network element or the third-party application server (in this case, N2 needs to be securely sent to the Tag).

In an scenario where a relay node is present, different embodiments of key structures and mobility management manners are present for different relay types. The relay node is a L2 relay (that is, when messages are transmitted via the relay, the relay with only the L2 protocol stack is used, and a separate context is present between the Tag and the core network): there is hop-by-hop and end-to-end secure connections between the Tag and the network. The relay node is a L3 relay (that is, when messages are transmitted via the relay, the relay with the L3 protocol stack is used): the Tag only needs to implement a secure connection with the relay.

In FIG. 12, the following processing operations 1201 to 1206 are further illustrated. In operation 1201, the Tagi sends an authentication request (carrying DIDi) to the proxy node. In operation 1202, the proxy node sends an authentication request to the first network element. In operation 1203, the first network element provides a security credential, performs authorization management and ID mapping. In operation 1204, the first network element sends an authentication request to the second network element. In operation 1205, the second network element determines authorization and the authentication type by ID and calculates an AV. In operation 1206, the second network element and the Tagi perform AKA. Detailed processing of each of the above operations may correspond to at least one of the foregoing embodiments, and will not be repeatedly described here.

In some possible implementations, the first device and the second device may also perform authentication. In the above embodiments where the first device (such as the UE) needs to be used as the proxy, in order to prevent a malicious Tag (that is, the second device) from leveraging the first device (such as the UE) to launch a Distributed Denial of Service (DDOS) attack on the network, thereby affecting quality of the network, or prevent a malicious first device (such as the UE) from launching a middleman attack, thereby stealing communication data between the Tag (that is, the second device) and the network as well as a third-party application, or prevent authentication signaling of the Tag (that is, the second device) from being carried on a malicious UE, thereby resulting in unsuccessful AKA, the first device and the second device need to perform authentication in advance. Taking the first device being the UE and the second device being the tag as an example, authentication manners include at least one of: pairing, activation of the Tag by the UE, a Physical Unclonable Function (PUF), or physical layer authentication.

A length of any key provided as above in this embodiment is not limited. Furthermore, other parameters may also be introduced in the foregoing generation process of any key, such as the number (FC), the parameter length and/or the like, which are not exhaustively listed here.

Finally, explanations will be made in combination with relevant technologies.

The base station directly communicates with a zero-power terminal: the base station provides a wireless power supply signal and a trigger signal to the zero-power terminal. The wireless power supply signal is configured to provide energy to the zero-power terminal; and the trigger signal may carry control information sent to the zero-power terminal. The zero-power terminal transmits information to the base station in a backscattering manner.

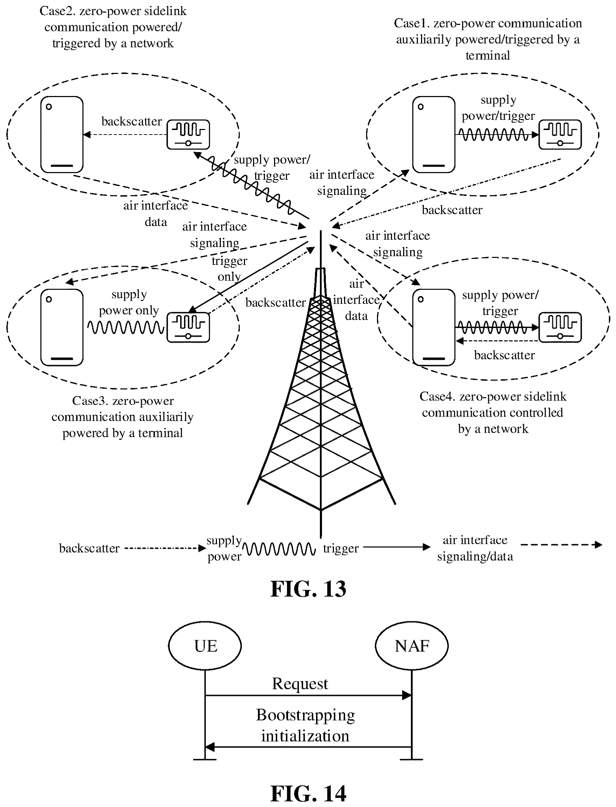

Hybrid zero-power communication system based on cellular and sidelink communications: in actual deployment of zero-power systems, zero-power communication systems based on cellular and sidelink communications may coexist flexibly or may be used in combination, to match more potential application scenarios. For example, as illustrated in FIG. 13, Case1 is a zero-power communication auxiliarily powered/triggered by an intelligent terminal, where the zero-power terminal is powered and triggered by the intelligent terminal in the network, and a backscattered signal from the zero-power terminal is received by the base station. Supplying power and trigger operations of the intelligent terminal may be controlled by the base station through air interface signaling. Case2 is a zero-power sidelink communication powered/triggered by a network, where the base station provides wireless power supply and sends trigger signaling to the zero-power terminal, a backscattered signal from the zero-power terminal is received by the intelligent terminal, to complete the sidelink communication. Furthermore, the intelligent terminal sends air interface data to the base station. Case3 is a zero-power communication auxiliarily powered by an intelligent terminal, where the intelligent terminal in the network provides auxiliary power supply to the zero-power terminal, and the base station sends trigger information to the zero-power terminal and receives a backscattered signal from the zero-power terminal. The process of the intelligent terminal providing auxiliary power supply to the zero-power terminal may be controlled by the base station through air interface signaling. Case 4 is a zero-power sidelink communication controlled by the network, where the intelligent terminal receives air interface signaling and data from the network, and the intelligent terminal supplies power to the zero-power terminal and triggers the zero-power terminal, and receives a backscattered signal from the zero-power terminal, to complete the sidelink communication.

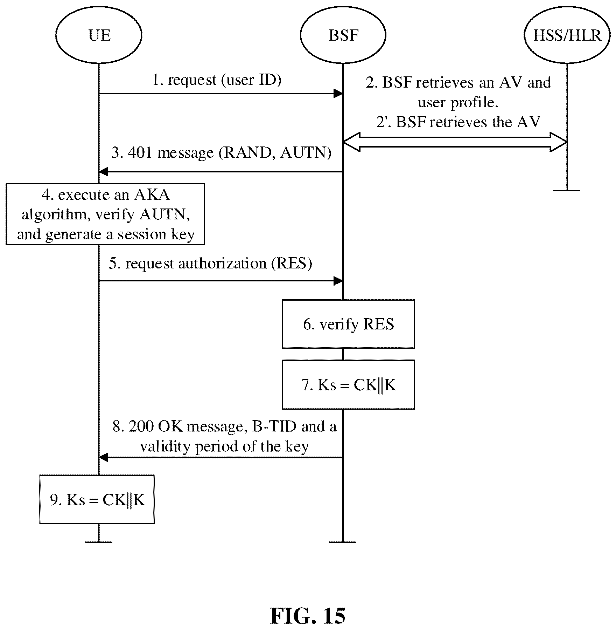

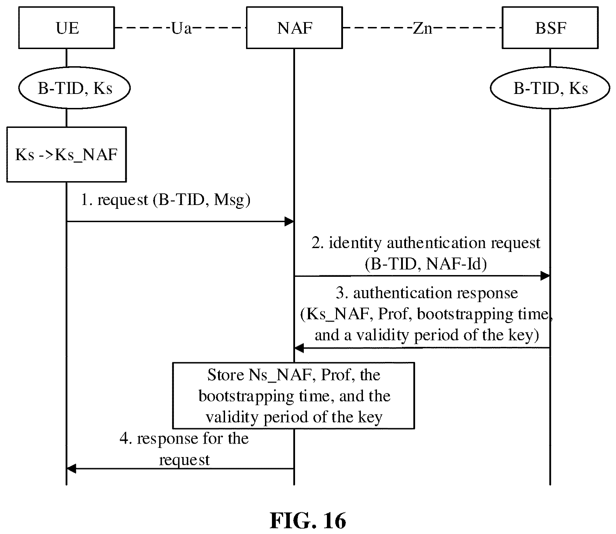

Generic Bootstrapping Architecture (GBA): when the UE needs to communicate with the NAF, the UE makes a GBA request first. Then, the UE and a BSF server perform a GBA mechanism to calculate a session key. After it is successful, the UE re-initiates a communication request to the NAF, and the NAF is connected to the BSF to perform authentication. Then, the NAF securely communicates with the UE by using a key derived from Ks. As illustrated in FIG. 14, the UE initiates a request to the NAF, and then the NAF controls the UE to perform bootstrapping initialization. The BSF may securely communicate with the HSS, and the BSF performs an AKA authentication process with the UE by contacting the HSS/HLR. After the authentication is completed, CK and IK generated by an AKA mechanism are concatenated as a shared key. The UE initiates an application request to the NAF by using B-TID assigned by the BSF and the negotiated Ks, and the NAF initiates an authentication request to the BSF. After the BSF successfully authenticates the UE, a session key for communication via a Ua interface is derived and sent to the NAF. Then, the NAF securely communicates with the UE. For example, as illustrated in FIG. 15, in operation 1, the UE sends a request to the BSF (the request carries a user ID); in operation 2, the BSF retrieves an AV and user profile from HSS/HLR (or in operation 2', the BSF retrieves the AV); in operation 3, the BSF returns a 401 message to the UE (the message carries a random number RAND and an authentication parameter AUTN); in operation 4, the UE executes an AKA algorithm, verifies AUTN, and generates a session key; in operation 5, the UE requests authorization from the BSF (the request carries RES); in operation 6, the BSF verifies the RES; in operation 7, the BSF calculates Ks = CK∥K; in operation 8, the BSF returns a 200 ok message to the UE, where the message carries B-TID and a validity period (or lifetime) of the key; in operation 9, the UE calculates Ks = CK∥K. As further illustrated in FIG. 16, the UE communicates with the NAF via the Ua interface, and the NAF communicates via a Zn interface. Specifically, after the UE and the BSF obtain B-TID and Ks, the UE generates Ks-NAF based on Ks. In operation 1, the UE sends a request to the NAF (the request carries the B-TID and Msg), here, Msg is a specific data set included in the request; in operation 2, the NAF sends an identity authentication request to the BSF (the request carries B-TID and NAF id); and in operation 3, the BSF sends an authentication response to the NAF (the response carries Ns_NAF, Prof, bootstrapping time, and a validity period of the key), here, Prof is a specific part of the user profile for a request, and the NAF stores Ns_NAF, Prof, the bootstrapping time and the validity period of the key; then operation 4 is performed, in which the NAF sends a response for the request to the UE. Furthermore, as illustrated in FIG. 16, the UE communicates with the NAF via the Ua interface, and the NAF communicates with the BSF via the Zn interface.

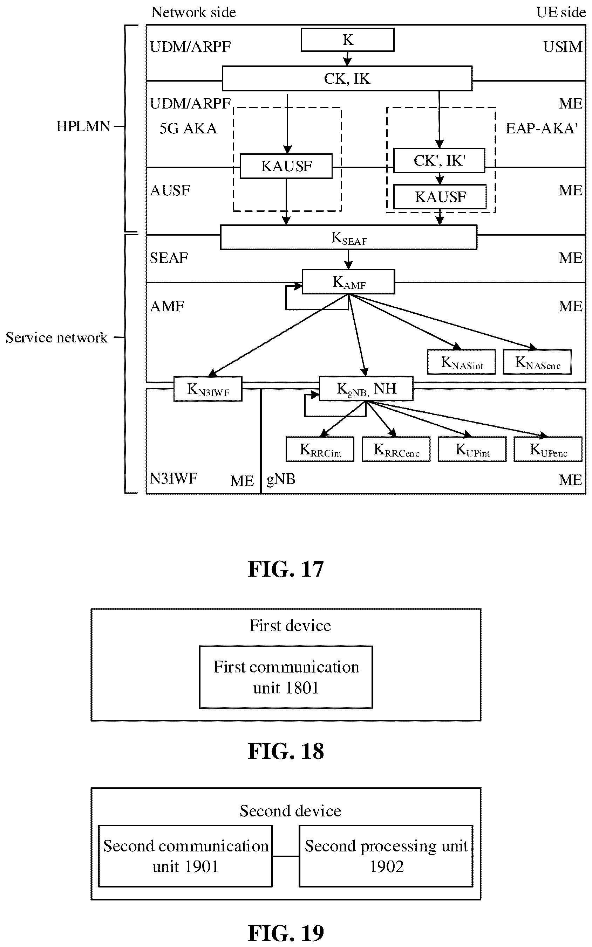

Derived key architectures of NAS and AS security contexts are illustrated in FIG. 17. In a Home Public Land Mobile Network (HPLMN), CK and IK are derived from K (the root key) in UDM/ARPF and Universal Subscriber Identity Module (USIM) of the UE; further, a KAUSF is derived based on CK and IK through a 5G AKA process in UDM/ARPF, and CK' and IK' are derived based on CK and IK through an EAP-AKA' process in ME, to derive KAUSF. In a service network, SEAF and Mobility Entity (ME) of the UE derive a KSEAF based on the KAUSF. Then, for the NAS security context, AMF and ME derive Kamf based on the KSEAF, to obtain lower-level derived keys Knasint and Knasenc as well as corresponding IDs of the keys; for the AS security context, gNB and ME of the UE derive KgNB and NH based on Kamf, to obtain lower-level derived keys Krrcint, Krrcenc, Kupint and Kupenc as well as corresponding IDs of the keys. Furthermore, as illustrated in FIG. 17, the ME of the UE and N3IWF of the service network may also derive KN3IWF based on Kamf.

Derivation of confidentiality and integrity protection keys: when the confidentiality protection key and the integrity protection key for secure communication are derived by using an upper-level key, calculation manners are as follows. When keys for NAS integrity and NAS encryption algorithm are derived from the key Kamf of the AMF and UE, or when encryption and integrity keys are derived from the KgNB of the gNB and UE, input parameters are as follows: FC = 0x69, P0 = algorithm type distinguisher, L0 = length of algorithm type distinguisher (i.e., 0x00 0x01), P1 = algorithm identity, L1 = length of algorithm identity (i.e., 0x00 0x01). Values of the input algorithm type distinguisher are different depending on different generated keys, which is not exhaustively listed. Values of the input algorithm identity are different depending on used algorithms. The encryption algorithm includes NIA1, NIA2 and NIA3, and the integrity protection algorithm includes EIA1, EIA2 and EIA3.

Through the above relevant technologies, it may be seen that security standards for BEST, MTC and NB-IoT oriented to the Internet of Things (IoT) are based on AKA mechanisms such as AKA, GBA, AKMA, and/or the like. This type of related art is not applicable to zero-power devices, and has disadvantages of high complexity of key architecture, interaction process and security calculation; for an application scenario where cellular and sideline communications are mixed, U2N relay security of an existing relay communication is not applicable to zero-power devices, since it has disadvantages of high complexity of PC5 security, U2N relay security key architecture, interaction process and security calculation; and the existing International Organization for Standardization (ISO) Radio Frequency Identification (RFID) security standard and Tag and Reader Air Interface Security (TRAIS) security standard support only AKA between the Tag and the Reader, and do not support AKA between the Tag and the network side. Based on characteristics that zero-power devices are battery-free and have ultra-low power consumption, extremely small size and cost, this embodiment designs AKA mechanisms for Tags of the zero-power devices for different zero-power device communication systems (cellular-based zero-power communication systems, and zero-power communication systems based on mixed cellular and sideline communications) respectively, to support mutual authentication between the Tag and the network side, and secure data transmission among the Tag, the network side, an application service provider and the proxy node. This solution may reduce security computing overhead and signaling interaction, and ensure authentication of zero-power devices and establishment of secure communications without compromising security. This embodiment is directed to lightweight AKA mechanisms for devices in different zero-power communication systems, supports mutual authentication between zero-power devices and the network side, security agreement and security mode commands between zero-power devices and the network side, and secure data transmission among zero-power devices, the network side, the application service provider and the UE.

It may be seen that according to the above solutions, the message authentication code from the core network side may be sent to the second device through the first device, such that the second device authenticates the core network side device. Moreover, the first message authentication code is generated based on the shared key of the second device, and thus the first device may obtain the first key, where the first key is used for communication between the first device and the second device when the first device is used as a relay or proxy device. In this way, the second device may obtain authentication-related information from the network side through the first device and obtain the key used for communication between the first device and the second device, to achieve data transmission between the second device and the target service device through the first device. Furthermore, in the above solutions, since the first message authentication code is generated based on the shared key of the second device, the second device may achieve authentication by using the shared key only, which reduces process complexity for the second device, and is especially applicable to devices with lower capabilities.

FIG. 18 is a schematic diagram of compositional structures of a first device according to an embodiment of the disclosure. The first device includes a first communication unit 1801.

The first communication unit 1801 is configured to: send first information from a core network side device to a second device, here, the first information includes a first message authentication code, the first message authentication code is related to a first shared key, the first shared key is shared between the second device and the core network side device and/or a target service device, and the first message authentication code is used by the second device to authenticate the core network side device; and receive a first key from the core network side device, here, the first key is used for communication between the first device and the second device, and the first device is configured to transmit data between the second device and the target service device.

The first communication unit is configured to send second information from the second device to the core network side device, the second information includes a first response, and the first response is used by the core network side device to authenticate the second device.

The first communication unit is configured to receive a first request message from the second device, the first request message is configured to request authentication, and the first request message carries a first ID of the second device.

The first communication unit is configured to send a second request message to the core network side device, the second request message is configured to request authentication, and the second request message carries the first ID of the second device and/or a second ID of the second device.

The first communication unit is configured to receive a first response message from the core network side device, the first response message is configured to indicate successful authentication of the second device, the first response message carries identification information, and the identification information is related to at least one of the second ID of the second device, the first ID of the second device, an ID of the first device, or an ID of the core network side device.

The first communication unit is configured to: forward a third request message sent by the second device to the target service device, here, the third request message is configured to request communication, and the third request message carries the identification information; receive a second response message from the core network side device, here, the second response message carries the first key; and send a third response message to the second device, here, the third response message is configured to indicate that the target service device obtains the first key.

The first communication unit is configured to send a fourth request message to the target service device, the fourth request message is configured to request authentication, and the fourth request message carries the first ID of the second device and/or the second ID of the second device.

The first communication unit is configured to receive a fourth response message from the core network side device, the fourth response message is configured to indicate successful authentication of the second device, the fourth response message carries identification information and the first key, and the identification information is related to at least one of the second ID of the second device, the first ID of the second device, an ID of the first device, or an ID of the core network side device.

The first communication unit is configured to send a fifth response message to the second device, the fifth response message is configured to indicate the successful authentication of the second device, and the fifth response message carries the identification information.

The first communication unit is configured to receive security capability information from the second device, the security capability information is configured to indicate one or more security algorithms supported by the second device, or the security capability information is configured to indicate a target security algorithm specified by the second device.

The first communication unit is configured to send security algorithm indication information to the second device, the security algorithm indication information is configured to indicate the target security algorithm.

The second device is one of an A-IoT device or a zero-power device; the first device includes at least one of a first terminal device or a first access network device; and the core network side device includes at least one of a BSF, an A-IoT network element, a HSS, a HLR, a KMS, or an AUSF.

FIG. 19 is a schematic diagram of compositional structures of a second device according to an embodiment of the disclosure. The second device includes a second communication unit 1901 and a second processing unit 1902.

The second communication unit 1901 is configured to receive first information from a core network side device, here, the first information includes a first message authentication code, the first message authentication code is related to a first shared key, the first shared key is shared between the second device and the core network side device and/or a target service device.

The second processing unit 1902 is configured to: calculate a second message authentication code based on the first shared key; and in case that the second message authentication code is the same as the first message authentication code, calculate a first key based on the first shared key and an ID of the target service device, here, the first key is used for communication between the second device and the target service device and/or a first device.

The second processing unit is configured to calculate a first response based on the first shared key, the first response is used by the core network side device to authenticate the second device.

The second communication unit is configured to send second information to the core network side device, the second information includes the first response.

The first information further includes a first random number, and the second processing unit is configured to: calculate the second message authentication code based on the first shared key, the first random number and a first authentication parameter in a first calculation manner, here, the first authentication parameter includes at least one of a second shared key, a second random number, or a third random number; and calculate a first intermediate key based on the first shared key; calculate the second message authentication code based on the first intermediate key, the first random number and the first authentication parameter in the first calculation manner.

The second processing unit is configured to perform one of: calculating the first response based on the first shared key, the first random number and a second authentication parameter in a second calculation manner, here, the second authentication parameter includes at least one of the second shared key, the second random number, or the third random number, the first calculation manner is different from the second calculation manner, and/or the first authentication parameter is at least partially different from the second authentication parameter; or calculating the first intermediate key based on the first shared key, and calculating the first response based on the first intermediate key, the first random number and the second authentication parameter in the second calculation manner.

The second processing unit is configured to calculate the first key based on the first shared key, the ID of the target service device and a third authentication parameter, the third authentication parameter includes at least one of a second shared key, a second random number, a third random number, a second ID of the second device, an ID of the core network side device, an ID of the first device, or identification information.

The second communication unit is configured to send a first request message to the first device, the first request message is configured to request authentication, and the first request message carries a first ID of the second device.

The second communication unit is configured to: receive the first information from the core network side device through the first device; and/or, send the second information to the core network side device through the first device.

The second communication unit is configured to receive a fifth response message from the first device, the fifth response message is configured to indicate successful authentication of the second device, the fifth response message carries the identification information, and the identification information is related to at least one of the second ID of the second device, the first ID of the second device, the ID of the first device, or the ID of the core network side device.

The second communication unit is configured to send a third request message to the target service device through the first device, the third request message is configured to request communication, and the third request message carries the identification information.

The second communication unit is configured to perform at least one of: receiving a third response message from the first device, here, the third response message is configured to indicate that the target service device obtains the first key; or receiving a sixth response message from the target service device, here, the sixth response message is configured to indicate that the target service device obtains the first key.

The second communication unit is configured to send security capability information to the first device, the security capability information is configured to indicate one or more security algorithms supported by the second device, or the security capability information is configured to indicate a target security algorithm specified by the second device.

The second communication unit is configured to receive security algorithm indication information from the first device, the security algorithm indication information is configured to indicate the target security algorithm.

The second communication unit is configured to: send a fifth request message to the core network side device, here, the fifth request message is configured to request authentication, and the fifth request message carries a first ID of the second device; and receive a seventh response message from the core network side device, here, the seventh response message is configured to indicate successful authentication of the second device, the seventh response message carries the identification information, and the identification information is related to at least one of the second ID of the second device, the first ID of the second device, or the ID of the core network side device.

The second communication unit is configured to: send a sixth request message to the target service device, here, the sixth request message is configured to request communication, and the sixth request message carries the identification information; and receive a sixth response message from the target service device, here, the sixth response message is configured to indicate that the target service device obtains the first key.

The second communication unit is configured to: send a seventh request message to the target service device, here, the seventh request message is configured to request authentication, and the seventh request message carries a first ID of the second device; and receive an eighth response message from the target service device, here, the eighth response message is configured to indicate successful authentication of the second device, the eighth response message includes the identification information, and the identification information is related to at least one of the second ID of the second device, the first ID of the second device, or the ID of the core network side device.

The second communication unit is configured to perform one of: reporting security capability information to the target service device, here, the security capability information is configured to indicate one or more security algorithms supported by the second device, or the security capability information is configured to indicate a target security algorithm specified by the second device; or reporting the security capability information to the core network side device.

The second communication unit is configured to receive security algorithm indication information from the target service device, the security algorithm indication information is configured to indicate a target security algorithm.

The target security algorithm includes a target integrity protection algorithm and/or a target encryption algorithm, the target integrity protection algorithm is used by the second device to calculate an integrity protection code for a sent message based on an integrity protection key and/or to verify integrity of a received message based on the integrity protection key, the target encryption algorithm is used by the second device to encrypt sent data based on an encryption key and/or to decrypt received data based on the encryption key, the integrity protection key is related to the first key, and the encryption key is related to the first key.

The second random number is shared between the second device and the core network side device and/or the target service device; and/or, the second shared key is shared between the second device and the first device; and/or, the third random number is configured, or the third random number is shared between the second device and the core network side device and/or the target service device.

The first device includes at least one of a first terminal device or a first access network device; the second device is one of an A-IoT device or a zero-power device; and the core network side device includes at least one of a BSF, an A-IoT network element, a HSS, a HLR, a KMS, or an AUSF.

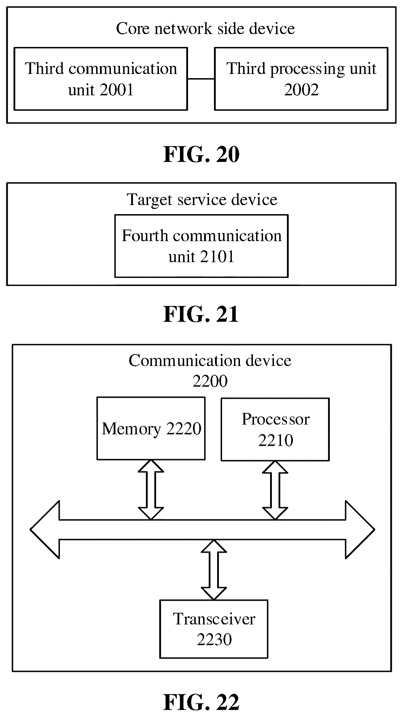

FIG. 20 is a schematic diagram of compositional structures of a core network side device according to an embodiment of the disclosure. The core network side device includes a third communication unit 2001.

The third communication unit 2001 is configured to: send first information to a second device, here, the first information includes a first message authentication code, the first message authentication code is related to a first shared key, the first shared key is shared between the second device and the core network side device and/or a target service device, and the first message authentication code is used by the second device to authenticate the core network device; and send a first key to the target service device and/or a first device, here, the first key is used for communication between the second device and the target service device or the first device, and the first device is configured to transmit data between the second device and the target service device.

In the schematic diagram of compositional structures of the core network side device illustrated in FIG. 20, the core network side device further includes a third processing unit 2002.

The third processing unit 2002 is configured to: in case that a first response is the same as a second response, determine that authentication of the second device is successful.

The third communication unit is configured to receive second information from the second device, here, the second information includes the first response.

The first information further includes a first random number, and the third processing unit is configured to perform at least one of: calculating the first message authentication code based on the first shared key, the first random number and a first authentication parameter in a first calculation manner, here, the first authentication parameter includes at least one of a second shared key, a second random number, or a third random number; calculating the first message authentication code based on a first intermediate key, the first random number and the first authentication parameter in the first calculation manner, here, the first intermediate key is related to the first shared key; calculating the second response based on the first shared key, the first random number and a second authentication parameter in a second calculation manner, here, the second authentication parameter includes at least one of the second shared key, the second random number, or the third random number, the first calculation manner is different from the second calculation manner, and/or the first authentication parameter is at least partially different from the second authentication parameter; or calculating the second response based on the first intermediate key, the first random number and the second authentication parameter in the second calculation manner.

The third communication unit is configured to: send the first information to the second device through the first device; and/or, receive the second information from the second device through the first device.

The third communication unit is configured to receive a second request message sent by the first device, the second request message is configured to request authentication, and the second request message carries a first ID of the second device and/or a second ID of the second device.

The third communication unit is configured to send a first response message to the first device, the first response message is configured to indicate successful authentication of the second device, the first response message carries identification information, and the identification information is related to at least one of the second ID of the second device, the first ID of the second device, an ID of the first device, or an ID of the core network side device.

The third communication unit is configured to: receive a fifth request message sent by the second device, here, the fifth request message is configured to request authentication, and the fifth request message carries a first ID of the second device; and send a seventh response message to the second device, here, the seventh response message is configured to indicate successful authentication of the second device, the seventh response message carries identification information, and the identification information is related to at least one of a second ID of the second device, the first ID of the second device, or an ID of the core network side device.

The third communication unit is configured to receive a key request message from the target service device, the key request message carries identification information. The third communication unit is further configured to perform at least one of: sending a second response message to the first device, here, the second response message is in response to the key request message, the second response message carries the first key, the first key is used for communication between the first device and the second device, and the first device is configured to transmit data between the second device and the target service device; or sending a ninth response message to the target service device, here, the ninth response message is in response to the key request message, the ninth response message carries the first key, and the first key is used for communication between the second device and the target service device.

The second response message further carries security capability information of the second device, the security capability information is configured to indicate one or more security algorithms supported by the second device, or the security capability information is configured to indicate a target security algorithm specified by the second device; and/or, the ninth response message further carries the security capability information of the second device.

The third communication unit is configured to receive an eighth request message sent by the target service device, the eighth request message is configured to request authentication, the eighth request message carries a security credential and a second ID of the second device, the security credential includes at least one of the first shared key, relevant information of the first shared key, or the first intermediate key, and the first intermediate key is obtained based on the first shared key.

The third communication unit is configured to perform at least one of: sending a tenth response message to the target service device, here, the tenth response message is configured to indicate successful authentication of the second device, the tenth response message carries identification information and the first key, the identification information is related to at least one of the second ID of the second device, a first ID of the second device, an ID of the first device, or an ID of the core network side device, the first key is used for communication between the second device and the target service device, and/or the first key is used for communication between the first device and the second device, and the first device is configured to transmit data between the second device and the target service device; or sending a fourth response message to the first device, here, the fourth response message is configured to indicate the successful authentication of the second device, the fourth response message carries the identification information and the first key, the first key is used for communication between the first device and the second device, and the first device is configured to transmit data between the second device and the target service device.

The third processing unit is configured to calculate the first key based on the first shared key, an ID of the target service device and a third authentication parameter, the third authentication parameter includes at least one of the second shared key, the second random number, the third random number, the second ID of the second device, the ID of the core network side device, the ID of the first device, or the identification information.

The second random number is shared between the second device and the core network side device and/or the target service device; and/or, the second shared key is shared between the second device and the first device; and/or, the third random number is configured, or the third random number is selected by the core network side device, or the third random number is shared between the second device and the core network side device and/or the target service device.

The first device includes at least one of a first terminal device or a first access network device; the second device is one of an A-IoT device or a zero-power device; and the core network side device includes at least one of a BSF, an A-IoT network element, a HSS, a HLR, a KMS, or an AUSF.

FIG. 21 is a schematic diagram of compositional structures of a target service device according to an embodiment of the disclosure. The target service device includes a fourth communication unit 2101.

The fourth communication unit 2101 is configured to receive a first key sent by a core network side device, here, the first key is used for communication between the target service device and a second device.

The fourth communication unit is configured to perform one of: receiving, through a first device, a third request message sent by the second device, here, the third request message is configured to request communication, the third request message carries identification information, and the identification information is related to at least one of a second ID of the second device, a first ID of the second device, an ID of the first device, or an ID of the core network side device; or receiving a sixth request message sent by the second device, here, the sixth request message is configured to request communication, and the sixth request message carries the identification information.

The fourth communication unit is configured to: send a key request message to the core network side device, here, the key request message carries the identification information; receive a ninth response message from the core network side device, here, the ninth response message is in response to the key request message, the ninth response message carries the first key; and send a sixth response message to the second device, here, the sixth response message is configured to indicate that the target service device obtains the first key.

The fourth communication unit is configured to perform one of: receiving a fourth request message sent by a first device, here, the fourth request message is configured to request authentication, and the fourth request message carries a first ID of the second device and/or a second ID of the second device; or receiving a seventh request message sent by the second device, here, the seventh request message is configured to request authentication, and the seventh request message carries the first ID of the second device.

The fourth communication unit is configured to send an eighth request message to the core network side device, the eighth request message is configured to request authentication, the eighth request message carries a security credential and the second ID of the second device, the security credential includes at least one of a first shared key, relevant information of the first shared key, or a first intermediate key, the first shared key is shared between the second device and the target service device, and the first intermediate key is obtained based on the first shared key.

The fourth communication unit is configured to receive a tenth response message from the core network side device, the tenth response message is configured to indicate successful authentication of the second device, the tenth response message carries identification information and the first key, the identification information is related to at least one of the second ID of the second device, the first ID of the second device, an ID of the first device, or an ID of the core network side device, the first key is used for communication between the second device and the target service device, and/or the first key is used for communication between the first device and the second device, and the first device is configured to transmit data between the second device and the target service device.

The fourth communication unit is configured to send an eighth response message to the second device, the eighth response message is configured to indicate the successful authentication of the second device and the eighth response message includes the identification information.

The fourth communication unit is configured to perform one of: receiving security capability information from the second device, here, the security capability information is configured to indicate one or more security algorithms supported by the second device, or the security capability information is configured to indicate a target security algorithm specified by the second device; or receiving the security capability information from the core network side device.

The fourth communication unit is configured to send security algorithm indication information to the second device, the security algorithm indication information is configured to indicate a target security algorithm.

The devices in the embodiments of the disclosure may implement corresponding functions of each device in the foregoing communication method embodiments. The processes, functions, implementations and advantageous effects corresponding to each module (sub-module, unit or component, or the like) in the first device, or the second device, or the core network side device, or the target service device may refer to corresponding descriptions in the above method embodiments and will not be elaborated here. It should be noted that the functions described with respect to each module (sub-module, unit or component, or the like) in the first device, or the second device, or the core network side device, or the target service device in the embodiments of the disclosure may be implemented by different modules (sub-modules, units or components, or the like) or by the same module (sub-module, unit or component, or the like).

FIG. 22 is a schematic structural diagram of a communication device 2200 according to an embodiment of the disclosure. The communication device 2200 includes a processor 2210, and the processor 2210 may call and run a computer program from a memory, such that the communication device 2200 implements the methods in the embodiments of the disclosure.

In a possible implementation, the communication device 2200 may further include a memory 2220. The processor 2210 may call and run the computer program from the memory 2220, such that the communication device 2200 implements the methods in the embodiments of the disclosure.

The memory 2220 may be a separate device independent of the processor 2210, or may be integrated into the processor 2210.

In a possible implementation, the communication device 2200 may further include a transceiver 2230, and the processor 2210 may control the transceiver 2230 to communicate with other devices. Specifically, the processor 2210 may control the transceiver 2230 to send information or data to other devices, or to receive information or data sent by other devices.

The transceiver 2230 may include a transmitter and a receiver. The transceiver 2230 may further include antenna, and there may be one or more the antennas.

In a possible implementation, the communication device 2200 may be the first device, or the second device, or the core network side device, or the target service device in the embodiments of the disclosure, and the communication device 2200 may implement corresponding processes implemented by the first device, or the second device, or the core network side device, or the target service device in various methods of the embodiments of the disclosure, which will not be elaborated here for the sake of brevity.

In an embodiment of the disclosure, a first device is provided, the first device includes a processor and a memory, the memory communicates with the processor and is configured to store instructions. When the instructions are executed by the processor, the instructions enable the first device to perform: sending first information from a core network side device to a second device, here, the first information includes a first message authentication code, the first message authentication code is related to a first shared key, the first shared key is shared between the second device and the core network side device and/or a target service device, and the first message authentication code is used by the second device to authenticate the core network side device; and receiving a first key from the core network side device, here, the first key is used for communication between the first device and the second device, and the first device is configured to transmit data between the second device and the target service device.

The instructions further enable the first device to perform: sending second information from the second device to the core network side device, here, the second information includes a first response, and the first response is used by the core network side device to authenticate the second device.

The instructions further enable the first device to perform: receiving a first request message from the second device, here, the first request message is configured to request authentication, and the first request message carries a first ID of the second device.

The instructions further enable the first device to perform: sending a second request message to the core network side device, here, the second request message is configured to request authentication, and the second request message carries the first ID of the second device and/or a second ID of the second device.

The instructions further enable the first device to perform: receiving a first response message from the core network side device, here, the first response message is configured to indicate successful authentication of the second device, the first response message carries identification information, and the identification information is related to at least one of the second ID of the second device, the first ID of the second device, an ID of the first device, or an ID of the core network side device.

The instructions further enable the first device to perform: forwarding a third request message sent by the second device to the target service device, here, the third request message is configured to request communication, and the third request message carries the identification information; receiving a second response message from the core network side device, here, the second response message carries the first key; and sending a third response message to the second device, here, the third response message is configured to indicate that the target service device obtains the first key.

The instructions further enable the first device to perform: sending a fourth request message to the target service device, here, the fourth request message is configured to request authentication, and the fourth request message carries the first ID of the second device and/or the second ID of the second device.

The instructions further enable the first device to perform: receiving a fourth response message from the core network side device, here, the fourth response message is configured to indicate successful authentication of the second device, the fourth response message carries identification information and the first key, and the identification information is related to at least one of the second ID of the second device, the first ID of the second device, an ID of the first device, or an ID of the core network side device.

The instructions further enable the first device to perform: sending a fifth response message to the second device, here, the fifth response message is configured to indicate the successful authentication of the second device, and the fifth response message carries the identification information.

The instructions further enable the first device to perform: receiving security capability information from the second device, here the security capability information is configured to indicate one or more security algorithms supported by the second device, or the security capability information is configured to indicate a target security algorithm specified by the second device.

The instructions further enable the first device to perform: sending security algorithm indication information to the second device, here the security algorithm indication information is configured to indicate the target security algorithm.

In an embodiment of the disclosure, a second device is provided, the second device includes a processor and a memory, the memory communicates with the processor and is configured to store instructions. When the instructions are executed by the processor, the instructions enable the second device to perform: receiving first information from a core network side device, here, the first information includes a first message authentication code, the first message authentication code is related to a first shared key, the first shared key is shared between the second device and the core network side device and/or a target service device; calculating a second message authentication code based on the first shared key; and in case that the second message authentication code is the same as the first message authentication code, calculating a first key based on the first shared key and an ID of the target service device, here, the first key is used for communication between the second device and the target service device and/or a first device.

The instructions further enable the second device to perform: calculating a first response based on the first shared key, here, the first response is used by the core network side device to authenticate the second device; and sending second information to the core network side device, here, the second information includes the first response.

The instructions further enable the second device to perform: calculating the second message authentication code based on the first shared key, the first random number and a first authentication parameter in a first calculation manner, here, the first authentication parameter includes at least one of a second shared key, a second random number, or a third random number; calculating a first intermediate key based on the first shared key, and calculating the second message authentication code based on the first intermediate key, the first random number and the first authentication parameter in the first calculation manner.

The instructions further enable the second device to perform one of: calculating the first response based on the first shared key, the first random number and a second authentication parameter in a second calculation manner, here, the second authentication parameter includes at least one of the second shared key, the second random number, or the third random number, the first calculation manner is different from the second calculation manner, and/or the first authentication parameter is at least partially different from the second authentication parameter; or calculating the first intermediate key based on the first shared key, and calculating the first response based on the first intermediate key, the first random number and the second authentication parameter in the second calculation manner.

The instructions further enable the second device to perform: calculating the first key based on the first shared key, the ID of the target service device and a third authentication parameter, here, the third authentication parameter includes at least one of a second shared key, a second random number, a third random number, a second ID of the second device, an ID of the core network side device, an ID of the first device, or identification information.

The instructions further enable the second device to perform: sending a first request message to the first device, here, the first request message is configured to request authentication, and the first request message carries a first ID of the second device.

The instructions further enable the second device to perform: receiving the first information from the core network side device through the first device; and/or, sending the second information to the core network side device through the first device.

The instructions further enable the second device to perform: receiving a fifth response message from the first device, here, the fifth response message is configured to indicate successful authentication of the second device, the fifth response message carries the identification information, and the identification information is related to at least one of the second ID of the second device, the first ID of the second device, the ID of the first device, or the ID of the core network side device.

The instructions further enable the second device to perform: sending a third request message to the target service device through the first device, here, the third request message is configured to request communication, and the third request message carries the identification information.

The instructions further enable the second device to perform at least one of: receiving a third response message from the first device, here, the third response message is configured to indicate that the target service device obtains the first key; or receiving a sixth response message from the target service device, here, the sixth response message is configured to indicate that the target service device obtains the first key.

The instructions further enable the second device to perform: sending security capability information to the first device, here, the security capability information is configured to indicate one or more security algorithms supported by the second device, or the security capability information is configured to indicate a target security algorithm specified by the second device.

The instructions further enable the second device to perform: receiving security algorithm indication information from the first device, here, the security algorithm indication information is configured to indicate the target security algorithm.

The instructions further enable the second device to perform: sending a fifth request message to the core network side device, here, the fifth request message is configured to request authentication, and the fifth request message carries a first ID of the second device; and receiving a seventh response message from the core network side device, here, the seventh response message is configured to indicate successful authentication of the second device, the seventh response message carries the identification information, and the identification information is related to at least one of the second ID of the second device, the first ID of the second device, or the ID of the core network side device.

The instructions further enable the second device to perform: sending a sixth request message to the target service device, here, the sixth request message is configured to request communication, and the sixth request message carries the identification information; and receiving a sixth response message from the target service device, here, the sixth response message is configured to indicate that the target service device obtains the first key.

The instructions further enable the second device to perform: sending a seventh request message to the target service device, here, the seventh request message is configured to request authentication, and the seventh request message carries a first ID of the second device; and receiving an eighth response message from the target service device, here, the eighth response message is configured to indicate successful authentication of the second device, the eighth response message includes the identification information, and the identification information is related to at least one of the second ID of the second device, the first ID of the second device, or the ID of the core network side device.

The instructions further enable the second device to perform one of: reporting security capability information to the target service device, here, the security capability information is configured to indicate one or more security algorithms supported by the second device, or the security capability information is configured to indicate a target security algorithm specified by the second device; or reporting the security capability information to the core network side device.

The processor and the memory are configured to enable the second device to perform: receiving security algorithm indication information from the target service device, here the security algorithm indication information is configured to indicate a target security algorithm.

The second random number is shared between the second device and the core network side device and/or the target service device; and/or, the second shared key is shared between the second device and the first device; and/or, the third random number is configured, or the third random number is shared between the second device and the core network side device and/or the target service device.

In an embodiment of the disclosure, a core network side device is provided, the core network side device includes a processor and a memory, the memory communicates with the processor and is configured to store instructions. When the instructions are executed by the processor, the instructions enable the core network side device to perform: sending first information to a second device, here, the first information includes a first message authentication code, the first message authentication code is related to a first shared key, the first shared key is shared between the second device and the core network side device and/or a target service device, and the first message authentication code is used by the second device to authenticate the core network device; and sending a first key to the target service device and/or a first device, here, the first key is used for communication between the second device and the target service device or the first device, and the first device is configured to transmit data between the second device and the target service device.

The instructions further enable the core network side device to perform: in case that a first response is the same as a second response, determining that authentication of the second device is successful; and receiving second information from the second device, here, the second information includes the first response.

The first information further includes a first random number, and the instructions further enable the core network side device to perform at least one of: calculating the first message authentication code based on the first shared key, the first random number and a first authentication parameter in a first calculation manner, here, the first authentication parameter includes at least one of a second shared key, a second random number, or a third random number; calculating the first message authentication code based on a first intermediate key, the first random number and the first authentication parameter in the first calculation manner, here, the first intermediate key is related to the first shared key; calculating the second response based on the first shared key, the first random number and a second authentication parameter in a second calculation manner, here, the second authentication parameter includes at least one of the second shared key, the second random number, or the third random number, the first calculation manner is different from the second calculation manner, and/or the first authentication parameter is at least partially different from the second authentication parameter; or calculating the second response based on the first intermediate key, the first random number and the second authentication parameter in the second calculation manner.

The instructions further enable the core network side device to perform: sending the first information to the second device through the first device; and/or, receiving the second information from the second device through the first device.

The instructions further enable the core network side device to perform: receiving a second request message sent by the first device, here the second request message is configured to request authentication, and the second request message carries a first ID of the second device and/or a second ID of the second device.

The instructions further enable the core network side device to perform: sending a first response message to the first device, here, the first response message is configured to indicate successful authentication of the second device, the first response message carries identification information, and the identification information is related to at least one of the second ID of the second device, the first ID of the second device, an ID of the first device, or an ID of the core network side device.

The instructions further enable the core network side device to perform: receiving a fifth request message sent by the second device, here, the fifth request message is configured to request authentication, and the fifth request message carries a first ID of the second device; and sending a seventh response message to the second device, here, the seventh response message is configured to indicate successful authentication of the second device, the seventh response message carries identification information, and the identification information is related to at least one of a second ID of the second device, the first ID of the second device, or an ID of the core network side device.

The instructions further enable the core network side device to perform: receiving a key request message from the target service device, here, the key request message carries identification information.

The instructions further enable the core network side device to perform at least one of: sending a second response message to the first device, here, the second response message is in response to the key request message, the second response message carries the first key, the first key is used for communication between the first device and the second device, and the first device is configured to transmit data between the second device and the target service device; or sending a ninth response message to the target service device, here, the ninth response message is in response to the key request message, the ninth response message carries the first key, and the first key is used for communication between the second device and the target service device.

The second response message further carries security capability information of the second device, the security capability information is configured to indicate one or more security algorithms supported by the second device, or the security capability information is configured to indicate a target security algorithm specified by the second device; and/or, the ninth response message further carries the security capability information of the second device.

The instructions further enable the core network side device to perform: receiving an eighth request message sent by the target service device, here, the eighth request message is configured to request authentication, the eighth request message carries a security credential and a second ID of the second device, the security credential includes at least one of the first shared key, relevant information of the first shared key, or the first intermediate key, and the first intermediate key is obtained based on the first shared key.

The instructions further enable the core network side device to perform at least one of: sending a tenth response message to the target service device, here, the tenth response message is configured to indicate successful authentication of the second device, the tenth response message carries identification information and the first key, the identification information is related to at least one of the second ID of the second device, a first ID of the second device, an ID of the first device, or an ID of the core network side device, the first key is used for communication between the second device and the target service device, and/or the first key is used for communication between the first device and the second device, and the first device is configured to transmit data between the second device and the target service device; or sending a fourth response message to the first device, here, the fourth response message is configured to indicate the successful authentication of the second device, the fourth response message carries the identification information and the first key, the first key is used for communication between the first device and the second device, and the first device is configured to transmit data between the second device and the target service device.

The instructions further enable the core network side device to perform: calculating the first key based on the first shared key, an ID of the target service device and a third authentication parameter, here, the third authentication parameter includes at least one of the second shared key, the second random number, the third random number, the second ID of the second device, the ID of the core network side device, the ID of the first device, or the identification information.

In an embodiment of the disclosure, a target service device is provided, the target service device includes a processor and a memory, the memory communicates with the processor and is configured to store instructions. When the instructions are executed by the processor, the instructions enable the target service device to perform: receiving a first key sent by a core network side device, here, the first key is used for communication between the target service device and a second device.

The instructions further enable the target service device to perform one of: receiving, through a first device, a third request message sent by the second device, here, the third request message is configured to request communication, the third request message carries identification information, and the identification information is related to at least one of a second ID of the second device, a first ID of the second device, an ID of the first device, or an ID of the core network side device; or receiving a sixth request message sent by the second device, here, the sixth request message is configured to request communication, and the sixth request message carries the identification information.

The instructions further enable the target service device to perform: sending a key request message to the core network side device, here, the key request message carries the identification information; receiving a ninth response message from the core network side device, here, the ninth response message is in response to the key request message, the ninth response message carries the first key; and sending a sixth response message to the second device, here, the sixth response message is configured to indicate that the target service device obtains the first key.

The instructions further enable the target service device to perform one of: receiving a fourth request message sent by a first device, here, the fourth request message is configured to request authentication, and the fourth request message carries a first ID of the second device and/or a second ID of the second device; or receiving a seventh request message sent by the second device, here, the seventh request message is configured to request authentication, and the seventh request message carries the first ID of the second device.

The instructions further enable the target service device to perform: sending an eighth request message to the core network side device, here, the eighth request message is configured to request authentication, the eighth request message carries a security credential and the second ID of the second device, the security credential includes at least one of a first shared key, relevant information of the first shared key, or a first intermediate key, the first shared key is shared between the second device and the target service device, and the first intermediate key is obtained based on the first shared key.

The instructions further enable the target service device to perform: receiving a tenth response message from the core network side device, here, the tenth response message is configured to indicate successful authentication of the second device, the tenth response message carries identification information and the first key, the identification information is related to at least one of the second ID of the second device, the first ID of the second device, an ID of the first device, or an ID of the core network side device, the first key is used for communication between the second device and the target service device, and/or the first key is used for communication between the first device and the second device, and the first device is configured to transmit data between the second device and the target service device.

The instructions further enable the target service device to perform: sending an eighth response message to the second device, here, the eighth response message is configured to indicate the successful authentication of the second device, and the eighth response message includes the identification information.

The instructions further enable the target service device to perform one of: receiving security capability information from the second device, here, the security capability information is configured to indicate one or more security algorithms supported by the second device, or the security capability information is configured to indicate a target security algorithm specified by the second device; or receiving the security capability information from the core network side device.

The instructions further enable the target service device to perform: sending security algorithm indication information to the second device, here, the security algorithm indication information is configured to indicate a target security algorithm.

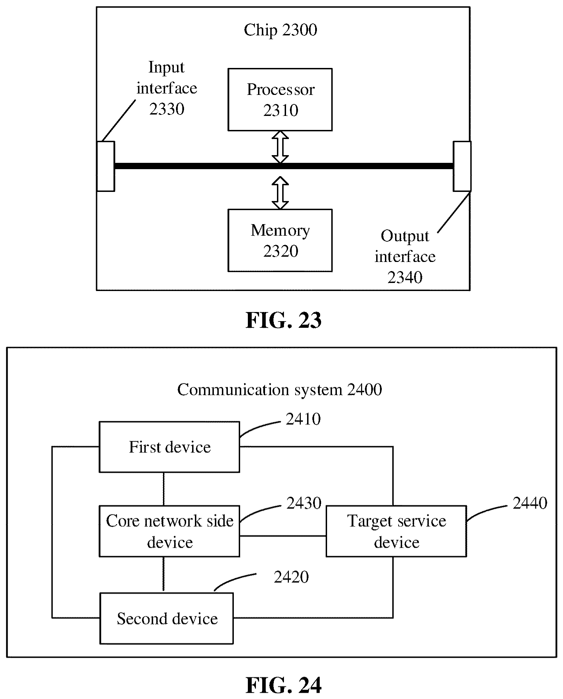

FIG. 23 is a schematic structural diagram of a chip 2300 according to an embodiment of the disclosure. The chip 2300 includes a processor 2310, and the processor 2310 may call and run a computer program from a memory, to implement the methods in the embodiments of the disclosure.

In a possible implementation, the chip 2300 may further include a memory 2320. The processor 2310 may call and run the computer program from the memory 2320, to implement the methods performed by the access network device or the core network side device in the embodiments of the disclosure. The memory 2320 may be a separate device independent of the processor 2310, or may be integrated into the processor 2310.

In a possible implementation, the chip 2300 may further include an input interface 2330. The processor 2310 may control the input interface 2330 to communicate with other devices or chips, and specifically, the processor 2310 may control the input interface 2330 to acquire information or data sent by other devices or chips. In a possible implementation, the chip 2300 may further include an output interface 2340. The processor 2310 may control the output interface 2340 to communicate with other devices or chips, and specifically, the processor 2310 may control the output interface 2340 to output information or data to other devices or chips.

In a possible implementation, the chip may be applied to the first device, or the second device, or the core network side device, or the target service device in the embodiments of the disclosure, and the chip may implement corresponding processes implemented by the first device, or the second device, or the core network side device, or the target service device in various methods of the embodiments of the disclosure, which will not be elaborated here for the sake of brevity.

It should be understood that the chip mentioned in the embodiment of the disclosure may also be referred to as a system-level chip, a system chip, a chip system or a system on chip, or the like.

The processor mentioned as above may be a general purpose processor, a Digital Signal Processor (DSP), a Field Programmable Gate Array (FPGA), an Application Specific Integrated Circuit (ASIC) or other programmable logical devices, a transistor logical device, a discrete hardware component, or the like. The general purpose processor mentioned as above may be a microprocessor, or may be any conventional processor, or the like.

The memory mentioned as above may be a volatile memory or a non-volatile memory, or may include both the volatile and non-volatile memories. The non-volatile memory may be a Read-Only Memory (ROM), a Programmable ROM (PROM), an Erasable PROM (EEPROM), an Electrically EPROM (EEPROM), or a flash memory. The volatile memory may be a Random Access Memory (RAM).

It should be understood that explanations on the above memory are exemplary rather than restrictive. For example, the memory in the embodiments of the disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM), a Direct Rambus RAM (DR RAM), and/or the like. That is, the memory in the embodiment of the disclosure is intended to include, but is not limited to these memories and any other suitable types of memories.

FIG. 24 is a schematic block diagram of a communication system 2400 according to an embodiment of the disclosure. The communication system 2400 includes a first device 2410, a second device 2420, a core network side device 2430, and a target service device 2440. In the above embodiments, all or part of the above embodiments may be implemented by software, hardware, firmware or any combination thereof. When the embodiments are implemented with software, all or part of the above embodiments may be implemented in a form of a computer program product. The computer program product includes one or more computer instructions. When the computer program instructions are loaded and executed on a computer, all or part of the processes or functions according to the embodiments of the disclosure are generated. The computer may be a general purpose computer, a special purpose computer, a computer network, or other programmable devices. The computer instructions may be stored in a computer-readable storage medium, or transmitted from a computer-readable storage medium to another computer-readable storage medium. For example, the computer instructions may be transmitted from a website, computer, server or data center to another website, computer, server or data center in a wired (such as a coaxial cable, an optical fiber, a Digital Subscriber Line (DSL)) or wireless (such as infrared, radio, microwave) manner. The computer-readable storage medium may be any available medium that may be accessed by a computer, or a data storage device including one or more available media, such as a server, a data center. The available medium may be a magnetic medium (such as a floppy disk, a hard disk, a magnetic tape), an optical medium (such as a Digital Video Disk (DVD)), or a semiconductor medium (such as a Solid State Disk (SSD)), or the like.

It should be understood that in various embodiments of the disclosure, sizes of serial numbers of the above processes do not mean a sequence of execution, and the sequence of execution of each process should be determined by its function and internal logic, and should not constitute any limitation on implementation processes of the embodiments of the disclosure.

It may be clearly understood by those skilled in the art that specific operation processes of the above system, device and unit may refer to corresponding processes in the foregoing method embodiments and will not be elaborated here, for the convenience and brevity of descriptions.

The above descriptions are only specific implementations of the disclosure, however, the scope of protection of the disclosure is not limited thereto. Variation or replacement easily conceived by any technician familiar with this technical field within the technical scope disclosed in the disclosure, should fall within the scope of protection of the disclosure. Therefore, the scope of protection of the disclosure shall be subject to the scope of protection of the claims.

## Claims

1. A communication method, comprising:
sending, by a first device, first information from a core network side device to a second device, wherein the first information comprises a first message authentication code, the first message authentication code is related to a first shared key, the first shared key is shared between the second device and the core network side device and/or a target service device, and the first message authentication code is used by the second device to authenticate the core network side device; and
receiving, by the first device, a first key from the core network side device, wherein the first key is used for communication between the first device and the second device, and the first device is configured to transmit data between the second device and the target service device.

2. The method of claim 1, further comprising:
sending, by the first device, second information from the second device to the core network side device, wherein the second information comprises a first response, and the first response is used by the core network side device to authenticate the second device.

3. The method of claim 2, further comprising:
receiving, by the first device, a first request message from the second device, wherein the first request message is configured to request authentication, and the first request message carries a first identifier of the second device.

4. The method of claim 3, further comprising:
sending, by the first device, a second request message to the core network side device, wherein the second request message is configured to request authentication, and the second request message carries the first identifier of the second device and/or a second identifier of the second device.

5. The method of claim 4, further comprising:
receiving, by the first device, a first response message from the core network side device, wherein the first response message is configured to indicate successful authentication of the second device, the first response message carries identification information, and the identification information is related to at least one of: the second identifier of the second device, the first identifier of the second device, an identifier of the first device, or an identifier of the core network side device.

6. The method of claim 5, wherein receiving, by the first device, the first key from the core network side device comprises:
forwarding, by the first device, a third request message sent by the second device to the target service device, wherein the third request message is configured to request communication, and the third request message carries the identification information; and
receiving, by the first device, a second response message from the core network side device, wherein the second response message carries the first key,
wherein the method further comprises:
sending, by the first device, a third response message to the second device, wherein the third response message is configured to indicate that the target service device obtains the first key.

7. The method of claim 4, further comprising:
sending, by the first device, a fourth request message to the target service device, wherein the fourth request message is configured to request authentication, and the fourth request message carries the first identifier of the second device and/or the second identifier of the second device.

8. The method of claim 7, wherein receiving, by the first device, the first key from the core network side device comprises:
receiving, by the first device, a fourth response message from the core network side device, wherein the fourth response message is configured to indicate successful authentication of the second device, the fourth response message carries identification information and the first key, and the identification information is related to at least one of: the second identifier of the second device, the first identifier of the second device, an identifier of the first device, or an identifier of the core network side device.

9. The method of claim 5 or 8, further comprising:
sending, by the first device, a fifth response message to the second device, wherein the fifth response message is configured to indicate the successful authentication of the second device, and the fifth response message carries the identification information.

10. The method of any one of claims 1 to 9, further comprising:
receiving, by the first device, security capability information from the second device, wherein the security capability information is configured to indicate one or more security algorithms supported by the second device, or the security capability information is configured to indicate a target security algorithm specified by the second device.

11. The method of claim 10, further comprising:
sending, by the first device, security algorithm indication information to the second device, wherein the security algorithm indication information is configured to indicate the target security algorithm.

12. The method of any one of claims 1 to 11, wherein the second device is one of: an Ambient power-enabled Internet of Things (A-IoT) device or a zero-power device;
the first device comprises at least one of: a first terminal device or a first access network device; and
the core network side device comprises at least one of: a Bootstrapping Server Function (BSF), an A-IoT network element, a Home Subscriber System (HSS), a Home Location Register (HLR), a Key Management Server (KMS), or an Authentication Server Function (AUSF).

13. A communication method, comprising:
receiving, by a second device, first information from a core network side device, wherein the first information comprises a first message authentication code, the first message authentication code is related to a first shared key, the first shared key is shared between the second device and the core network side device and/or a target service device;
calculating, by the second device, a second message authentication code based on the first shared key; and
in case that the second message authentication code is the same as the first message authentication code, calculating, by the second device, a first key based on the first shared key and an identifier of the target service device, wherein the first key is used for communication between the second device and the target service device and/or a first device.

14. The method of claim 13, further comprising:
calculating, by the second device, a first response based on the first shared key, wherein the first response is used by the core network side device to authenticate the second device; and
sending, by the second device, second information to the core network side device, wherein the second information comprises the first response.

15. The method of claim 13, wherein the first information further comprises a first random number, and calculating, by the second device, the second message authentication code based on the first shared key comprises:
calculating, by the second device, the second message authentication code based on the first shared key, the first random number and a first authentication parameter in a first calculation manner, wherein the first authentication parameter comprises at least one of: a second shared key, a second random number, or a third random number;
calculating, by the second device, a first intermediate key based on the first shared key, and calculating, by the second device, the second message authentication code based on the first intermediate key, the first random number and the first authentication parameter in the first calculation manner.

16. The method of claim 15, wherein calculating, by the second device, the first response based on the first shared key comprises one of:
calculating, by the second device, the first response based on the first shared key, the first random number and a second authentication parameter in a second calculation manner, wherein the second authentication parameter comprises at least one of: the second shared key, the second random number, or the third random number, the first calculation manner is different from the second calculation manner, and/or the first authentication parameter is at least partially different from the second authentication parameter; or
calculating, by the second device, the first intermediate key based on the first shared key, and calculating, by the second device, the first response based on the first intermediate key, the first random number and the second authentication parameter in the second calculation manner.

17. The method of any one of claims 13 to 16, wherein calculating, by the second device, the first key based on the first shared key and the identifier of the target service device comprises:
calculating, by the second device, the first key based on the first shared key, the identifier of the target service device and a third authentication parameter, wherein the third authentication parameter comprises at least one of: a second shared key, a second random number, a third random number, a second identifier of the second device, an identifier of the core network side device, an identifier of the first device, or identification information.

18. The method of claim 17, further comprising:
sending, by the second device, a first request message to the first device, wherein the first request message is configured to request authentication, and the first request message carries a first identifier of the second device.

19. The method of claim 18, wherein receiving, by the second device, the first information from the core network side device comprises:
receiving, by the second device, the first information from the core network side device through the first device,
and/or,
sending, by the second device, the second information to the core network side device comprises:
sending, by the second device, the second information to the core network side device through the first device.

20. The method of claim 18 or 19, further comprising:
receiving, by the second device, a fifth response message from the first device, wherein the fifth response message is configured to indicate successful authentication of the second device, the fifth response message carries the identification information, and the identification information is related to at least one of: the second identifier of the second device, the first identifier of the second device, the identifier of the first device, or the identifier of the core network side device.

21. The method of claim 20, further comprising:
sending, by the second device, a third request message to the target service device through the first device, wherein the third request message is configured to request communication, and the third request message carries the identification information.

22. The method of claim 21, further comprising at least one of:
receiving, by the second device, a third response message from the first device, wherein the third response message is configured to indicate that the target service device obtains the first key; or
receiving, by the second device, a sixth response message from the target service device, wherein the sixth response message is configured to indicate that the target service device obtains the first key.

23. The method of any one of claims 18 to 22, further comprising:
sending, by the second device, security capability information to the first device, wherein the security capability information is configured to indicate one or more security algorithms supported by the second device, or the security capability information is configured to indicate a target security algorithm specified by the second device.

24. The method of claim 23, further comprising:
receiving, by the second device, security algorithm indication information from the first device, wherein the security algorithm indication information is configured to indicate the target security algorithm.

25. The method of claim 17, further comprising:
sending, by the second device, a fifth request message to the core network side device, wherein the fifth request message is configured to request authentication, and the fifth request message carries a first identifier of the second device,
wherein the method further comprises:
receiving, by the second device, a seventh response message from the core network side device, wherein the seventh response message is configured to indicate successful authentication of the second device, the seventh response message carries the identification information, and the identification information is related to at least one of: the second identifier of the second device, a first identifier of the second device, or the identifier of the core network side device.

26. The method of claim 25, further comprising:
sending, by the second device, a sixth request message to the target service device, wherein the sixth request message is configured to request communication, and the sixth request message carries the identification information,
wherein the method further comprises:
receiving, by the second device, a sixth response message from the target service device, wherein the sixth response message is configured to indicate that the target service device obtains the first key.

27. The method of claim 17, further comprising:
sending, by the second device, a seventh request message to the target service device, wherein the seventh request message is configured to request authentication, and the seventh request message carries a first identifier of the second device,
wherein the method further comprises:
receiving, by the second device, an eighth response message from the target service device, wherein the eighth response message is configured to indicate successful authentication of the second device, the eighth response message comprises the identification information, and the identification information is related to at least one of: the second identifier of the second device, a first identifier of the second device, or the identifier of the core network side device.

28. The method of any one of claims 25 to 27, further comprising one of:
reporting, by the second device, security capability information to the target service device, wherein the security capability information is configured to indicate one or more security algorithms supported by the second device, or the security capability information is configured to indicate a target security algorithm specified by the second device; or
reporting, by the second device, the security capability information to the core network side device.

29. The method of claim 28, further comprising:
receiving, by the second device, security algorithm indication information from the target service device, wherein the security algorithm indication information is configured to indicate the target security algorithm.

30. The method of any one of claims 23, 24, 28 and 29, wherein the target security algorithm comprises a target integrity protection algorithm and/or a target encryption algorithm, the target integrity protection algorithm is used by the second device to calculate an integrity protection code for a sent message based on an integrity protection key and/or to verify integrity of a received message based on the integrity protection key, the target encryption algorithm is used by the second device to encrypt sent data based on an encryption key and/or to decrypt received data based on the encryption key, the integrity protection key is related to the first key, and the encryption key is related to the first key.

31. The method of any one of claims 15 to 30, wherein the second random number is shared between the second device and the core network side device and/or the target service device; and/or, the second shared key is shared between the second device and the first device; and/or, the third random number is configured, or the third random number is shared between the second device and the core network side device and/or the target service device.

32. The method of any one of claims 13 to 31, wherein the first device comprises at least one of: a first terminal device or a first access network device;
the second device is one of: an Ambient power-enabled Internet of Things (A-IoT) device or a zero-power device; and
the core network side device comprises at least one of: a Bootstrapping Server Function (BSF), an A-IoT network element, a Home Subscriber System (HSS), a Home Location Register (HLR), a Key Management Server (KMS), or an Authentication Server Function (AUSF).

33. A communication method, comprising:
sending, by a core network side device, first information to a second device, wherein the first information comprises a first message authentication code, the first message authentication code is related to a first shared key, the first shared key is shared between the second device and the core network side device and/or a target service device, and the first message authentication code is used by the second device to authenticate the core network device; and
sending, by the core network side device, a first key to the target service device and/or a first device, wherein the first key is used for communication between the second device and the target service device or the first device, and the first device is configured to transmit data between the second device and the target service device.

34. The method of claim 33, further comprising:
receiving, by the core network side device, second information from the second device, wherein the second information comprises a first response; and
in case that the first response is the same as a second response, determining, by the core network side device, that authentication of the second device is successful.

35. The method of claim 34, wherein the first information further comprises a first random number, and the method further comprises at least one of:
calculating, by the core network side device, the first message authentication code based on the first shared key, the first random number and a first authentication parameter in a first calculation manner, wherein the first authentication parameter comprises at least one of: a second shared key, a second random number, or a third random number;
calculating, by the core network side device, the first message authentication code based on a first intermediate key, the first random number and the first authentication parameter in the first calculation manner, wherein the first intermediate key is related to the first shared key;
calculating, by the core network side device, the second response based on the first shared key, the first random number and a second authentication parameter in a second calculation manner, wherein the second authentication parameter comprises at least one of: the second shared key, the second random number, or the third random number, the first calculation manner is different from the second calculation manner, and/or the first authentication parameter is at least partially different from the second authentication parameter; or
calculating, by the core network side device, the second response based on the first intermediate key, the first random number and the second authentication parameter in the second calculation manner.

36. The method of claim 35, wherein sending, by the core network side device, the first information to the second device comprises:
sending, by the core network side device, the first information to the second device through the first device,
and/or, receiving, by the core network side device, the second information from the second device comprises:
receiving, by the core network side device, the second information from the second device through the first device.

37. The method of claim 36, further comprising:
receiving, by the core network side device, a second request message sent by the first device, wherein the second request message is configured to request authentication, and the second request message carries a first identifier of the second device and/or a second identifier of the second device.

38. The method of claim 37, further comprising:
sending, by the core network side device, a first response message to the first device, wherein the first response message is configured to indicate successful authentication of the second device, the first response message carries identification information, and the identification information is related to at least one of: the second identifier of the second device, the first identifier of the second device, an identifier of the first device, or an identifier of the core network side device.

39. The method of claim 35, further comprising:
receiving, by the core network side device, a fifth request message sent by the second device, wherein the fifth request message is configured to request authentication, and the fifth request message carries a first identifier of the second device,
wherein the method further comprises:
sending, by the core network side device, a seventh response message to the second device, wherein the seventh response message is configured to indicate successful authentication of the second device, the seventh response message carries identification information, and the identification information is related to at least one of: a second identifier of the second device, the first identifier of the second device, or an identifier of the core network side device.

40. The method of claim 37 or 39, further comprising:
receiving, by the core network side device, a key request message from the target service device, wherein the key request message carries identification information,
wherein the method further comprises at least one of:
sending, by the core network side device, a second response message to the first device, wherein the second response message is in response to the key request message, the second response message carries the first key, the first key is used for the communication between the first device and the second device, and the first device is configured to transmit the data between the second device and the target service device; or
sending, by the core network side device, a ninth response message to the target service device, wherein the ninth response message is in response to the key request message, the ninth response message carries the first key, and the first key is used for the communication between the second device and the target service device.

41. The method of claim 40, wherein the second response message further carries security capability information of the second device, wherein the security capability information is configured to indicate one or more security algorithms supported by the second device, or the security capability information is configured to indicate a target security algorithm specified by the second device,
and/or, the ninth response message further carries the security capability information of the second device.

42. The method of claim 35, further comprising:
receiving, by the core network side device, an eighth request message sent by the target service device, wherein the eighth request message is configured to request authentication, the eighth request message carries a security credential and a second identifier of the second device, the security credential comprises at least one of: the first shared key, relevant information of the first shared key, or the first intermediate key, and the first intermediate key is obtained based on the first shared key.

43. The method of claim 42, further comprising at least one of:
sending, by the core network side device, a tenth response message to the target service device, wherein the tenth response message is configured to indicate successful authentication of the second device, the tenth response message carries identification information and the first key, the identification information is related to at least one of: the second identifier of the second device, a first identifier of the second device, an identifier of the first device, or an identifier of the core network side device, the first key is used for the communication between the second device and the target service device, and/or the first key is used for the communication between the first device and the second device, and the first device is configured to transmit the data between the second device and the target service device; or
sending, by the core network side device, a fourth response message to the first device, wherein the fourth response message is configured to indicate the successful authentication of the second device, the fourth response message carries the identification information and the first key, the first key is used for the communication between the first device and the second device, and the first device is configured to transmit the data between the second device and the target service device.

44. The method of claim 40 or 43, further comprising:
calculating, by the core network side device, the first key based on the first shared key, an identifier of the target service device and a third authentication parameter, wherein the third authentication parameter comprises at least one of: the second shared key, the second random number, the third random number, the second identifier of the second device, an identifier of the core network side device, an identifier of the first device, or the identification information.

45. The method of any one of claims 35 to 44, wherein the second random number is shared between the second device and the core network side device and/or the target service device; and/or, the second shared key is shared between the second device and the first device; and/or, the third random number is configured, or the third random number is selected by the core network side device, or the third random number is shared between the second device and the core network side device and/or the target service device.

46. The method of any one of claims 33 to 45, wherein the first device comprises at least one of: a first terminal device or a first access network device;
the second device is one of: an Ambient power-enabled Internet of Things (A-IoT) device or a zero-power device; and
the core network side device comprises at least one of: a Bootstrapping Server Function (BSF), an A-IoT network element, a Home Subscriber System (HSS), a Home Location Register (HLR), a Key Management Server (KMS), or an Authentication Server Function (AUSF).

47. A communication method, comprising:
receiving, by a target service device, a first key sent by a core network side device, wherein the first key is used for communication between the target service device and a second device.

48. The method of claim 47, further comprising one of:
receiving, by the target service device through a first device, a third request message sent by the second device, wherein the third request message is configured to request communication, the third request message carries identification information, and the identification information is related to at least one of: a second identifier of the second device, a first identifier of the second device, an identifier of the first device, or an identifier of the core network side device; or
receiving, by the target service device, a sixth request message sent by the second device, wherein the sixth request message is configured to request communication, and the sixth request message carries the identification information.

49. The method of claim 48, further comprising:
sending, by the target service device, a key request message to the core network side device, wherein the key request message carries the identification information,
wherein receiving, by the target service device, the first key sent by the core network side device comprises:
receiving, by the target service device, a ninth response message from the core network side device, wherein the ninth response message is in response to the key request message, and the ninth response message carries the first key; and
sending, by the target service device, a sixth response message to the second device, wherein the sixth response message is configured to indicate that the target service device obtains the first key.

50. The method of claim 47, further comprising one of:
receiving, by the target service device, a fourth request message sent by a first device, wherein the fourth request message is configured to request authentication, and the fourth request message carries a first identifier of the second device and/or a second identifier of the second device; or
receiving, by the target service device, a seventh request message sent by the second device, wherein the seventh request message is configured to request authentication, and the seventh request message carries the first identifier of the second device.

51. The method of claim 50, further comprising:
sending, by the target service device, an eighth request message to the core network side device, wherein the eighth request message is configured to request authentication, the eighth request message carries a security credential and the second identifier of the second device, the security credential comprises at least one of: a first shared key, relevant information of the first shared key, or a first intermediate key, the first shared key is shared between the second device and the target service device, and the first intermediate key is obtained based on the first shared key.

52. The method of claim 51, wherein receiving, by the target service device, the first key sent by the core network side device comprises:
receiving, by the target service device, a tenth response message from the core network side device, wherein the tenth response message is configured to indicate successful authentication of the second device, the tenth response message carries identification information and the first key, the identification information is related to at least one of: the second identifier of the second device, the first identifier of the second device, an identifier of the first device, or an identifier of the core network side device, the first key is used for the communication between the second device and the target service device, and/or the first key is used for communication between the first device and the second device, and the first device is configured to transmit data between the second device and the target service device.

53. The method of claim 52, further comprising:
sending, by the target service device, an eighth response message to the second device, wherein the eighth response message is configured to indicate the successful authentication of the second device, and the eighth response message comprises the identification information.

54. The method of any one of claims 47 to 53, further comprising one of:
receiving, by the target service device, security capability information from the second device, wherein the security capability information is configured to indicate one or more security algorithms supported by the second device, or the security capability information is configured to indicate a target security algorithm specified by the second device; or
receiving, by the target service device, the security capability information from the core network side device.

55. The method of claim 54, further comprising:
sending, by the target service device, security algorithm indication information to the second device, wherein the security algorithm indication information is configured to indicate the target security algorithm.

56. A first device, comprising:
a first communication unit, configured to:
send first information from a core network side device to a second device, wherein the first information comprises a first message authentication code, the first message authentication code is related to a first shared key, the first shared key is shared between the second device and the core network side device and/or a target service device, and the first message authentication code is used by the second device to authenticate the core network side device; and
receive a first key from the core network side device, wherein the first key is used for communication between the first device and the second device, and the first device is configured to transmit data between the second device and the target service device.

57. The first device of claim 56, wherein the first communication unit is configured to send second information from the second device to the core network side device, wherein
the second information comprises a first response, and the first response is used by the core network side device to authenticate the second device.

58. The first device of claim 57, wherein the first communication unit is configured to receive a first request message from the second device, wherein
the first request message is configured to request authentication, and the first request message carries a first identifier of the second device.

59. The first device of claim 58, wherein the first communication unit is configured to send a second request message to the core network side device, wherein
the second request message is configured to request authentication, and the second request message carries the first identifier of the second device and/or a second identifier of the second device.

60. The first device of claim 59, wherein the first communication unit is configured to receive a first response message from the core network side device, wherein
the first response message is configured to indicate successful authentication of the second device, the first response message carries identification information, and the identification information is related to at least one of: the second identifier of the second device, the first identifier of the second device, an identifier of the first device, or an identifier of the core network side device.

61. The first device of claim 60, wherein the first communication unit is configured to:
forward a third request message sent by the second device to the target service device, wherein the third request message is configured to request communication, and the third request message carries the identification information;
receive a second response message from the core network side device, wherein the second response message carries the first key; and
send a third response message to the second device, wherein the third response message is configured to indicate that the target service device obtains the first key.

62. The first device of claim 59, wherein the first communication unit is configured to send a fourth request message to the target service device, wherein
the fourth request message is configured to request authentication, and the fourth request message carries the first identifier of the second device and/or the second identifier of the second device.

63. The first device of claim 62, wherein the first communication unit is configured to receive a fourth response message from the core network side device, wherein
the fourth response message is configured to indicate successful authentication of the second device, the fourth response message carries identification information and the first key, and the identification information is related to at least one of: the second identifier of the second device, the first identifier of the second device, an identifier of the first device, or an identifier of the core network side device.

64. The first device of claim 60 or 63, wherein the first communication unit is configured to send a fifth response message to the second device, wherein
the fifth response message is configured to indicate the successful authentication of the second device, and the fifth response message carries the identification information.

65. The first device of any one of claims 56 to 64, wherein the first communication unit is configured to receive security capability information from the second device, wherein
the security capability information is configured to indicate one or more security algorithms supported by the second device, or the security capability information is configured to indicate a target security algorithm specified by the second device.

66. The first device of claim 65, wherein the first communication unit is configured to send security algorithm indication information to the second device, wherein the security algorithm indication information is configured to indicate the target security algorithm.

67. The first device of any one of claims 56 to 66, wherein the second device is one of: an Ambient power-enabled Internet of Things (A-IoT) device or a zero-power device;
the first device comprises at least one of: a first terminal device or a first access network device; and
the core network side device comprises at least one of: a Bootstrapping Server Function (BSF), an A-IoT network element, a Home Subscriber System (HSS), a Home Location Register (HLR), a Key Management Server (KMS), or an Authentication Server Function (AUSF).

68. A second device, comprising:
a second communication unit, configured to receive first information from a core network side device, wherein the first information comprises a first message authentication code, the first message authentication code is related to a first shared key, the first shared key is shared between the second device and the core network side device and/or a target service device; and
a second processing unit, configured to: calculate a second message authentication code based on the first shared key; and in case that the second message authentication code is the same as the first message authentication code, calculate a first key based on the first shared key and an identifier of the target service device, wherein the first key is used for communication between the second device and the target service device and/or a first device.

69. The second device of claim 68, wherein the second processing unit is configured to calculate a first response based on the first shared key, wherein the first response is used by the core network side device to authenticate the second device, and
the second communication unit is configured to send second information to the core network side device, wherein the second information comprises the first response.

70. The second device of claim 68, wherein the first information further comprises a first random number, and the second processing unit is configured to:
calculate the second message authentication code based on the first shared key, the first random number and a first authentication parameter in a first calculation manner, wherein the first authentication parameter comprises at least one of: a second shared key, a second random number, or a third random number;
calculate a first intermediate key based on the first shared key, and calculate the second message authentication code based on the first intermediate key, the first random number and the first authentication parameter in the first calculation manner.

71. The second device of claim 70, wherein the second processing unit is configured to perform one of:
calculating a first response based on the first shared key, the first random number and a second authentication parameter in a second calculation manner, wherein the second authentication parameter comprises at least one of: the second shared key, the second random number, or the third random number, the first calculation manner is different from the second calculation manner, and/or the first authentication parameter is at least partially different from the second authentication parameter; or
calculating the first intermediate key based on the first shared key, and calculating the first response based on the first intermediate key, the first random number and the second authentication parameter in the second calculation manner.

72. The second device of any one of claims 68 to 71, wherein the second processing unit is configured to calculate the first key based on the first shared key, the identifier of the target service device and a third authentication parameter, wherein
the third authentication parameter comprises at least one of: a second shared key, a second random number, a third random number, a second identifier of the second device, an identifier of the core network side device, an identifier of the first device, or identification information.

73. The second device of claim 72, wherein the second communication unit is configured to send a first request message to the first device, wherein the first request message is configured to request authentication, and the first request message carries a first identifier of the second device.

74. The second device of claim 73, wherein the second communication unit is configured to:
receive the first information from the core network side device through the first device; and/or,
send the second information to the core network side device through the first device.

75. The second device of claim 73 or 74, wherein the second communication unit is configured to receive a fifth response message from the first device, wherein
the fifth response message is configured to indicate successful authentication of the second device, the fifth response message carries the identification information, and the identification information is related to at least one of: the second identifier of the second device, the first identifier of the second device, the identifier of the first device, or the identifier of the core network side device.

76. The second device of claim 75, wherein the second communication unit is configured to send a third request message to the target service device through the first device, wherein
the third request message is configured to request communication, and the third request message carries the identification information.

77. The second device of claim 76, wherein the second communication unit is configured to perform at least one of:
receiving a third response message from the first device, wherein the third response message is configured to indicate that the target service device obtains the first key; or
receiving a sixth response message from the target service device, wherein the sixth response message is configured to indicate that the target service device obtains the first key.

78. The second device of any one of claims 73 to 77, wherein the second communication unit is configured to send security capability information to the first device, wherein
the security capability information is configured to indicate one or more security algorithms supported by the second device, or the security capability information is configured to indicate a target security algorithm specified by the second device.

79. The second device of claim 78, wherein the second communication unit is configured to receive security algorithm indication information from the first device, wherein the security algorithm indication information is configured to indicate the target security algorithm.

80. The second device of claim 72, wherein the second communication unit is configured to:
send a fifth request message to the core network side device, wherein the fifth request message is configured to request authentication, and the fifth request message carries a first identifier of the second device; and
receive a seventh response message from the core network side device, wherein the seventh response message is configured to indicate successful authentication of the second device, the seventh response message carries the identification information, and the identification information is related to at least one of: the second identifier of the second device, a first identifier of the second device, or the identifier of the core network side device.

81. The second device of claim 80, wherein the second communication unit is configured to:
send a sixth request message to the target service device, wherein the sixth request message is configured to request communication, and the sixth request message carries the identification information; and
receive a sixth response message from the target service device, wherein the sixth response message is configured to indicate that the target service device obtains the first key.

82. The second device of claim 72, wherein the second communication unit is configured to:
send a seventh request message to the target service device, wherein the seventh request message is configured to request authentication, and the seventh request message carries a first identifier of the second device; and
receive an eighth response message from the target service device, wherein the eighth response message is configured to indicate successful authentication of the second device, the eighth response message comprises the identification information, and the identification information is related to at least one of: the second identifier of the second device, a first identifier of the second device, or the identifier of the core network side device.

83. The second device of any one of claims 80 to 82, wherein the second communication unit is configured to perform one of:
reporting security capability information to the target service device, wherein the security capability information is configured to indicate one or more security algorithms supported by the second device, or the security capability information is configured to indicate a target security algorithm specified by the second device; or
reporting the security capability information to the core network side device.

84. The second device of claim 83, wherein the second communication unit is configured to receive security algorithm indication information from the target service device, wherein the security algorithm indication information is configured to indicate the target security algorithm.

85. The second device of any one of claims 78, 79, 83 and 84, wherein the target security algorithm comprises a target integrity protection algorithm and/or a target encryption algorithm, the target integrity protection algorithm is used by the second device to calculate an integrity protection code for a sent message based on an integrity protection key and/or to verify integrity of a received message based on the integrity protection key, the target encryption algorithm is used by the second device to encrypt sent data based on an encryption key and/or to decrypt received data based on the encryption key, the integrity protection key is related to the first key, and the encryption key is related to the first key.

86. The second device of any one of claims 70 to 85, wherein the second random number is shared between the second device and the core network side device and/or the target service device; and/or, the second shared key is shared between the second device and the first device; and/or, the third random number is configured, or the third random number is shared between the second device and the core network side device and/or the target service device.

87. The second device of any one of claims 68 to 86, wherein the first device comprises at least one of: a first terminal device or a first access network device;
the second device is one of: an Ambient power-enabled Internet of Things (A-IoT) device or a zero-power device; and
the core network side device comprises at least one of: a Bootstrapping Server Function (BSF), an A-IoT network element, a Home Subscriber System (HSS), a Home Location Register (HLR), a Key Management Server (KMS), or an Authentication Server Function (AUSF).

88. A core network side device, comprising:
a third communication unit, configured to:
send first information to a second device, wherein the first information comprises a first message authentication code, the first message authentication code is related to a first shared key, the first shared key is shared between the second device and the core network side device and/or a target service device, and the first message authentication code is used by the second device to authenticate the core network device; and
send a first key to the target service device and/or a first device, wherein the first key is used for communication between the second device and the target service device or the first device, and the first device is configured to transmit data between the second device and the target service device.

89. The core network side device of claim 88, further comprising:
a third processing unit, configured to: in case that a first response is the same as a second response, determine that authentication of the second device is successful; wherein
the third communication unit is configured to receive second information from the second device, wherein the second information comprises the first response.

90. The core network side device of claim 89, wherein the first information further comprises a first random number, and the third processing unit is configured to perform at least one of:
calculating the first message authentication code based on the first shared key, the first random number and a first authentication parameter in a first calculation manner, wherein the first authentication parameter comprises at least one of: a second shared key, a second random number, or a third random number;
calculating the first message authentication code based on a first intermediate key, the first random number and the first authentication parameter in the first calculation manner, wherein the first intermediate key is related to the first shared key;
calculating the second response based on the first shared key, the first random number and a second authentication parameter in a second calculation manner, wherein the second authentication parameter comprises at least one of: the second shared key, the second random number, or the third random number, the first calculation manner is different from the second calculation manner, and/or the first authentication parameter is at least partially different from the second authentication parameter; or
calculating the second response based on the first intermediate key, the first random number and the second authentication parameter in the second calculation manner.

91. The core network side device of claim 90, wherein the third communication unit is configured to:
send the first information to the second device through the first device; and/or,
receive the second information from the second device through the first device.

92. The core network side device of claim 91, wherein the third communication unit is configured to receive a second request message sent by the first device, wherein
the second request message is configured to request authentication, and the second request message carries a first identifier of the second device and/or a second identifier of the second device.

93. The core network side device of claim 92, wherein the third communication unit is configured to send a first response message to the first device, wherein
the first response message is configured to indicate successful authentication of the second device, the first response message carries identification information, and the identification information is related to at least one of: the second identifier of the second device, the first identifier of the second device, an identifier of the first device, or an identifier of the core network side device.

94. The core network side device of claim 90, wherein the third communication unit is configured to:
receive a fifth request message sent by the second device, wherein the fifth request message is configured to request authentication, and the fifth request message carries a first identifier of the second device; and
send a seventh response message to the second device, wherein the seventh response message is configured to indicate successful authentication of the second device, the seventh response message carries identification information, and the identification information is related to at least one of: a second identifier of the second device, the first identifier of the second device, or an identifier of the core network side device.

95. The core network side device of claim 92 or 94, wherein the third communication unit is configured to receive a key request message from the target service device, wherein the key request message carries identification information; and
the third communication unit is further configured to perform at least one of:
sending a second response message to the first device, wherein the second response message is in response to the key request message, the second response message carries the first key, the first key is used for the communication between the first device and the second device, and the first device is configured to transmit the data between the second device and the target service device; or
sending a ninth response message to the target service device, wherein the ninth response message is in response to the key request message, the ninth response message carries the first key, and the first key is used for the communication between the second device and the target service device.

96. The core network side device of claim 95, wherein the second response message further carries security capability information of the second device, wherein the security capability information is configured to indicate one or more security algorithms supported by the second device, or the security capability information is configured to indicate a target security algorithm specified by the second device; and/or,
the ninth response message further carries the security capability information of the second device.

97. The core network side device of claim 90, wherein the third communication unit is configured to receive an eighth request message sent by the target service device, wherein
the eighth request message is configured to request authentication, the eighth request message carries a security credential and a second identifier of the second device, the security credential comprises at least one of: the first shared key, relevant information of the first shared key, or the first intermediate key, and the first intermediate key is obtained based on the first shared key.

98. The core network side device of claim 97, wherein the third communication unit is configured to perform at least one of:
sending a tenth response message to the target service device, wherein the tenth response message is configured to indicate successful authentication of the second device, the tenth response message carries identification information and the first key, the identification information is related to at least one of: the second identifier of the second device, a first identifier of the second device, an identifier of the first device, or an identifier of the core network side device, the first key is used for the communication between the second device and the target service device, and/or the first key is used for the communication between the first device and the second device, and the first device is configured to transmit the data between the second device and the target service device; or
sending a fourth response message to the first device, wherein the fourth response message is configured to indicate the successful authentication of the second device, the fourth response message carries the identification information and the first key, the first key is used for the communication between the first device and the second device, and the first device is configured to transmit the data between the second device and the target service device.

99. The core network side device of claim 95 or 98, wherein the third processing unit is configured to calculate the first key based on the first shared key, an identifier of the target service device and a third authentication parameter, wherein
the third authentication parameter comprises at least one of: the second shared key, the second random number, the third random number, the second identifier of the second device, an identifier of the core network side device, an identifier of the first device, or the identification information.

100. The core network side device of any one of claims 90 to 99, wherein the second random number is shared between the second device and the core network side device and/or the target service device; and/or, the second shared key is shared between the second device and the first device; and/or, the third random number is configured, or the third random number is selected by the core network side device, or the third random number is shared between the second device and the core network side device and/or the target service device.

101. The core network side device of any one of claims 88 to 100, wherein the first device comprises at least one of: a first terminal device or a first access network device;
the second device is one of: an Ambient power-enabled Internet of Things (A-IoT) device or a zero-power device; and
the core network side device comprises at least one of: a Bootstrapping Server Function (BSF), an A-IoT network element, a Home Subscriber System (HSS), a Home Location Register (HLR), a Key Management Server (KMS), or an Authentication Server Function (AUSF).

102. A target service device, comprising:
a fourth communication unit, configured to receive a first key sent by a core network side device, wherein the first key is used for communication between the target service device and a second device.

103. The target service device of claim 102, wherein the fourth communication unit is configured to perform one of:
receiving, through a first device, a third request message sent by the second device, wherein the third request message is configured to request communication, the third request message carries identification information, and the identification information is related to at least one of: a second identifier of the second device, a first identifier of the second device, an identifier of the first device, or an identifier of the core network side device; or
receiving a sixth request message sent by the second device, wherein the sixth request message is configured to request communication, and the sixth request message carries the identification information.

104. The target service device of claim 103, wherein the fourth communication unit is configured to:
send a key request message to the core network side device, wherein the key request message carries the identification information;
receive a ninth response message from the core network side device, wherein the ninth response message is in response to the key request message, and the ninth response message carries the first key; and
send a sixth response message to the second device, wherein the sixth response message is configured to indicate that the target service device obtains the first key.

105. The target service device of claim 102, wherein the fourth communication unit is configured to perform one of:
receiving a fourth request message sent by a first device, wherein the fourth request message is configured to request authentication, and the fourth request message carries a first identifier of the second device and/or a second identifier of the second device; or
receiving a seventh request message sent by the second device, wherein the seventh request message is configured to request authentication, and the seventh request message carries the first identifier of the second device.

106. The target service device of claim 105, wherein the fourth communication unit is configured to send an eighth request message to the core network side device, wherein
the eighth request message is configured to request authentication, the eighth request message carries a security credential and the second identifier of the second device, the security credential comprises at least one of: a first shared key, relevant information of the first shared key, or a first intermediate key, the first shared key is shared between the second device and the target service device, and the first intermediate key is obtained based on the first shared key.

107. The target service device of claim 106, wherein the fourth communication unit is configured to receive a tenth response message from the core network side device, wherein
the tenth response message is configured to indicate successful authentication of the second device, the tenth response message carries identification information and the first key, the identification information is related to at least one of: the second identifier of the second device, the first identifier of the second device, an identifier of the first device, or an identifier of the core network side device, the first key is used for the communication between the second device and the target service device, and/or the first key is used for communication between the first device and the second device, and the first device is configured to transmit data between the second device and the target service device.

108. The target service device of claim 107, wherein the fourth communication unit is configured to send an eighth response message to the second device, wherein
the eighth response message is configured to indicate the successful authentication of the second device, and the eighth response message comprises the identification information.

109. The target service device of any one of claims 102 to 108, wherein the fourth communication unit is configured to perform one of:
receiving security capability information from the second device, wherein the security capability information is configured to indicate one or more security algorithms supported by the second device, or the security capability information is configured to indicate a target security algorithm specified by the second device; or
receiving the security capability information from the core network side device.

110. The target service device of claim 109, wherein the fourth communication unit is configured to send security algorithm indication information to the second device, wherein the security algorithm indication information is configured to indicate the target security algorithm.

111. A first device, comprising:
a processor; and
a memory that communicates with the processor, wherein
the memory is configured to store instructions that, when executed by the processor, cause the first device to perform:
sending first information from a core network side device to a second device, wherein the first information comprises a first message authentication code, the first message authentication code is related to a first shared key, the first shared key is shared between the second device and the core network side device and/or a target service device, and the first message authentication code is used by the second device to authenticate the core network side device; and
receiving a first key from the core network side device, wherein the first key is used for communication between the first device and the second device, and the first device is configured to transmit data between the second device and the target service device.

112. The first device of claim 111, wherein the instructions further cause the first device to perform:
sending second information from the second device to the core network side device, wherein the second information comprises a first response, and the first response is used by the core network side device to authenticate the second device.

113. The first device of claim 112, wherein the instructions further cause the first device to perform:
receiving a first request message from the second device, wherein the first request message is configured to request authentication, and the first request message carries a first identifier of the second device.

114. The first device of claim 113, wherein the instructions further cause the first device to perform:
sending a second request message to the core network side device, wherein the second request message is configured to request authentication, and the second request message carries the first identifier of the second device and/or a second identifier of the second device.

115. The first device of claim 114, wherein the instructions further cause the first device to perform:
receiving a first response message from the core network side device, wherein the first response message is configured to indicate successful authentication of the second device, the first response message carries identification information, and the identification information is related to at least one of: the second identifier of the second device, the first identifier of the second device, an identifier of the first device, or an identifier of the core network side device.

116. The first device of claim 115, wherein the instructions further cause the first device to perform:
forwarding a third request message sent by the second device to the target service device, wherein the third request message is configured to request communication, and the third request message carries the identification information;
receiving a second response message from the core network side device, wherein the second response message carries the first key; and
sending a third response message to the second device, wherein the third response message is configured to indicate that the target service device obtains the first key.

117. The first device of claim 114, wherein the instructions further cause the first device to perform:
sending a fourth request message to the target service device, wherein the fourth request message is configured to request authentication, and the fourth request message carries the first identifier of the second device and/or the second identifier of the second device.

118. The first device of claim 117, wherein the instructions further cause the first device to perform:
receiving a fourth response message from the core network side device, wherein the fourth response message is configured to indicate successful authentication of the second device, the fourth response message carries identification information and the first key, and the identification information is related to at least one of: the second identifier of the second device, the first identifier of the second device, an identifier of the first device, or an identifier of the core network side device.

119. The first device of claim 115 or 118, wherein the instructions further cause the first device to perform:
sending a fifth response message to the second device, wherein the fifth response message is configured to indicate the successful authentication of the second device, and the fifth response message carries the identification information.

120. The first device of any one of claims 111 to 119, wherein the instructions further cause the first device to perform:
receiving security capability information from the second device, wherein the security capability information is configured to indicate one or more security algorithms supported by the second device, or the security capability information is configured to indicate a target security algorithm specified by the second device.

121. The first device of claim 120, wherein the instructions further cause the first device to perform:
sending security algorithm indication information to the second device, wherein the security algorithm indication information is configured to indicate the target security algorithm.

122. A second device, comprising:
a processor; and
a memory that communicates with the processor, wherein
the memory is configured to store instructions that, when executed by the processor, cause the second device to perform:
receiving first information from a core network side device, wherein the first information comprises a first message authentication code, the first message authentication code is related to a first shared key, the first shared key is shared between the second device and the core network side device and/or a target service device;
calculating a second message authentication code based on the first shared key; and
in case that the second message authentication code is the same as the first message authentication code, calculating a first key based on the first shared key and an identifier of the target service device, wherein the first key is used for communication between the second device and the target service device and/or a first device.

123. The second device of claim 122, wherein the instructions further cause the second device to perform:
calculating a first response based on the first shared key, wherein the first response is used by the core network side device to authenticate the second device; and
sending second information to the core network side device, wherein the second information comprises the first response.

124. The second device of claim 122, wherein the first information further comprises a first random number, and the instructions further cause the second device to perform:
calculating the second message authentication code based on the first shared key, the first random number and a first authentication parameter in a first calculation manner, wherein the first authentication parameter comprises at least one of: a second shared key, a second random number, or a third random number;
calculating a first intermediate key based on the first shared key, and calculating the second message authentication code based on the first intermediate key, the first random number and the first authentication parameter in the first calculation manner.

125. The second device of claim 124, wherein the instructions further cause the second device to perform one of:
calculating the first response based on the first shared key, the first random number and a second authentication parameter in a second calculation manner, wherein the second authentication parameter comprises at least one of: the second shared key, the second random number, or the third random number, the first calculation manner is different from the second calculation manner, and/or the first authentication parameter is at least partially different from the second authentication parameter; or
calculating the first intermediate key based on the first shared key, and calculating the first response based on the first intermediate key, the first random number and the second authentication parameter in the second calculation manner.

126. The second device of any one of claims 122 to 125, wherein the instructions further cause the second device to perform:
calculating the first key based on the first shared key, the identifier of the target service device and a third authentication parameter, wherein the third authentication parameter comprises at least one of: a second shared key, a second random number, a third random number, a second identifier of the second device, an identifier of the core network side device, an identifier of the first device, or identification information.

127. The second device of claim 126, wherein the instructions further cause the second device to perform:
sending a first request message to the first device, wherein the first request message is configured to request authentication, and the first request message carries a first identifier of the second device.

128. The second device of claim 127, wherein the instructions further cause the second device to perform:
receiving the first information from the core network side device through the first device; and/or,
sending the second information to the core network side device through the first device.

129. The second device of claim 127 or 128, wherein the instructions further cause the second device to perform:
receiving a fifth response message from the first device, wherein the fifth response message is configured to indicate successful authentication of the second device, the fifth response message carries the identification information, and the identification information is related to at least one of: the second identifier of the second device, the first identifier of the second device, the identifier of the first device, or the identifier of the core network side device.

130. The second device of claim 129, wherein the instructions further cause the second device to perform:
sending a third request message to the target service device through the first device, wherein the third request message is configured to request communication, and the third request message carries the identification information.

131. The second device of claim 130, wherein the instructions further cause the second device to perform at least one of:
receiving a third response message from the first device, wherein the third response message is configured to indicate that the target service device obtains the first key; or
receiving a sixth response message from the target service device, wherein the sixth response message is configured to indicate that the target service device obtains the first key.

132. The second device of any one of claims 127 to 131, wherein the instructions further cause the second device to perform:
sending security capability information to the first device, wherein the security capability information is configured to indicate one or more security algorithms supported by the second device, or the security capability information is configured to indicate a target security algorithm specified by the second device.

133. The second device of claim 132, wherein the instructions further cause the second device to perform:
receiving security algorithm indication information from the first device, wherein the security algorithm indication information is configured to indicate the target security algorithm.

134. The second device of claim 126, wherein the instructions further cause the second device to perform:
sending a fifth request message to the core network side device, wherein the fifth request message is configured to request authentication, and the fifth request message carries a first identifier of the second device; and
receiving a seventh response message from the core network side device, wherein the seventh response message is configured to indicate successful authentication of the second device, the seventh response message carries the identification information, and the identification information is related to at least one of: the second identifier of the second device, a first identifier of the second device, or the identifier of the core network side device.

135. The second device of claim 134, wherein the instructions further cause the second device to perform:
sending a sixth request message to the target service device, wherein the sixth request message is configured to request communication, and the sixth request message carries the identification information; and
receiving a sixth response message from the target service device, wherein the sixth response message is configured to indicate that the target service device obtains the first key.

136. The second device of claim 126, wherein the instructions further cause the second device to perform:
sending a seventh request message to the target service device, wherein the seventh request message is configured to request authentication, and the seventh request message carries a first identifier of the second device; and
receiving an eighth response message from the target service device, wherein the eighth response message is configured to indicate successful authentication of the second device, the eighth response message comprises the identification information, and the identification information is related to at least one of: the second identifier of the second device, a first identifier of the second device, or the identifier of the core network side device.

137. The second device of any one of claims 134 to 136, wherein the instructions further cause the second device to perform one of:
reporting security capability information to the target service device, wherein the security capability information is configured to indicate one or more security algorithms supported by the second device, or the security capability information is configured to indicate a target security algorithm specified by the second device; or
reporting the security capability information to the core network side device.

138. The second device of claim 137, wherein the instructions further cause the second device to perform:
receiving security algorithm indication information from the target service device, wherein the security algorithm indication information is configured to indicate the target security algorithm.

139. The second device of any one of claims 124 to 138, wherein the second random number is shared between the second device and the core network side device and/or the target service device; and/or, the second shared key is shared between the second device and the first device; and/or, the third random number is configured, or the third random number is shared between the second device and the core network side device and/or the target service device.

140. A core network side device, comprising:
a processor; and
a memory that communicates with the processor, wherein
the memory is configured to store instructions that, when executed by the processor, cause the core network side device to perform:
sending first information to a second device, wherein the first information comprises a first message authentication code, the first message authentication code is related to a first shared key, the first shared key is shared between the second device and the core network side device and/or a target service device, and the first message authentication code is used by the second device to authenticate the core network device; and
sending a first key to the target service device and/or a first device, wherein the first key is used for communication between the second device and the target service device or the first device, and the first device is configured to transmit data between the second device and the target service device.

141. The core network side device of claim 140, wherein the instructions further cause the core network side device to perform:
in case that a first response is the same as a second response, determining that authentication of the second device is successful; and
receiving second information from the second device, wherein the second information comprises the first response.

142. The core network side device of claim 141, wherein the first information further comprises a first random number, and the instructions further cause the core network side device to perform at least one of:
calculating the first message authentication code based on the first shared key, the first random number and a first authentication parameter in a first calculation manner, wherein the first authentication parameter comprises at least one of: a second shared key, a second random number, or a third random number;
calculating the first message authentication code based on a first intermediate key, the first random number and the first authentication parameter in the first calculation manner, wherein the first intermediate key is related to the first shared key;
calculating the second response based on the first shared key, the first random number and a second authentication parameter in a second calculation manner, wherein the second authentication parameter comprises at least one of: the second shared key, the second random number, or the third random number, the first calculation manner is different from the second calculation manner, and/or the first authentication parameter is at least partially different from the second authentication parameter; or
calculating the second response based on the first intermediate key, the first random number and the second authentication parameter in the second calculation manner.

143. The core network side device of claim 142, wherein the instructions further cause the core network side device to perform:
sending the first information to the second device through the first device; and/or,
receiving the second information from the second device through the first device.

144. The core network side device of claim 143, wherein the instructions further cause the core network side device to perform:
receiving a second request message sent by the first device, wherein the second request message is configured to request authentication, and the second request message carries a first identifier of the second device and/or a second identifier of the second device.

145. The core network side device of claim 144, wherein the instructions further cause the core network side device to perform:
sending a first response message to the first device, wherein the first response message is configured to indicate successful authentication of the second device, the first response message carries identification information, and the identification information is related to at least one of: the second identifier of the second device, the first identifier of the second device, an identifier of the first device, or an identifier of the core network side device.

146. The core network side device of claim 143, wherein the instructions further cause the core network side device to perform:
receiving a fifth request message sent by the second device, wherein the fifth request message is configured to request authentication, and the fifth request message carries a first identifier of the second device; and
sending a seventh response message to the second device, wherein the seventh response message is configured to indicate successful authentication of the second device, the seventh response message carries identification information, and the identification information is related to at least one of: a second identifier of the second device, the first identifier of the second device, or an identifier of the core network side device.

147. The core network side device of claim 144 or 146, wherein the instructions further cause the core network side device to perform: receiving a key request message from the target service device, wherein the key request message carries identification information, and
the instructions further cause the core network side device to perform at least one of:
sending a second response message to the first device, wherein the second response message is in response to the key request message, the second response message carries the first key, the first key is used for the communication between the first device and the second device, and the first device is configured to transmit the data between the second device and the target service device; or
sending a ninth response message to the target service device, wherein the ninth response message is in response to the key request message, the ninth response message carries the first key, and the first key is used for the communication between the second device and the target service device.

148. The core network side device of claim 147, wherein the second response message further carries security capability information of the second device, wherein the security capability information is configured to indicate one or more security algorithms supported by the second device, or the security capability information is configured to indicate a target security algorithm specified by the second device; and/or,
the ninth response message further carries the security capability information of the second device.

149. The core network side device of claim 142, wherein the instructions further cause the core network side device to perform:
receiving an eighth request message sent by the target service device, wherein the eighth request message is configured to request authentication, the eighth request message carries a security credential and a second identifier of the second device, the security credential comprises at least one of: the first shared key, relevant information of the first shared key, or the first intermediate key, and the first intermediate key is obtained based on the first shared key.

150. The core network side device of claim 149, wherein the instructions further cause the core network side device to perform at least one of:
sending a tenth response message to the target service device, wherein the tenth response message is configured to indicate successful authentication of the second device, the tenth response message carries identification information and the first key, the identification information is related to at least one of: the second identifier of the second device, a first identifier of the second device, an identifier of the first device, or an identifier of the core network side device, the first key is used for the communication between the second device and the target service device, and/or the first key is used for the communication between the first device and the second device, and the first device is configured to transmit the data between the second device and the target service device; or
sending a fourth response message to the first device, wherein the fourth response message is configured to indicate the successful authentication of the second device, the fourth response message carries the identification information and the first key, the first key is used for the communication between the first device and the second device, and the first device is configured to transmit the data between the second device and the target service device.

151. The core network side device of claim 147 or 150, wherein the instructions further cause the core network side device to perform:
calculating the first key based on the first shared key, an identifier of the target service device and a third authentication parameter, wherein the third authentication parameter comprises at least one of: the second shared key, the second random number, the third random number, the second identifier of the second device, an identifier of the core network side device, an identifier of the first device, or the identification information.

152. A target service device, comprising:
a processor; and
a memory that communicates with the processor, wherein
the memory is configured to store instructions that, when executed by the processor, cause the target service device to perform:
receiving a first key sent by a core network side device, wherein the first key is used for communication between the target service device and a second device.

153. The target service device of claim 152, wherein the instructions further cause the target service device to perform one of:
receiving, through a first device, a third request message sent by the second device, wherein the third request message is configured to request communication, the third request message carries identification information, and the identification information is related to at least one of: a second identifier of the second device, a first identifier of the second device, an identifier of the first device, or an identifier of the core network side device; or
receiving a sixth request message sent by the second device, wherein the sixth request message is configured to request communication, and the sixth request message carries the identification information.

154. The target service device of claim 153, wherein the instructions further cause the target service device to perform:
sending a key request message to the core network side device, wherein the key request message carries the identification information;
receiving a ninth response message from the core network side device, wherein the ninth response message is in response to the key request message, and the ninth response message carries the first key; and
sending a sixth response message to the second device, wherein the sixth response message is configured to indicate that the target service device obtains the first key.

155. The target service device of claim 152, wherein the instructions further cause the target service device to perform one of:
receiving a fourth request message sent by a first device, wherein the fourth request message is configured to request authentication, and the fourth request message carries a first identifier of the second device and/or a second identifier of the second device; or
receiving a seventh request message sent by the second device, wherein the seventh request message is configured to request authentication, and the seventh request message carries the first identifier of the second device.

156. The target service device of claim 155, wherein the instructions further cause the target service device to perform:
sending an eighth request message to the core network side device, wherein the eighth request message is configured to request authentication, the eighth request message carries a security credential and the second identifier of the second device, the security credential comprises at least one of: a first shared key, relevant information of the first shared key, or a first intermediate key, the first shared key is shared between the second device and the target service device, and the first intermediate key is obtained based on the first shared key.

157. The target service device of claim 156, wherein the instructions further cause the target service device to perform:
receiving a tenth response message from the core network side device, wherein the tenth response message is configured to indicate successful authentication of the second device, the tenth response message carries identification information and the first key, the identification information is related to at least one of: the second identifier of the second device, the first identifier of the second device, an identifier of the first device, or an identifier of the core network side device, the first key is used for the communication between the second device and the target service device, and/or the first key is used for communication between the first device and the second device, and the first device is configured to transmit data between the second device and the target service device.

158. The target service device of claim 157, wherein the instructions further cause the target service device to perform:
sending an eighth response message to the second device, wherein the eighth response message is configured to indicate the successful authentication of the second device, and the eighth response message comprises the identification information.

159. The target service device of any one of claims 152 to 158, wherein the instructions further cause the target service device to perform one of:
receiving security capability information from the second device, wherein the security capability information is configured to indicate one or more security algorithms supported by the second device, or the security capability information is configured to indicate a target security algorithm specified by the second device; or
receiving the security capability information from the core network side device.

160. The target service device of claim 159, wherein the instructions further cause the target service device to perform:
sending security algorithm indication information to the second device, wherein the security algorithm indication information is configured to indicate the target security algorithm.

161. A chip, comprising: a processor, configured to call and run a computer program from a memory, to enable a device mounted with the chip to perform the method of any one of claims 1 to 12, or the method of any one of claims 13 to 32, or the method of any one of claims 33 to 46, or the method of any one of claims 47 to 55.

162. A computer-readable storage medium, configured to store a computer program that, when executed by a device, causes the device to perform the method of any one of claims 1 to 12, or the method of any one of claims 13 to 32, or the method of any one of claims 33 to 46, or the method of any one of claims 47 to 55.

163. A computer program product, comprising computer program instructions that, when executed, cause a computer to perform the method of any one of claims 1 to 12, or the method of any one of claims 13 to 32, or the method of any one of claims 33 to 46, or the method of any one of claims 47 to 55.

164. A computer program for causing a computer to perform the method of any one of claims 1 to 12, or the method of any one of claims 13 to 32, or the method of any one of claims 33 to 46, or the method of any one of claims 47 to 55.
